(19) Europäisches Patentamt
European Patent Office
Office européen des brevets

(11) EP 4 106 068 B1

(12) FASCICULE DE BREVET EUROPEEN

(45) Date de publication et mention de la délivrance du brevet:
**24.04.2024 Bulletin 2024/17**

(21) Numéro de dépôt: **22177436.7**

(22) Date de dépôt: **07.06.2022**

(51) Classification Internationale des Brevets (IPC):
***H01M 10/0525*** *(2010.01)* ***H01M 10/0565*** *(2010.01)*

(52) Classification Coopérative des Brevets (CPC):
**H01M 10/0565; H01M 10/0525;** H01M 2300/0082; Y02E 60/10

(54) **PROCEDE DE PREPARATION D'UN ELECTROLYTE SOLIDE A BASE DE POLYCARBONATES ET D'UNE ELECTRODE COMPOSITE COMPORTANT UN TEL ELECTROLYTE SOLIDE**

VERFAHREN ZUR HERSTELLUNG EINES FESTEN ELEKTROLYTEN AUF DER BASIS VON POLYCARBONATEN UND EINER VERBUNDELEKTRODE AUS VERBUNDMATERIAL, DIE EINEN SOLCHEN FESTEN ELEKTROLYTEN UMFASST

METHOD FOR PREPARING A SOLID ELECTROLYTE MADE OF POLYCARBONATES AND A COMPOSITE ELECTRODE COMPRISING SUCH A SOLID ELECTROLYTE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2021 FR 2106117**

(43) Date de publication de la demande:
**21.12.2022 Bulletin 2022/51**

(73) Titulaire: **Commissariat à l'Energie Atomique et aux Energies Alternatives**
**75015 Paris (FR)**

(72) Inventeurs:
- **NGUYEN, Huu-Dat**
**38054 Grenoble cedex 09 (FR)**
- **PICARD, Lionel**
**38054 Grenoble cedex 09 (FR)**

(74) Mandataire: **Cabinet Nony**
**11 rue Saint-Georges**
**75009 Paris (FR)**

(56) Documents cités:
**EP-A1- 3 761 398 WO-A1-2018/158545**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### Domaine technique

La présente invention se rapporte à une nouvelle méthode de préparation d'électrolytes solides pour des dispositifs électrochimiques, en particulier pour des batteries rechargeables, par exemple des batteries au lithium. La préparation des électrolytes solides à base de polycarbonates aliphatiques selon l'invention met en oeuvre la synthèse de polycarbonates, en particulier de poly(triméthylène carbonate) (PTMC) ou de leurs copolymères avec l'$\varepsilon$-caprolactone (PTMC-PCL), par (co)polymérisation par ouverture de cycle (ROP), catalysée par un super acide de Brønsted, par exemple par l'acide bis(trifluorométhanesulfonyl)imide (HTFSI) ou l'acide trifluorométhanesulfonique (TfOH), suivie de la transformation, directement au niveau du milieu réactionnel de synthèse, du super acide de Brønsted en sel de métal alcalin ou alcalino-terreux, par neutralisation avec un hydrure métallique, en particulier avec l'hydrure de lithium.

Le procédé de l'invention peut être plus particulièrement mis en oeuvre pour former une membrane d'électrolyte solide, notamment de type électrolyte polymérique solide (SPE) ou électrolyte solide hybride (HSE), ou encore une électrode composite comportant un électrolyte solide.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative et, inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative. D'autres paramètres interviennent également dans le choix de l'électrolyte mis en oeuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

Les batteries au lithium, mettant en oeuvre des électrolytes à l'état solide (dits encore « SSE » pour l'acronyme anglo-saxon « Solid-State Electrolyte ») sont considérées comme la prochaine génération des dispositifs de stockage d'énergie, permettant d'atteindre des densités d'énergie plus élevées et une sécurité accrue du fait de l'absence de solvant. Les SSEs peuvent être classés en trois catégories : les électrolytes solides inorganiques (dits encore « ISEs » pour « Inorganic Solid Electrolytes »), les électrolytes solides polymériques (dits encore « SPEs » pour « Solid Polymer Electrolytes ») et les électrolytes solides hybrides (dits encore « HSEs » pour « Hybrid Solid Electrolytes »). Une attention particulière est portée aux SPEs et aux HSEs en raison de la flexibilité élevée de ces électrolytes, qui autorise leur mise en oeuvre pour l'élaboration de batteries d'épaisseur réduite et présentant une plus grande flexibilité.

Les SPEs et HSEs les plus répandus, notamment pour des dispositifs électrochimiques au lithium, sont à base de polyéthers, et plus particulièrement de poly(oxyde d'éthylène) (POE) et leurs dérivés, en raison de leur faible température de transition vitreuse (Tg), de l'ordre de -60°C, comparativement à d'autres polymères, et de leur aptitude à complexer les cations $Li^+$. Toutefois, ces électrolytes présentent des performances limitées en matière de nombre de transport des ions (t+) et de conductivité ionique liées au mécanisme de complexation des ions. Ainsi, pour un électrolyte solide polymérique à base de POE, par exemple, le nombre de transport ionique t+ est généralement de l'ordre de 0,1 à 0,3. Par ailleurs, le POE est largement cristallin (la cristallinité du POE pur est de l'ordre de 75-80 % à température ambiante), ce qui conduit à une perte de conductivité ionique de l'électrolyte solide à base de POE en dessous de sa température de fusion (environ 60-65°C). La plupart des SPE à base de POE sont également associés à des diagrammes de phase complexes, avec plusieurs phases présentes dans de larges intervalles de température, ce qui rend le comportement de conductivité imprévisible. La stabilité mécanique du POE est également insuffisante aux températures élevées (supérieures à 60 °C) où il conduit bien les ions. Qui plus est, le POE présente une faible fenêtre de stabilité électrochimique (< 3,9 V vs. $Li/Li^+$), ce qui rend ce type de SPEs adapté uniquement pour leur mise en oeuvre avec des cathodes à bas potentiel, comme par exemple de type $LiFePO_4$ (LFP).

De fait, de nombreux polymères alternatifs ont été développés ces dernières années, comme par exemple des polycarbonates, polyesters, poly(arylène éther sulfone)s, polynitriles, polyalcools et polyamines, etc. Parmi eux, les

polycarbonates aliphatiques, en particulier le poly(triméthylène carbonate) (PTMC) et ses copolymères, sont apparus comme des matériaux hôtes alternatifs au POE, particulièrement intéressants pour former des électrolytes polymériques solides, en raison de leur structure fortement amorphe, de la flexibilité de leurs segments de chaîne, de leur constante diélectrique élevée, de leur faible toxicité et de leurs bonnes propriétés mécaniques. Il a ainsi été montré que le PTMC, et ses copolymères avec 1a ε-caprolactone (CL), permettent d'obtenir des performances améliorées, comparativement au POE, en termes de conductivité ionique du matériau électrolyte solide à température ambiante, de sa large fenêtre de stabilité électrochimique (jusqu'à 5,0 V vs. $Li/Li^+$), du nombre de transport ionique (t+>0,5) ou encore de sa stabilité thermique, ce qui rend ces matériaux polymériques particulièrement prometteurs pour former la nouvelle génération de SPEs.

Actuellement, la plupart des polycarbonates aliphatiques, proposés pour des applications comme électrolytes polymériques solides, par exemple dans des batteries rechargeables au lithium, sont obtenus par deux voies de synthèses différentes, d'une part, par copolymérisation entre le $CO_2$ et des époxydes et, d'autre part, par polymérisation par ouverture de cycle de carbonates cycliques catalysée par l'octanoate stanneux ($Sn(Oct)_2$). Pour ce qui est de la première voie de synthèse, Tominaga *et al.* [1] décrit ainsi pour la première fois la synthèse de poly(éthylène carbonate) (PEC) *via* la copolymérisation de $CO_2$ et de monomères époxy mettant en oeuvre du glutarate de zinc comme catalyseur. Quatre types de PEC présentant des groupes latéraux phényle, n-butyle, t-butyle ou méthoxyéthyle sont synthétisés et mis en oeuvre pour former des membranes d'électrolyte polymérique solide comprenant 10% molaire de bis(trifluoroéthylsulfonylimide) de lithium (LiTFSI). Les essais de conductivité montrent que l'électrolyte à base du PEC présentant des groupes latéraux méthoxyéthyle présente la conductivité la plus élevée, de l'ordre de $10^{-6}$ $S.cm^{-1}$ à température ambiante.

Malheureusement, cette voie de synthèse ne permet pas un contrôle satisfaisant des polymères formés en raison des différentes réactions secondaires pouvant intervenir pendant leur synthèse, telle que la formation de liaisons éther due à l'ouverture de cycle consécutive des époxydes ou encore la production de carbonates cycliques par une réaction compétitive dite de « transfert de chaine » (ou « backbiting » en terminologie anglo-saxonne) [2]. Ainsi, cette voie de synthèse a trouvé davantage d'intérêt pour des applications dans le domaine de la chimie verte et des biomatériaux que dans celui des batteries rechargeables pour lesquelles la fenêtre de stabilité électrochimique des électrolytes polymériques est très sensible aux défauts de la structure chimique du polymère. D'ailleurs, dans la publication [3], Kimura *et al.* rapportent que les électrolytes solides hybrides à base de poly(éthylène carbonate), LiTFSI et d'un liquide ionique à base de pyrrolidinium, permettent d'atteindre une stabilité anodique uniquement jusqu'à 4,3 V *versus* $Li^+/Li$. Par ailleurs, les balayages continus cathodiques permettent d'identifier peu de pics caractéristiques de l'insertion/désinsertion des ions $Li^+$ et montrent une faible stabilité en réduction vis-à-vis d'une anode en lithium. Concernant la deuxième voie de synthèse, Brandell *et al.* ([4]) décrivent la synthèse de poly(triméthylène carbonate) de haut poids moléculaire (368 000 $g.mol^{-1}$) par polymérisation en masse, par ouverture de cycle catalysée par de l'octanoate stanneux ($Sn(Oct)_2$), pour former des électrolytes polymériques solides dans des batteries au lithium. Le polymère obtenu est mélangé avec du LiTFSI en solution et mis en forme pour obtenir des films SPE flexibles. Les systèmes les plus conducteurs sont atteints pour des ratios molaires des groupes carbonyles des unités monomères par rapport au lithium $[CO]/[Li^+]$ de 13 et 8, avec une stabilité électrochimique jusqu'à 5,0 V *versus* $Li/Li^+$ plus élevée que celle obtenue avec les POE, mais une conductivité ionique d'environ $10^{-7}$ $S.cm^{-1}$ à 60°C, ce qui est loin d'être satisfaisant pour une application comme SPE. En mettant en oeuvre la même voie de synthèse, Mindemark *et al.* [5] décrivent la synthèse de copolymères aléatoires de triméthylène carbonate (TMC) et d'ε-caprolactone (CL), de masse moléculaire allant de 457 000 à 508 000 $g.mol^{-1}$, pour une application comme SPE. Les membranes électrolytiques, formées à partir de ces copolymères en combinaison avec un sel LiTFSI, présentent une diminution de la température de transition vitreuse Tg et une augmentation de la conductivité ionique avec l'augmentation de la teneur en CL. L'électrolyte, présentant les meilleures performances, est obtenu pour un ratio TMC :CL de 60 :40 et 28 % en poids de LiTFSI et permet d'atteindre une Tg de -26°C avec une conductivité de $1{,}6.10^{-5}$ $S.cm^{-1}$ à 60°C ($7{,}9.10^{-7}$ $S.cm^{-1}$ à 25°C) et une large fenêtre de stabilité électrochimique. L'électrolyte de composition optimisée précitée est testé en demi-cellule $LiFePO_4$ tout solide, et présente une capacité et une efficacité coulombique élevées pour des vitesses de charge allant jusqu'à C/5 inclus. Dans les premiers cycles, l'électrolyte à base dudit copolymère montre une performance améliorée comparativement aux électrolytes préparés à partir de l'homopolymère PTMC, indiquant ainsi un meilleur contact interfacial pour l'électrolyte intégrant du CL comme comonomère.

Toutefois, la voie de synthèse par polymérisation par ouverture de cycle catalysée par du $Sn(Oct)_2$, comme proposé par Brandell *et al.* et Mindemark *et al.,* requiert des temps de réaction longs (au moins 72 heures) pour des températures élevées (≥130 °C), ce qui ne permet pas d'envisager leur transposition à l'échelle industrielle, en raison d'une consommation trop élevée d'énergie. Qui plus est, les conditions sévères de synthèse à hautes températures ne permettent pas un contrôle de la polymérisation et de la polydispersité des polycarbonates obtenus. Elles sont également susceptibles d'induire des défauts dans la structure chimique des polymères obtenus. Enfin, le catalyseur mis en oeuvre, $Sn(Oct)_2$, ne peut être totalement éliminé du produit final du fait de sa solubilité similaire à celle du polymère synthétisé dans de nombreux solvants organiques. Pour des nombreuses applications de ces polymères, par exemple comme

biomatériaux, la présence résiduelle du catalyseur au sein du matériau polymérique formé ne pose pas de problème. Toutefois, pour des applications liées à des processus électrochimiques, comme dans les batteries rechargeables au lithium, la présence de catalyseur, et en particulier de cations métalliques tels que $Sn^{2+}$, $Zn^{2+}$, etc., est susceptible d'avoir des effets néfastes sur les performances et la durabilité des batteries, puisque ces cations peuvent également être réduits/oxydés au cours des processus de charge/décharge.

Par conséquent, des études ont été menées en vue de développer des voies de synthèse alternatives pour obtenir des polycarbonates aliphatiques appropriés pour leur mise en oeuvre pour des batteries rechargeables. Par exemple, Mecerreyes *et al.* [6] proposent la synthèse de polycarbonates aliphatiques, présentant des poids moléculaires compris entre 8 000 et 43 000 g.mol$^{-1}$, par polycondensation du carbonate de diméthyle et de diols aliphatiques, catalysée par la 4-diméthylaminopyridine (DMAP). L'ensemble des polycarbonates aliphatiques obtenus sont semi-cristallins avec des températures de fusion comprises entre 45 et 63 °C et des températures de transition vitreuse d'environ -40°C. Ces polycarbonates ont été testés, en combinaison avec le sel LiTFSI, pour leur efficacité comme matrice hôte pour former des SPEs. La conductivité ionique la plus élevée de 1.10$^{-4}$ S.cm$^{-1}$ à température ambiante est atteinte pour un poly(dodécaméthylène carbonate) mis en oeuvre en combinaison avec 80 % massique de LiTFSI. Toutefois, ces polycarbonates aliphatiques présentent une fenêtre de stabilité électrochimique allant jusqu'à 4 V seulement et, par conséquent guère meilleure que celle obtenue avec les POE. Ceci pourrait être lié à la voie de synthèse de ces polycarbonates, conduite à des températures très élevées (180°C) et à pression élevée, et susceptible d'induire davantage de défauts dans la structure chimique des polymères.

Ainsi, malgré les études menées en vue de proposer des voies de synthèses alternatives, la polymérisation par ouverture de cycle catalysée par $Sn(Oct)_2$ demeure, jusqu'à présent, la voie de synthèse privilégiée pour obtenir des polycarbonates aliphatiques destinés à former des électrolytes solides dans des batteries rechargeables, notamment dans des batteries au lithium.

Quelle que soit la voie de synthèse des polycarbonates retenue parmi les méthodes précitées, la formulation des électrolytes nécessite, dans tous les cas, plusieurs étapes de purification et lavage des polycarbonates obtenus pour retirer le catalyseur. De telles étapes consomment malheureusement une grande quantité de solvant(s) organique(s), sont consommatrices d'énergie et coûteuse en termes de temps.

Il demeure ainsi un besoin de disposer d'une nouvelle voie de synthèse des électrolytes solides permettant de s'affranchir des inconvénients précités et d'obtenir, de manière aisée et rapide, des électrolytes solides adaptés à une mise en oeuvre dans des systèmes électrochimiques, en particulier dans des batteries au lithium.

La présente invention vise précisément à répondre à ce besoin.

**Résumé de l'invention**

La présente invention concerne un procédé de préparation d'un électrolyte solide ou d'une électrode composite destiné(e) à un système électrochimique, en particulier à une batterie rechargeable, notamment une batterie au lithium, comprenant au moins les étapes suivantes :

(i) synthèse, dans un milieu solvant, d'au moins un (co)polymère par (co)polymérisation par ouverture de cycle (ROP) d'au moins un carbonate cyclique de cinq à huit chaînons et, éventuellement, d'au moins une lactone de cinq à huit chaînons,
ladite réaction de (co)polymérisation étant catalysée par au moins un super acide de Brønsted apte à former, après neutralisation en étape (ii) du procédé de l'invention, un sel conducteur ionique de métal alcalin ou alcalino-terreux ;
(ii) ajout au milieu réactionnel obtenu à l'issue de l'étape (i) d'une quantité suffisante d'un hydrure de métal alcalin ou alcalino-terreux, en particulier de l'hydrure de lithium (LiH), pour neutraliser la totalité dudit catalyseur et obtenir un sel de métal alcalin ou alcalino-terreux, et pour protéger la ou lesdits fonctions hydroxyles terminales du ou desdits (co)polymères synthétisés ;
(iii) ajout ou non au mélange obtenu à l'issue de l'étape (ii) d'au moins un sel dudit métal alcalin ou alcalino-terreux, en particulier un sel de lithium ; et
(iv) formation d'un électrolyte solide par évaporation du milieu solvant, ou d'une électrode composite incorporant ledit électrolyte solide.

De préférence, le super acide de Brønsted mis en oeuvre en étape (i) du procédé de l'invention peut être choisi parmi l'acide bis(trifluorométhanesulfonyl)imide (HTFSI), l'acide trifluorométhanesulfonique (TfOH), l'acide bis(fluorosulfonyl)imide (HFSI), l'acide fluorosulfurique ($FSO_3H$) et leurs mélanges. Le sel conducteur ionique formé à l'issue de l'étape (ii) du procédé de l'invention peut ainsi être par exemple du LiTFSI, LiTf, LiFSI et/ou $FSO_3Li$.

Comme détaillé dans la suite du texte, d'autres super acides de Brønsted peuvent également être mis en oeuvre pour autant qu'ils conduisent, par neutralisation avec un hydrure de métal alcalin ou alcalino-terreux, à un sel conducteur ionique de métal alcalin ou alcalino-terreux, par exemple un sel de lithium conducteur ionique.

On désignera plus simplement dans la suite du texte, sous l'appellation « polycarbonate aliphatique » ou encore « polycarbonate », un (co)polymère obtenu par (co)polymérisation dans les conditions de synthèse selon l'invention d'au moins un carbonate cyclique de cinq à huit chaînons et, éventuellement, d'au moins une lactone.

De manière avantageuse, le ou lesdits (co)polymères sont des poly(triméthylène carbonate) (notés PTMC dans la suite du texte) ou des copolymères poly(triméthylène carbonate)-poly(ε-caprolactone) (notés PTMC-PCL dans la suite du texte), obtenus par polymérisation par ouverture de cycle du triméthylène carbonate (TMC), éventuellement par copolymérisation avec l'ε-caprolactone (CL).

Les super acides de Brønsted, comme l'acide bis(trifluorométhanesulfonyl)imide (HTFSI), également appelé acide triflimide et désigné également sous l'abréviation « $HNTf_2$ » ; l'acide trifluorométhanesulfonique (HTFSA), également appelé l'acide triflique, et désigné sous l'abréviation « TfOH » ; l'acide bis(fluorosulfonyl)imide, désigné également sous l'abréviation « HFSI », ou encore l'acide fluorosulfurique ($FSO_3H$), désigné sous l'abréviation « $FSO_3H$ », ont déjà été proposés comme organo-catalyseurs dans diverses synthèses organiques, en raison de leur forte acidité, ainsi que de leur bonne compatibilité avec les solvants organiques. Les performances du HFTSI et HFSI proviennent également de la faible nucléophilie et de la propriété de non-coordination du contre-anion $TFSI^-$(également noté $Tf_2N^-$) ou $FSI^-$ ([7], [8]).

Les super acides de Brønsted, en particulier HTFSI et TfOH, ont ainsi été rapportés comme catalyseurs pour 1a polymérisation par ouverture de cycle de 1a ε-caprolactone, de 1a δ-valérolactone, de la 1,5-dioxepan-2-one et de la rac-lactide ([9], [10] et [11]).

Cependant, dans ces publications, les super acides de Brønsted sont utilisés uniquement comme catalyseurs et sont ainsi éliminés après synthèse par des étapes de purification.

Qui plus est, ces travaux, relatifs à la mise en oeuvre des super acides de Brønsted comme catalyseurs pour la polymérisation par ouverture de cycle, portent sur la mise en oeuvre des polymères obtenus pour des applications comme bio-matériaux, par exemple dans les domaines de l'ingénierie tissulaire, de l'administration de médicaments, etc. du fait de la bonne biocompatibilité et biodégradabilité de ces matériaux polymériques.

A la connaissance des inventeurs, il n'a jamais été proposé de tirer profit de cette voie de synthèse pour la préparation de polycarbonates aliphatiques et de leurs co-polymères, pour former des électrolytes solides, en particulier dans des batteries rechargeables au lithium.

De manière avantageuse, le procédé de préparation d'électrolytes solides selon l'invention tire profit de la présence du catalyseur de type super acide de Brønsted, par exemple du HTFSI ou TfOH, dans le milieu réactionnel de synthèse des polycarbonates, pour formuler directement, en transformant ledit catalyseur en sel de métal alcalin ou alcalino-terreux par neutralisation avec un hydrure métallique, en particulier avec l'hydrure de lithium, un mélange permettant d'accéder directement à un électrolyte solide, sans requérir d'étape intermédiaire de purification des polycarbonates.

Ainsi, le procédé de l'invention permet avantageusement de s'affranchir de toute étape de purification des polycarbonate synthétisés et d'élimination du catalyseur, telles que des étapes de précipitation des polymères, de filtration, etc. De fait, le catalyseur est directement transformé, dans le milieu réactionnel de synthèse des polycarbonates aliphatiques, en sel conducteur ionique.

Par ailleurs, de manière avantageuse, les fonctions hydroxyles en bout de chaînes, dites encore « fonctions terminales », des polycarbonates synthétisés selon l'invention sont protégées en générant des fonctions alcoolate de métal alcalin ou alcalino-terreux, en particulier alcoolate de lithium, directement par ajout en excès en étape (ii) de l'hydrure de métal alcalin ou alcalino-terreux, en particulier de l'hydrure de lithium.

Comparativement aux méthodes connues de préparation d'électrolytes solides à base de polycarbonates, le procédé de l'invention, ne comportant pas d'étapes intermédiaires de purification, consomme moins de solvant organique et d'énergie, et permet d'obtenir plus rapidement les électrolytes. Le procédé de l'invention est ainsi avantageusement adapté à une mise en oeuvre à grande échelle dans l'industrie.

Également, le procédé de l'invention permet de conduire à des électrolytes solides présentant de bonnes performances, en particulier en termes de conductivité ionique et de stabilité électrochimique, équivalentes, voire supérieures à celles obtenues avec des électrolytes préparés à partir de polycarbonates obtenus par d'autres voies de synthèse, par exemple telles que décrites précédemment.

De manière avantageuse, la synthèse conduite dans les conditions spécifiques selon l'invention permet d'accéder à des polycarbonates, en particulier à des PTMC et PTMC-PCL, présentant une polydispersité plus faible par rapport à la synthèse mettant en oeuvre le catalyseur $Sn(Oct)_2$.

Avantageusement, le procédé de synthèse selon l'invention permet d'accéder à des polycarbonates de masse et de polydispersité contrôlées.

En particulier, les polycarbonates synthétisés selon l'invention peuvent présenter une masse moléculaire moyenne en nombre, Mn, inférieure ou égale à 200 000 $g.mol^{-1}$, en particulier comprise entre 5 000 et 100 000 $g.mol^{-1}$ et plus particulièrement entre 5 000 et 50 000 $g.mol^{-1}$.

Ils peuvent présenter avantageusement une faible polydispersité (ou indice de polydispersité), en particulier

inférieure ou égale à 2,5, notamment inférieure ou égale à 2,0. Par ailleurs, la synthèse des polycarbonates en étape (i) du procédé de l'invention peut être opérée à température ambiante et s'avère, là encore, particulièrement avantageuse en termes de consommation d'énergie. Également, les polycarbonates peuvent être obtenus avantageusement pour des faibles durées de polymérisation, en particulier pour une durée de polymérisation inférieure à 3 jours, en particulier inférieure ou égale à 72 heures, notamment inférieure ou égale à 48 heures.

De manière avantageuse, la transformation du catalyseur, ayant servi à la synthèse des polycarbonates, directement en sel de métal alcalin ou alcalino-terreux, en particulier en sel de lithium, permet de s'assurer de l'absence de toute trace de catalyseur au niveau de l'électrolyte final, et ainsi de conduire à des électrolytes solides de pureté élevé.

Comme illustré dans les exemples qui suivent, les électrolytes solides obtenus selon l'invention à base de polycarbonates, en particulier de type PTMC ou PTMC-PCL, conduisent à une batterie au lithium présentant d'excellentes performances, en particulier une conductivité ionique élevée, par exemple supérieure ou égale à $10^{-5}$ $S.cm^{-1}$ à 60°C, en particulier supérieure ou égale à $10^{-6}$ $S.cm^{-1}$ pour un PTMC et supérieure ou égale à $10^{-5}$ $S.cm^{-1}$ pour un PTMC-PCL à 60°C ; et un nombre de transport des ions lithium, noté t+, supérieur ou égal à 0,50 à 60°C, en particulier supérieur ou égal à 0,70 pour PTMC et supérieur ou égal à 0,60 pour PTMC-PCL à 60°C.

Les électrolytes solides préparés selon l'invention présentent également une bonne tenue mécanique, une grande stabilité thermique (qui assure la sécurité des dispositifs de stockage d'énergie les comprenant) et une stabilité en potentiel améliorée.

En particulier, ils présentent une large fenêtre de stabilité électrochimique, en particulier jusqu'à 4,50 V *versus* $Li/Li^+$. Ainsi, un électrolyte solide obtenu selon l'invention, à base de polycarbonates, en particulier à base de PTMC ou PTMC-PCL, peut avantageusement être mis en oeuvre dans des batteries de densité énergétique élevée, en combinaison avec des électrodes positives dites à « haut » potentiel, c'est-à-dire fonctionnant à une différence de potentiel supérieure à 4 V *versus* $Li/Li^+$, en particulier supérieure ou égale à 4,2 V *versus* $Li/Li^+$, telles que des batteries $Li^0$ vs. $LiNi_{0.6}Mn_{0.2}Co_{0.2}O_2$, sans impacter sur la stabilité thermique et électrochimique de l'électrolyte.

Un système électrochimique, en particulier une batterie au lithium, comprenant une membrane séparatrice d'électrolyte solide préparé selon l'invention, peut également fonctionner sur une large plage de températures, de préférence entre -20°C et 90°C, en particulier entre -10°C et 80°C.

Comme détaillé dans la suite du texte, le procédé de l'invention peut être plus particulièrement mis oeuvre pour former un électrolyte solide, notamment sous la forme d'un film ou membrane d'électrolyte solide, en particulier de type électrolyte polymérique solide (SPE) ou électrolyte solide hybride (HSE) ; ou encore pour former un électrolyte solide au niveau d'une électrode composite.

Par « film ou membrane d'électrolyte solide », on entend un film ou membrane d'électrolyte excluant la présence d'un composant sous forme liquide, et pouvant faire office à la fois de séparateur et de conducteur ionique dans un système électrochimique.

Le procédé de l'invention peut ainsi comprendre, en fonction de la finalité recherchée pour l'électrolyte solide, une ou plusieurs étapes intermédiaires, préalable(s) à l'évaporation du milieu solvant, d'ajout, au mélange obtenu à l'issue de l'étape (ii) ou (iii) selon l'invention, d'un ou plusieurs composés entrant dans la composition de l'électrolyte solide ou de l'électrode composite comprenant un électrolyte solide selon l'invention.

Plus particulièrement, dans le cas de la préparation d'un électrolyte solide, en particulier sous la forme d'un film, de type HSE, le mélange obtenu à l'issue de l'étape (ii) ou (iii) peut être supplémenté par au moins une charge inorganique conductrice du ou des cations alcalin ou alcalino-terreux, en particulier une charge inorganique conductrice des ions lithium. Selon une autre variante de réalisation, dans le cas de la mise en oeuvre du procédé de l'invention pour former une électrode composite comportant un électrolyte solide, le mélange obtenu à l'issue de l'étape (ii) ou (iii) peut être supplémenté par un ou plusieurs matériaux actifs d'électrode et, éventuellement, par un ou plusieurs additifs conducteurs et/ou un ou plusieurs liants.

L'invention concerne, selon un autre de ses aspects, un électrolyte solide, en particulier sous la forme d'un film d'électrolyte solide, notamment de type SPE ou HSE, tel qu'obtenu selon le procédé de l'invention.

Elle concerne encore une électrode composite comprenant un électrolyte solide, telle qu'obtenue selon le procédé de l'invention.

Les électrolytes solides formés selon l'invention peuvent trouver des applications dans des systèmes électrochimiques variés, notamment dans des systèmes de stockage de l'énergie, en particulier dans des batteries rechargeables, notamment des batteries au lithium.

Ainsi, l'invention concerne encore l'utilisation d'un électrolyte solide selon l'invention et/ou d'une électrode composite selon l'invention, dans un système électrochimique, en particulier dans une batterie au lithium.

Elle concerne encore un système électrochimique, en particulier un dispositif de stockage de l'énergie, notamment une batterie rechargeable, en particulier une batterie au lithium, notamment une batterie lithium-ion ou lithium-métal, comprenant au moins un électrolyte solide tel qu'obtenu selon l'invention, en particulier comprenant au moins un film d'électrolyte solide selon l'invention et/ou au moins une électrode composite comprenant un électrolyte solide selon l'invention.

D'autres caractéristiques, variantes et avantages du procédé de préparation d'un électrolyte solide selon l'invention ressortiront mieux à la lecture de la description, des exemples et figures qui vont suivre, donnés à titre illustratif et non limitatif de l'invention.

## Brève description des dessins

[Fig 1] présente, de manière schématique, la procédure de préparation des électrolytes polymériques solides (SPEs) à base d'un polymère PTMC mettant en oeuvre l'acide HTFSI comme catalyseur sans l'ajout de sel de lithium, telle que mise en oeuvre en exemple 1.1 ;

[Fig 2] présente, de manière schématique, la procédure de préparation des électrolytes polymériques solides (SPEs) à base d'un copolymère PTMC-PCL mettant en oeuvre l'acide HTFSI comme catalyseur sans l'ajout de sel de lithium, telle que mise en oeuvre en exemple 1.2 ;

[Fig 3] présente, de manière schématique, la procédure de préparation des électrolytes solides hybrides (HSEs) à base d'un polymère PTMC mettant en oeuvre l'acide HTFSI comme catalyseur sans l'ajout de sel de lithium, telle que mise en oeuvre en exemple 1.3 ;

[Fig 4] présente, de manière schématique, la procédure de préparation des électrolytes solides hybrides (HSEs) à base d'un copolymère PTMC-PCL mettant en oeuvre l'acide HTFSI comme catalyseur sans l'ajout du sel de lithium, telle que mise en oeuvre en exemple 1.4 ;

[Fig 5] présente, de manière schématique, la procédure de préparation des électrolytes polymériques solides (SPEs) à base d'un polymère PTMC mettant en oeuvre l'acide HTFSI comme catalyseur, avec l'ajout d'un sel de lithium, telle que mise en oeuvre en exemple 2.1. ;

[Fig 6] présente, de manière schématique, la procédure de préparation des électrolytes polymériques solides (SPEs) à base d'un copolymère PTMC-PCL mettant en oeuvre l'acide HTFSI comme catalyseur avec l'ajout d'un sel de lithium, telle que mise en oeuvre en exemple 2.2 ;

[Fig 7] présente, de manière schématique, la procédure de préparation des électrolytes solides hybrides (HSEs) à base d'un polymère PTMC mettant en oeuvre l'acide HTFSI comme catalyseur avec l'ajout d'un sel de lithium, telle que mise en oeuvre en exemple 2.3 ;

[Fig 8] présente, de manière schématique, la procédure de préparation des électrolytes solides hybrides (HSEs) à base d'un copolymère PTMC-PCL mettant en oeuvre l'acide HTFSI comme catalyseur avec l'ajout d'un sel de lithium, telle que mise en oeuvre en exemple 2.4 ;

[Fig 9] présente, de manière schématique, la procédure de synthèse du PTMC mettant en oeuvre le catalyseur $Sn(Oct)_2$ comme décrit en exemple 3.1 ;

[Fig 10] présente, de manière schématique, la synthèse du PTMC par ROP mettant en oeuvre le catalyseur HTFSI suivie par la formulation directe d'une électrode composite sans l'ajout du sel de lithium, comme décrit en exemple 4.1 ;

[Fig 11] présente, de manière schématique, la synthèse du PTMC par ROP mettant en oeuvre le catalyseur HTFSI suivie par la formulation directe d'une électrode composite avec l'ajout du sel de lithium, comme décrit en exemple 4.2 ;

[Fig 12] présente, de manière schématique, la procédure de préparation des batteries selon l'exemple 4.3 ;

[Fig 13] présente les spectres RMN $^1H$ des polymères PTMC de masse moléculaire moyenne Mn d'environ 10 000 $g.mol^{-1}$ synthétisé par ROP à l'aide du (a) catalyseur HTFSI avec le rapport molaire catalyseur/amorceur = 6,44 ( nommé SI10PPA1), comme décrit en exemple 1.1, (b) catalyseur HTFSI avec le rapport molaire catalyseur/amorceur = 1,00 (nommé SI10PPA2), comme décrit en exemple 2.1, et (c) catalyseur $Sn(Oct)_2$ (nommé Sn10PPA), comme décrit en exemple 3.1 ;

[Fig 14] présente l'évolution de la conductivité ionique des électrolytes solides préparés à base du PTMC de masse moléculaire moyenne Mn d'environ 10 000 $g.mol^{-1}$ synthétisé par ROP à l'aide du catalyseur HTFSI sans l'ajout du sel de lithium (nommé SI10PPA1-TFSI15), comme décrit en exemple 1.1, ou avec l'ajout du sel de lithium (nommé SI10PPA2-TFSI15), comme décrit en exemple 2.1, en comparaison avec celle de l'électrolyte à base du PTMC synthétisé en utilisant le catalyseur $Sn(Oct)_2$ (nommé Sn10PPA-TFSI15), préparé comme décrit en exemple 3 ;

[Fig 15] présente les courbes de voltampérométrie cyclique des électrolytes solides préparés à base du PTMC de masse moléculaire moyenne Mn d'environ 10 000 $g.mol^{-1}$ synthétisé par ROP à l'aide du catalyseur HTFSI sans l'ajout du sel de lithium (nommé SI10PPA1-TFSI15), comme décrit en exemple 1.1, ou avec l'ajout du sel de lihtium (nommé SI10PPA2-TFSI15), comme décrit en exemple 2.1, en comparaison avec celle de l'électrolyte à base du PTMC synthétisé en utilisant le catalyseur $Sn(Oct)_2$ (nommé Sn10PPA-TFSI15), préparé comme décrit en exemple 3 ;

[Fig 16] présente six premières courbes de voltampérométrie cyclique cathodique des électrolytes solides SI10PPA1-TFSI15 (a), SI10PPA2-TFSI15 (b), en comparaison avec celles de l'électrolyte Sn10PPA-TFSI15 (c), et leur efficacité coulombique de cyclage (d) ; [Fig 17] présente les courbes de cyclage galvanostatique d'une batterie complète, préparée comme décrit en exemple 4.3, contenant l'anode de lithium métal (l'épaisseur 135 μm), l'électrolyte SI10PPA1-TFSI15, préparé sans l'ajout du sel de lithium, comme décrit en exemple 1.1, et la cathode composite à base du SI10PPA2 (nommée NMC2), préparée avec l'ajout du sel de lithium comme décrit en exemple 4.2 ;
[Fig 18] présente les courbes de cyclage galvanostatique d'une batterie complète, préparée comme décrit en exemple 4.3, contenant l'anode de lithium métal (l'épaisseur 135 μm), l'électrolyte SI10PPA2-TFSI15, préparé avec l'ajout du sel de lithium, comme décrit en exemple 2.1, et la cathode composite à base du SI10PPA2 (nommée NMC2), préparée avec l'ajout du sel de lithium comme décrit en exemple 4.2.

Dans la suite du texte, les expressions « compris entre ... et ... », « allant de ... à ... » et « variant de ... à ... » sont équivalentes et entendent signifier que les bornes sont incluses, sauf mention contraire.

**Description détaillée**

**PREPARATION DE L'ELECTROLYTE SOLIDE**

**ETAPE (i) : SYNTHESE DU (CO)POLYMERE DE TYPE POLYCARBONATE**

Comme indiqué précédemment, la préparation d'un électrolyte solide selon l'invention procède, dans un premier temps, à la synthèse d'un (co)polymère par (co)polymérisation par ouverture de cycle (dite encore « ROP » pour « Ring-Opening Polymerization » en terminologie anglosaxonne) d'au moins un carbonate cyclique de cinq à huit chaînons et, éventuellement, d'au moins une lactone de cinq à huit chaînons.

Par « copolymère », on entend un polymère dérivé d'au moins deux espèces différentes de monomères. Dans la suite du texte, en l'absence d'indications contraires, le terme « polymère » ou « polycarbonate » sera utilisé pour désigner, au sens large, aussi bien des homopolymères que des copolymères.

Les monomères carbonates cycliques peuvent être plus particulièrement de formule (I) suivante :

[Chem 1]

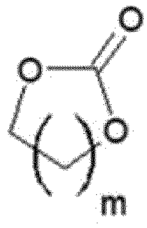

(I)

dans laquelle m est un entier compris entre 1 et 4, notamment entre 1 et 3, en particulier m vaut 1 ou 2 et plus particulièrement m vaut 2 ;
lesdits monomères étant éventuellement substitués, sur un ou plusieurs des atomes de carbone du cycle, par un ou plusieurs substituants, en particulier choisis parmi des groupements alkyles, en particulier en $C_1$ à $C_5$, linéaires ou ramifiés.

Ainsi, les monomères carbonates cycliques peuvent être de formule (I') suivante :

[Chem 2]

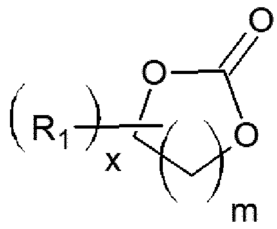

(I')

dans laquelle m est tel que défini précédemment ; x est un entier compris entre 0 et 2m+2 ; et $R_1$, porté(s) par un ou plusieurs atomes de carbone du cycle, représentent, indépendamment les uns des autres, des substituants, en particulier des groupements alkyles, en particulier en $C_1$ à $C_5$, linéaires ou ramifiés.

Selon un mode de réalisation particulier, le monomère carbonate cyclique est choisi parmi le triméthylène carbonate et ses dérivés. En particulier, le monomère carbonate cyclique est le triméthylène carbonate.

Selon une première variante de réalisation, le polycarbonate synthétisé selon l'invention est un (co)polymère obtenu par ROP d'un ou plusieurs monomères carbonate cyclique.

En particulier, il peut s'agir d'un poly(triméthylène carbonate), noté PTMC, obtenu par ROP du triméthylène carbonate (TMC).

Selon une autre variante de réalisation, le polymère synthétisé selon l'invention est un copolymère obtenu par ROP d'au moins un monomère carbonate cyclique, en particulier tel que défini précédemment, et d'au moins un monomère de type lactone.

De préférence, le ratio molaire entre le(s) monomère(s) carbonate cyclique et le(s) monomère(s) de type lactone est compris entre 90/10 et 10/90, notamment entre 80/20 et 20/80, en particulier compris entre 70/30 et 30/70 et plus particulièrement d'environ 60/40. Par lactone, on entend plus particulièrement des monomères répondant à la formule (II) suivante :

[Chem 3]

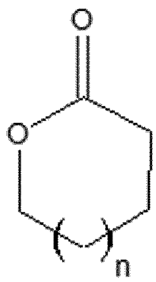

(II)

dans laquelle n vaut 0 ou est un entier allant de 1 à 3 ;
lesdits monomères étant éventuellement substitués, sur un ou plusieurs des atomes de carbone du cycle, par un ou plusieurs substituants, en particulier choisis parmi des groupements alkyles, en particulier en $C_1$ à $C_5$, linéaires ou ramifiés.

Ainsi, les monomères de type lactone peuvent être de formule (II') suivante :

[Chem 4]

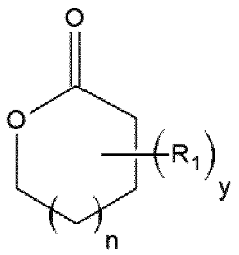

(II')

dans laquelle n est tel que défini précédemment ; y est un entier compris entre 0 et 2n+6 ; et $R_1$, porté(s) par un ou plusieurs atomes de carbone du cycle, représentent, indépendamment les uns des autres, des substituants, en particulier des groupements alkyles, en particulier en $C_1$ à $C_5$, linéaires ou ramifiés.

Selon un mode de réalisation particulier, le copolymère synthétisé selon l'invention est formé à partir de l'ε-caprolactone (notée CL).

Les copolymères peuvent être plus particulièrement de type aléatoire ou à gradient.

A titre d'exemple, le copolymère synthétisé en étape (i) du procédé de l'invention peut être formé à partir du triméthylène carbonate (TMC) et de l'ε-caprolactone (CL). Autrement dit, il peut s'agir d'un copolymère poly(triméthylène carbonate)-poly(ε-caprolactone) (PTMC-PCL), en particulier présentant un rapport molaire entre les unités monomériques dérivées du TMC et les unités monomériques dérivés de la CL compris entre 90/10 et 10/90, notamment entre 80/20 et 20/80, en particulier entre 70/30 et 30/70 et plus particulièrement d'environ 60/40.

Selon un mode de réalisation particulier, les (co)polymères synthétisés selon l'invention sont choisis parmi les PTMC, les copolymères PTMC-PCL, en particulier tels que décrits précédemment, et leurs mélanges.

**Synthèse des (co)polymères**

Comme indiqué précédemment, la synthèse des polycarbonates est réalisée en étape (i) par (co)polymérisation par ouverture de cycle des monomères tels que décrits précédemment, en présence d'au moins un super acide de Brønsted comme catalyseur et, avantageusement, initiée par au moins au moins un composé comportant une ou plusieurs fonction(s) hydroxyde(s).

Initiateur de la ROP

Selon un mode de réalisation particulier, la (co)polymérisation selon l'invention est conduite en présence d'un composé, en particulier d'une molécule organique, comportant une ou plusieurs fonctions hydroxyles, dit « initiateur » (ou « amorceur »).

La mise en oeuvre d'un initiateur de la ROP, en particulier apporté en une quantité déterminée, dans le mélange réactionnel initial, permet avantageusement de contrôler la masse molaire des polycarbonates synthétisés selon l'invention.

Le composé initiateur de la ROP peut être de diverses natures, pour autant qu'il présente au moins une fonction hydroxyle permettant d'amorcer la réaction de polymérisation. Il peut être choisi en particulier parmi l'eau et/ou les alcools, en particulier les alcools présentant une à quatre fonctions hydroxyles et plus particulièrement une ou deux fonctions hydroxyles. Selon un mode de réalisation particulier, l'initiateur de la ROP peut être de l'eau. Il peut s'agir par exemple de l'eau résiduelle apportée avec au moins l'un des monomères de type carbonate cyclique et/ou lactone mis en oeuvre.

Selon un mode de réalisation particulièrement avantageux, l'initiateur est apporté en une quantité déterminée au mélange réactionnel initial.

Ledit initiateur ou amorceur de la ROP peut présenter une masse moléculaire moyenne en nombre allant de 90 à 1 000 $g.mol^{-1}$, en particulier de 90 à 500 $g.mol^{-1}$.

Il peut être plus particulièrement choisi parmi les alcools présentant une ou plusieurs fonctions hydroxyles, en particulier une à quatre fonctions hydroxyles, notamment une ou deux fonctions hydroxyles.

Selon un mode de réalisation particulier, l'initiateur est un monoalcool. Il peut s'agir plus particulièrement d'un composé ROH dans lequel le groupe R représente un groupement « non réactif ».

Par groupement « non réactif », on entend désigner un groupement non réactif dans les conditions de préparation et de mise en oeuvre du polycarbonate selon l'invention. Plus particulièrement, le groupement R ne présente pas de fonction réactive vis-à-vis des monomères de type carbonate cyclique et lactone mis en oeuvre, ni de fonction réactive

vis-à-vis des métaux alcalins ou alcalino-terreux, notamment vis-à-vis du lithium métal, des sels de métaux alcalins ou alcalino-terreux, notamment vis-à-vis des sels de lithium.

Le groupement R peut être plus particulièrement :

- un groupe alkyle, linéaire ou ramifié, pouvant être substitué par des groupements mono- ou polycycliques ou mono- ou polyhétérocycliques, condensés ou non, saturés ou insaturés, aromatiques ou non ; ou
- un groupe mono- ou polycyclique ou mono- ou polyhétérocyclique, condensé ou non, saturé ou insaturé, aromatique ou non ;

le groupe alkyle et/ou le ou lesdits groupements mono- ou poly(hétéro)cycliques pouvant éventuellement être substitués par un ou plusieurs atomes de fluor.

Dans le cadre de l'invention, on entend par :

- « alkyle », un groupe aliphatique saturé, linéaire ou ramifié ; par exemple un groupe $C_{1-4}$-alkyle représente une chaîne carbonée de 1 à 4 atomes de carbone, linéaire ou ramifiée, plus particulièrement un méthyle, éthyle, propyle, isopropyle, butyle, isobutyle, *tert*-butyle ;
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « hétérocycle », un groupe cyclique, de préférence à 4, 5 ou 6 chaînons, comprenant un ou plusieurs hétéroatomes, en particulier choisis parmi l'oxygène, le soufre et l'azote. Les groupements mono- ou poly(hétéro)cycliques selon l'invention peuvent être insaturés, partiellement saturés ou saturés. Un cycle aromatique peut être notamment le benzène.

En particulier, un groupement polycyclique selon l'invention est formé de deux à six cycles, les cycles comprenant, indépendamment les uns des autres, de 4 à 6 chaînons. Le groupement polycyclique peut inclure un ou plusieurs hétéroatomes. On parle alors de « groupement polyhétérocyclique ».

L'initiateur mis en oeuvre pour la synthèse des polycarbonates par ROP selon l'invention peut être par exemple choisi parmi les molécules suivantes.

[Chem 5]

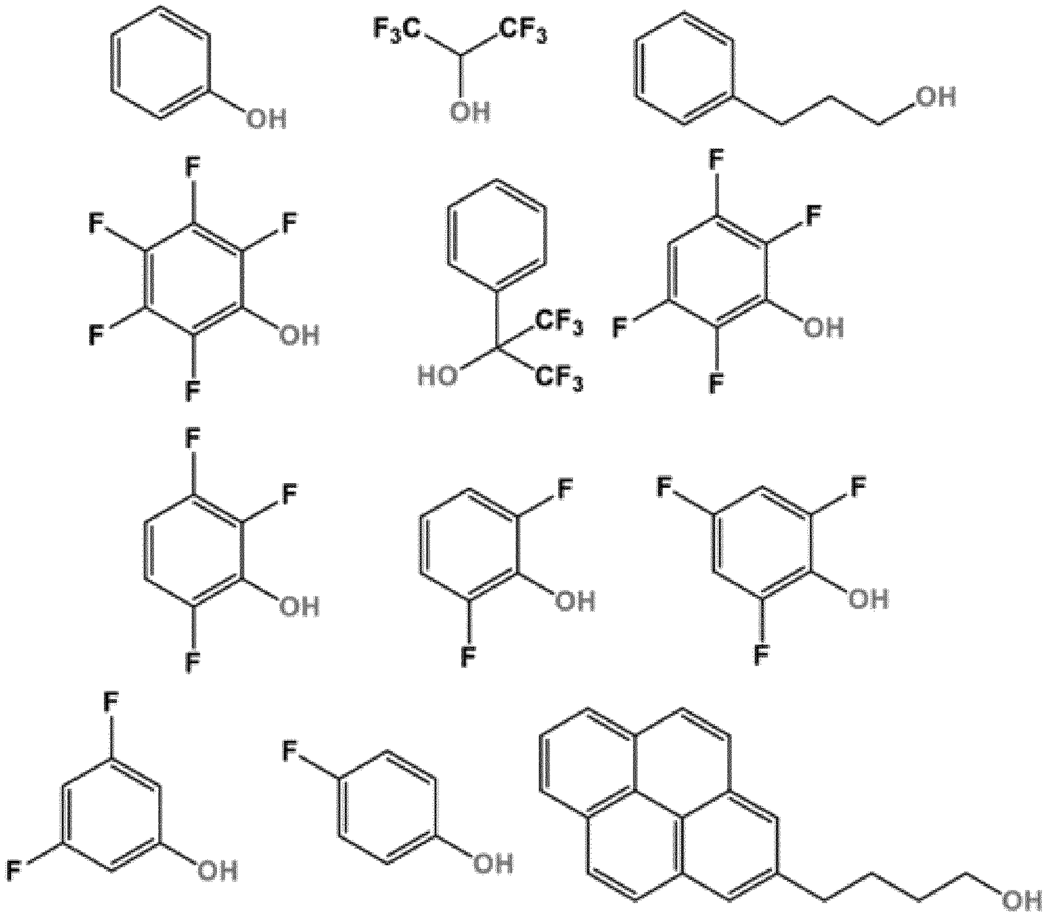

Selon un autre mode de réalisation particulier, l'initiateur est un composé présentant au moins deux fonctions hydroxyle, en particulier de deux à quatre fonctions hydroxyles, par exemple deux fonctions hydroxyles.

En particulier, il peut s'agir d'un composé de formule $R'(-OH)_x$, dans laquelle x représente un entier allant de 2 à 4 ; et R' représente un groupe non réactif divalent, trivalent ou tétravalent, en particulier un groupe alkylène, notamment en $C_1$ à $C_6$, en particulier en $C_1$ à $C_3$, linéaire ou ramifié, tel que l'éthylène glycol (également noté « EG ») ou le glycérol. L'initiateur peut encore être de type macroamorceur. Par « macroamorceur » au sens de l'invention, on entend un polymère comportant, à au moins l'une de ses extrémités, une fonction hydroxyle capable d'amorcer la réaction de ROP selon l'invention. Il permet de conduire à la formation d'un copolymère à blocs. Ledit macroamorceur peut être par exemple un polydiméthylsiloxane, porteur d'une fonction terminale hydroxyle.

La nature de l'initiateur mis en oeuvre pour amorcer la réaction de ROP selon l'invention n'est nullement limitée aux composés précités, et d'autres initiateurs peuvent être envisagés. De manière avantageuse, dans le cas d'un initiateur présentant plusieurs fonctions hydroxyles, les valeurs de pKa des différentes fonctions hydroxyles sont sensiblement identiques. Il permet ainsi d'accéder à des polycarbonates à structure ramifiée, ou dendrimères, à ramifications symétriques.

Selon un mode de réalisation particulier, l'initiateur est choisi parmi le 3-phényl-1-propanol (également noté « PPA ») et l'éthylène glycol. En particulier, l'initiateur peut être le PPA. L'initiateur va être intégré en bout de chaîne du (co)polymère synthétisé.

Selon un mode de réalisation particulier, le ou lesdits monomères et le ou lesdits initiateurs sont mis en oeuvre dans un rapport molaire monomère(s)/initiateur(s) compris entre 40/1 et 1000/1, en particulier entre 50/1 et 500/1.

Selon un mode de réalisation particulier, le ratio molaire initiateur(s)/catalyseur est compris entre 1/10 et 10/1.

Catalyseur super acide de Brønsted

Comme indiqué précédemment, la réaction de ROP conduite en étape (i) du procédé de l'invention est catalysée par au moins un composé superacide de Brønsted, apte à former, après neutralisation en étape (ii) du procédé de

l'invention, un sel conducteur ionique de métal alcalin ou alcalino-terreux.

Les superacides de Brønsted sont connus de l'homme du métier ; ils sont par exemple décrits dans la publication [13]. Les superacides de Brønsted peuvent être notamment caractérisés par une valeur de pKa dans 1,2-dichloroéthane (DCE) inférieure ou égale à -1, en particulier inférieure ou égale à -10.

En particulier, le catalyseur superacide de Brønsted mis en oeuvre pour la synthèse des polycarbonates selon l'invention est choisi parmi les superacides de Brønsted conduisant, après neutralisation en étape (ii) du procédé de l'invention, à des sels de métal alcalin ou alcalino-terreux, en particulier des sels de lithium, couramment mis en oeuvre comme sels conducteurs ioniques dans les dispositifs électrochimiques, notamment les batteries au lithium.

Le catalyseur superacide de Brønsted peut ainsi être plus particulièrement choisi parmi :

- l'acide bis(trifluorométhanesulfonyl)imide (HTFSI), également appelé acide triflimide ou acide bistriflimide et désigné également sous l'abréviation « $HNTf_2$ » ;
- l'acide trifluorométhanesulfonique (HTFSA), également appelé l'acide triflique, et également désigné sous l'abréviation « TfOH » ;
- l'acide bis(fluorosulfonyl)imide (HFSI) [14] ;
- l'acide fluorosulfurique ($FSO_3H$) ;
- l'acide tétrafluoroborique ($HBF_4$) ;
- l'acide hexafluorophosphorique ($HPF_6$) ;
- l'acide hexafluoroarsénique ($HAsF_6$) ;
- l'acide perchlorique ($HClO_4$) ;
- l'acide bis(pentafluoroéthanesulfonyl)imide, également appelé l'acide $HN(SO_2C_2F_5)_2$ et désigné également sous l'abréviation « HBETI » ;
- l'acide bis(heptafluoropropanesulfonyl)imide, également appelé l'acide $HN(SO_2C_3F_7)_2$ ;
- l'acide bis(nonafluorobutanesulfonyl)imide, également appelé l'acide $HN(SO_2C_4F_9)_2$ ;
- l'acide pentafluoroéthanesulfonique ($C_2F_5SO_3H$) ;
- l'acide 4,5-dicyano-2-trifluorométhyl-imidazolide, désigné également sous l'abréviation « HTDI » ;
- l'acide bis(oxalato)borique ($HB(C_2O_4)_2$), désigné également sous l'abréviation « HBOB » ;
- l'acide difluoro(éthanedioato)borique ($HBF_2(C_2O_4)$), également appelé l'acide oxalatodigluoroborique et désigné également sous l'abréviation « HFOB, HODFB, ou encore HF2OB » ;
- l'acide tris[(trifluorométhyl)sulfonyl]méthane, également appelé l'acide triflidique et désigné également sous l'abréviation « $Tf_3CH$ » ;
- l'acide dicyanamide ($NH-(CN)_2$), appelé DCA ;
- l'acide tricyanométhamide ($CH-(CN)_3$), appelé TCM ;

et leurs mélanges.

Selon un mode de réalisation particulier, le catalyseur superacide de Brønsted peut être choisi parmi le HTFSI, le TfOH, le HFSI, le $FSO_3H$ et leurs mélanges, de préférence parmi le HTFSI, le TfOH et leurs mélanges.

Dans la suite du texte, et sauf indication contraire, on désigne sous l'appellation « catalyseur », un unique catalyseur superacide de Brønsted, tel que le HTFSI ou le TfOH, ou un mélange d'au moins deux catalyseurs distincts, par exemple un mélange de HTFSI et TfOH.

Selon un mode de réalisation particulier, la synthèse par ROP en étape (i) est opérée en présence du catalyseur HTFSI.

Selon un autre mode de réalisation particulier, la synthèse par ROP en étape (i) est opérée en présence du catalyseur TfOH.

Le ou lesdits monomère(s) et ledit catalyseur de type super acide de Brønsted peuvent être plus particulièrement mis en oeuvre dans un rapport molaire monomère(s)/catalyseur compris entre 4 et 10000, en particulier entre 5 et 5000.

Selon une première variante de réalisation, ledit catalyseur de type super acide de Brønsted, par exemple HTFSI ou TfOH, est mis en oeuvre en étape (i) en excès dans le milieu réactionnel de départ, en particulier en une quantité telle qu'elle permette, après la neutralisation dudit catalyseur en étape (ii) du procédé de l'invention par un hydrure métallique, comme détaillé dans la suite du texte, d'obtenir la quantité en sel métallique souhaitée pour l'électrolyte solide, sans nécessiter d'étape (iii) d'ajout d'une quantité additionnelle en sel métallique.

Ainsi, dans le cadre de cette variante, la totalité du sel de métal alcalin ou alcalino-terreux, par exemple de type $M^+TFSI^-$ ou $M^+Tf^-$, avec $M^+$ représentant un cation de métal alcalin ou alcalino-terreux, en particulier LiTFSI ou LiTf, au niveau de l'électrolyte solide formé selon l'invention provient du catalyseur super acide de Brønsted initialement mis en oeuvre dans le procédé de l'invention pour la synthèse des polycarbonates.

Le procédé de préparation d'un électrolyte solide selon l'invention, comparativement aux procédés conventionnels tels que décrits précédemment, s'affranchit avantageusement, outre des étapes d'élimination du catalyseur, de l'étape d'ajout d'un sel métallique.

En particulier, ledit catalyseur super acide de Brønsted peut être mis en oeuvre en une teneur telle que le rapport molaire monomère(s)/catalyseur est compris entre 0,5 et 30, en particulier entre 5 et 15 et plus particulièrement entre 10 et 15, notamment d'environ 15.

A l'issue de la neutralisation du catalyseur en étape (ii), en particulier par l'hydrure de lithium, le rapport molaire entre les groupes carbonyles des polycarbonates par rapport au lithium, noté $[CO]/[Li^+]$, peut être ainsi avantageusement compris entre 0,5 et 30, en particulier entre 5 et 15 et plus particulièrement entre 10 et 15, notamment d'environ 15.

Selon une autre variante de réalisation, ledit catalyseur de type super acide de Brønsted, par exemple HTFSI ou HTFSA, est mis en oeuvre en étape (i) en quantité catalytique, autrement dit en une quantité uniquement suffisante pour accélérer la réaction de ROP.

En particulier, le catalyseur peut être mis en oeuvre dans un rapport molaire monomère(s)/catalyseur compris entre 40/1 et 1000/1, en particulier entre 50/1 et 500/1. Le ratio molaire initiateur/catalyseur peut être notamment compris entre 1/1 et 10/1, en particulier est d'environ 1/1.

Dans le cadre de cette variante, le procédé de l'invention comprend de préférence une étape (iii) d'ajout, au mélange obtenu après neutralisation du catalyseur, d'une quantité additionnelle en sel(s) de métal alcalin ou alcalino-terreux, en particulier en sel(s) de lithium, pour atteindre la quantité souhaitée en sel(s) de métal alcalin ou alcalino-terreux dans l'électrolyte solide formé selon l'invention.

De préférence, la quantité en sel de lithium ajoutée en étape (iii) est ajustée pour atteindre, au niveau du mélange après ajout du sel de lithium, un ratio molaire entre les groupes carbonyles du polycarbonate par rapport au lithium, noté $[CO]/[Li^+]$, compris entre 0,5 et 30, en particulier entre 5 et 15 et plus particulièrement entre 10 et 15, notamment d'environ 15.

Dans le cadre de cette variante, la quantité de sel(s) de métal alcalin ou alcalino-terreux au niveau de l'électrolyte solide formé selon l'invention comprend ainsi le sel formé à partir de la neutralisation du catalyseur super acide de Brønsted initialement mis en oeuvre pour la synthèse des polycarbonates, par exemple du LiTFSI ou LiTf, ainsi que le ou les sels de métal alcalin ou alcalino-terreux, notamment sel(s) de lithium, identique(s) ou différent(s) du sel issu de la neutralisation du catalyseur super acide de Brønsted, ajouté(s) au mélange obtenu après neutralisation du catalyseur.

La réaction de (co)polymérisation en étape (i) est conduite en milieu solvant.

De préférence, elle est conduite sous agitation.

Le milieu solvant peut être plus particulièrement formé d'un ou plusieurs solvant(s) organique(s), en particulier apolaire(s) et aprotique(s), notamment choisis parmi la N-méthyl-2-pyrrolidone (NMP), le chloroforme ($CHCl_3$), le dichlorométhane (DCM), le tétrahydrofurane et leurs mélanges. En particulier, elle peut être opérée dans le dichlorométhane ou la NMP.

Selon un mode de réalisation particulier, la concentration en monomères dans le milieu réactionnel initial est supérieure ou égale à 3 $mol.L^{-1}$ (M) en particulier supérieure ou égale à 5 $mol.L^{-1}$. Elle peut être compris entre 3 et 15 $mol.L^{-1}$, en particulier entre 5 et 10 $mol.L^{-1}$.

De manière avantageuse, la réaction de ROP en étape (i) du procédé selon l'invention est opérée à basse température, en particulier à une température inférieure ou égale à 40 °C, notamment comprise entre 20 et 40 °C et plus particulièrement à température ambiante. Par température ambiante, on entend une température de 25 $\pm$ 5°C.

La durée de polymérisation peut être ajustée pour obtenir une conversion élevée des monomères. En particulier, la durée de polymérisation est avantageusement courte ; elle peut être inférieure à 3 jours, en particulier inférieure ou égale à 72 heures, en particulier inférieure ou égale à 48 heures et plus particulièrement comprise entre 24 et 48 heures.

Le taux de conversion en monomères à l'issue de la synthèse du polycarbonate est avantageusement supérieur à 90 %, en particulier supérieur à 95 %. Le taux ou rendement de conversion peut être déterminé à partir de la masse des (co)polymères obtenus et des masses en monomère(s) et, éventuellement, en initiateur de départ.

La réaction de ROP peut être mise en oeuvre en mode continu, semi-continu ou discontinu. Selon un mode de réalisation particulier, elle est opérée de manière discontinue (« batch » en anglais), l'ensemble des monomères étant introduits en une seule fois dans le réacteur, le (co)polymère étant récupéré en une fois à la fin de réaction.

Selon un autre mode de réalisation, la réaction de ROP peut être mise en oeuvre de manière semi-continue ou continue, en particulier dans le cas de la synthèse de copolymères de type aléatoire ou gradient. Elle peut plus particulièrement comprendre une phase d'introduction progressive du ou desdits monomères dans le réacteur. L'introduction progressive des monomères peut être opérée par ajout au cours de la polymérisation de fractions successives de monomère(s), ou en continu.

Comme indiqué précédemment, la synthèse conduite par ROP dans les conditions de l'invention, avantageusement en présence d'un initiateur tel que décrit précédemment, permet un bon contrôle de la masse molaire et de la polydispersité des polycarbonates obtenus.

En particulier, les polycarbonates synthétisés selon l'invention présentent avantageusement une masse molaire moyenne en nombre, notée Mn, inférieure ou égale à 200 000 $g.mol^{-1}$, en particulier comprise entre 5 000 et 100 000 $g.mol^{-1}$, et plus particulièrement entre 5 000 et 50 000 $g.mol^{-1}$. La masse molaire moyenne en nombre peut être mesurée par chromatographie par perméation de gel (ou GPC). Elle peut encore être obtenue à partir de l'analyse RMN $^1H$ du

(co)polymère obtenu.

Elle peut être avantageusement contrôlée selon la méthode de synthèse mise en oeuvre selon l'invention par le rapport molaire du ou desdits monomère(s) à l'initiateur dans le mélange réactionnel initial.

Les (co)polymères synthétisés selon l'invention présentent avantageusement une polydispersité inférieure ou égale à 2,5, en particulier inférieure ou égale à 2,0. La polydispersité (dite encore indice de polydispersité, noté PDI) est égale au rapport de la masse molaire moyenne en poids Mw sur la masse molaire moyenne en nombre Mn. La masse molaire moyenne en poids peut être déterminée par chromatographie d'exclusion stérique, éventuellement couplée avec la diffusion de lumière statique, ou par mesure viscosimétrique différente par pont de Wheastone.

Les polycarbonates synthétisés selon l'invention de type PTMC peuvent présenter une température de transition vitreuse, notée Tg, comprise entre -10 °C et -50 °C, en particulier entre -20 °C et -40 °C. Les copolymères de type PTMC-PCL peuvent présenter une Tg comprise entre -20°C et -70°C, en particulier entre -30°C et -60°C. La température de transition vitreuse peut être déterminée par analyse par calorimétrie différentielle à balayage (DSC pour « Differential Scanning Calorimetry » en terminologie anglo-saxonne).

Les polycarbonates obtenus dans le milieu réactionnel en étape (i) du procédé selon l'invention, à l'issue de la ROP en présence d'un initiateur de type mono-alcool R-OH, peuvent être par exemple de formule (III) suivante :

[Chem 6]

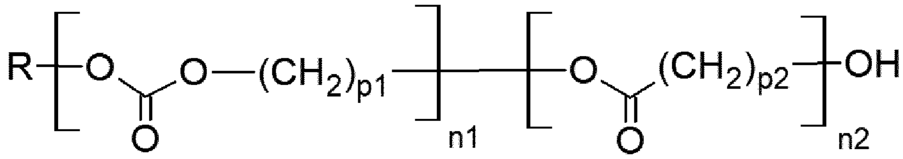

(III)

dans laquelle :

- R représente le groupement issu de l'initiateur de type monoalcool ROH, tel que défini précédemment, par exemple un groupe phénylpropyle issu de l'initiateur PPA ;
- p1 est un nombre entier allant de 2 à 4, en particulier p1 vaut 3 ;
- p2 est un nombre entier allant de 4 à 7, en particulier p2 vaut 5 ;
- n1 est un nombre entier positif, correspondant au nombre moyen d'unités monomériques dérivées des monomères carbonates cycliques, en particulier n1 est compris entre 30 et 500 ; n2 vaut 0 ou est un nombre entier positif, correspondant au nombre moyen d'unités monomériques dérivées des monomères lactones, en particulier n2 est compris entre 20 et 500 ;
- l'enchaînement des unités monomériques dans la formule (III) pouvant être aléatoire ou gradient.

De préférence, comme décrit précédemment, le rapport molaire des unités monomériques dérivées des carbonates cycliques sur les unités monomériques dérivées des lactones, n1/n2, est compris entre 90/10 et 10/90, en particulier entre 80/20 et 20/80, notamment entre 70/30 et 30/70 et plus particulièrement vaut environ 60/40.

A titre d'exemple, les polycarbonates synthétisés selon l'invention peuvent présenter la structure de formule (III') suivante :

[Chem 7]

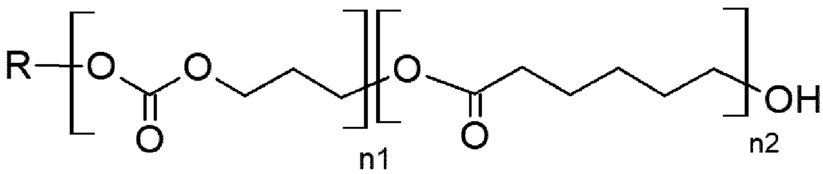

(III')

dans laquelle R, n1 et n2 sont tels que définis précédemment.

Bien entendu, des structures polymériques plus complexes, par exemple de type dendrimère, peuvent être obtenues à partir d'un initiateur mettant en oeuvre plusieurs fonctions hydroxyles.

**ETAPE (ii) : NEUTRALISATION DU CATALYSEUR**

Comme indiqué précédemment, le procédé de l'invention comprend, consécutivement à la synthèse en étape (i) des polycarbonates telle que décrite précédemment, une étape (ii) de neutralisation du catalyseur de type superacide de Brønsted, par exemple HTFSI ou TfOH, par au moins un hydrure de métal alcalin ou alcalino-terreux.

L'étape (ii) comprend plus particulièrement l'ajout, directement dans le milieu réactionnel obtenu à l'issue de la synthèse par ROP des polycarbonates, d'au moins un hydrure de métal alcalin ou alcalino-terreux, noté « $M^+H^-$ », avec $M^+$ représentant un cation de métal alcalin ou alcalino-terreux.

Dans le cadre de l'invention, on entend par :

- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

L'hydrure de métal alcalin ou alcalino-terreux ajouté en étape (ii) est de préférence l'hydrure de lithium (LiH).

La quantité en hydrure métallique $M^+H^-$, en particulier en hydrure de lithium, est telle qu'elle permet de neutraliser la totalité du ou desdits catalyseurs de type superacide de Brønsted, en particulier HTFSI et/ou TfOH, présents au niveau du milieu réactionnel à l'issue de la synthèse des polycarbonates, et de protéger la ou les fonctions hydroxyles terminales du ou desdits polycarbonates synthétisés.

Ainsi, il appartient à l'homme du métier d'ajuster la quantité en hydrure métallique $M^+H^-$, à introduire en étape (ii) du procédé de l'invention, au regard de la quantité en catalyseur mis en oeuvre pour la synthèse des polycarbonates en étape (i), ainsi que de la quantité estimée en fonctions hydroxyles en bout de chaines des polycarbonates synthétisés.

L'hydrure métallique, en particulier l'hydrure de lithium, est mis en oeuvre en étape (ii) en excès par rapport au catalyseur présent dans le milieu réactionnel. Autrement dit, l'hydrure métallique ($M^+H^-$), en particulier l'hydrure de lithium (LiH), est ajouté au milieu réactionnel obtenu à l'issue de l'étape (i) en une quantité molaire strictement supérieure à celle du ou desdits catalyseurs mis en oeuvre en étape (i).

La neutralisation du catalyseur de type superacide de Brønsted, par exemple HTFSI et/ou TfOH, par un hydrure de métal alcalin ou alcalino-terreux $M^+H^-$, en particulier par l'hydrure de lithium, conduit à la formation d'un sel dudit métal alcalin ou alcalino-terreux, par exemple $M^+TFSI^-$ et/ou $M^+Tf$.

A l'issue de l'étape (ii), la totalité du catalyseur présent dans le milieu réactionnel est ainsi transformé en sel organique de métal alcalin ou alcalino-terreux, en particulier en sel de lithium, par exemple en bis(trifluorométhanesulfonyl)imide de lithium (LiTFSI) et/ou trifluorométhanesulfonate de lithium (LiTf).

En particulier, dans le cas de la mise en oeuvre du HTFSI comme catalyseur, celui-ci est neutralisé avec l'hydrure métallique $M^+H^-$, en particulier l'hydrure de lithium, pour former un sel $M^+TFSI^-$, en particulier LiTFSI.

Dans le cas particulier de la mise en oeuvre du TfOH comme catalyseur, celui-ci est neutralisé avec l'hydrure métallique $M^+H^-$, en particulier l'hydrure de lithium, pour former un sel $M^+Tf^-$, en particulier LiTf.

De préférence, le milieu réactionnel est agité, simultanément ou ultérieurement à l'ajout de l'hydrure métallique, de manière à obtenir la neutralisation totale du catalyseur et une bonne dispersion du ou desdits sels de métal alcalin ou alcalino-terreux créés, au niveau des polycarbonates.

En particulier, le mélange est soumis à une forte agitation, par exemple à l'aide d'un agitateur magnétique.

Comme indiqué précédemment, l'hydrure métallique, en particulier l'hydrure de lithium, est introduit en étape (ii) du procédé de l'invention en une quantité en excès telle qu'elle permet de neutraliser la totalité du catalyseur, mais également de protéger (ou coiffer) la ou les fonctions hydroxyles en bout de chaines des polycarbonates synthétisés selon l'invention. De fait, un polycarbonate synthétisé en étape (i) du procédé selon l'invention peut comprendre une unique fonction hydroxyle terminale ou deux, voire plus de deux, fonctions hydroxyles terminales, en fonction notamment de la nature de l'initiateur de la réaction de ROP (par exemple, mono-alcool ou diol).

La formation d'extrémités hydroxyle protégées, dites encore « coiffées » (plus généralement désignées sous l'appellation « end-capped » en terminologie anglo-saxonne) permet avantageusement d'accroître la stabilité électrochimique de l'électrolyte solide à base du ou desdits polycarbonates, les fonctions terminales hydroxyle étant sensibles à la réduction et à l'oxydation, et susceptibles de se dégrader au contact avec du lithium métal ou des sels de lithium.

Une fonction hydroxyle est « protégée » en formant une fonction plus stable chimiquement et électrochimiquement.

La ou les fonctions hydroxyles en bout de chaines des polycarbonates synthétisés selon l'invention sont ainsi avantageusement protégées, par réaction avec l'hydrure métallique ($M^+H^-$) introduit en excès dans le milieu réactionnel, sous la forme de fonctions alcoolate métallique $-O^-M^+$, avec $M^+$ représentant un cation de métal alcalin ou alcalino-terreux, en particulier sous la forme d'alcoolate de lithium (-OLi).

L'ajout en étape (ii) de l'hydrure métallique permet ainsi simultanément de neutraliser la totalité du catalyseur mis en oeuvre pour la synthèse des polycarbonates, sous la forme de sel de métal alcalin ou alcalino-terreux, en particulier de sel de lithium, et de protéger les fonctions hydroxyles terminales des polycarbonates synthétisés sous la forme de fonctions alcoolates de métal alcalin ou alcalino-terreux, en particulier alcoolates de lithium.

De manière avantageuse, la totalité du catalyseur mis en oeuvre pour la synthèse des polycarbonates selon l'invention est ainsi éliminée en étape (ii) du procédé de l'invention, *via* sa transformation en sel de métal alcalin ou alcalino-terreux, en particulier en sel de lithium.

Le mélange obtenu à l'issue de l'étape (ii) comprend ainsi, dans le milieu solvant de synthèse des polycarbonates, par exemple dans le dichlorométhane ou la NMP, le ou lesdits polycarbonates, dont les fonctions hydroxyles en bout de chaîne sont protégées sous la forme d'alcoolate de métal alcalin ou alcalino-terreux ($-O^-M^+$), en particulier d' alcoolate de lithium ($-O^-Li^+$), et le sel de métal alcalin ou alcalino-terreux, en particulier sel de lithium, notamment LiTFSI ou LiTf, résultant de la neutralisation du catalyseur par l'hydrure métallique.

Le mélange obtenu à l'issue de l'étape (ii), le cas échéant supplémenté par une quantité additionnelle de sel de métal alcalin ou alcalino-terreux et/ou, éventuellement, par un ou plusieurs composés conventionnels, peut ainsi être utilisé pour former un électrolyte solide ou une électrode composite, directement après évaporation du milieu solvant, sans qu'il soit nécessaire d'opérer d'étape intermédiaire de purification (par exemple, précipitation, filtrage, lavage, etc.) des polycarbonates synthétisés, d'élimination du catalyseur, de préparation de l'électrolyte, etc.

**ETAPE (iii) : AJOUT OPTIONNEL D'UN SEL METALLIQUE**

Comme indiqué précédemment, le procédé de l'invention peut comprendre optionnellement, après l'étape (ii) de neutralisation du catalyseur, une étape (iii) d'ajout d'au moins un sel de métal alcalin ou alcalino-terreux.

Le sel ajouté comprend plus particulièrement le même cation métallique que celui de l'hydrure métallique mis en oeuvre en étape (ii) du procédé de l'invention.

Il peut s'agir par exemple d'un sel de lithium, de sodium ou de magnésium. En particulier, le sel de métal alcalin ou alcalino-terreux mis en oeuvre en étape (iii) du procédé de l'invention est un sel de lithium.

A titre d'exemples de sel de lithium, on peut citer le $LiPF_6$, $LiClO_4$, $LiBF_4$, $LiAsF_6$, $LiCF_3SO_3$, le bis(trifluorométhylsulfonyl)imide de lithium $LiN[SO_2CF_3]_2$ (LiTFSI), le bis(fluorosulfonyl)amidure de lithium (connu sous l'abréviation LiFSI) $LiN[SO_2F]_2$, le trifluorométhanesulfonate de lithium (LiTf), le lithium 4,5-dicyano-2-(trifluoromethyl)imidazole (connu sous l'abréviation LiTDI), le lithium bispentafluoroéthylsulfonylimide ($LiN(C_2F_5SO_2)_2$, connu sous l'abréviation LiBETI), le lithium bis(oxalato)borate (connu sous l'abréviation LiBOB), le lithium difluoro(oxalato)borate (connu sous l'abréviation LiFOB), le difluorophosphate de lithium ($LiPO_2F_2$) et les mélanges de ceux-ci.

De préférence, le sel de lithium est du LiTFSI, LiTDI ou LiFSI, de préférence du LiTFSI ou LiFSI et plus préférentiellement du LiTFSI.

Le sel de métal alcalin ou alcalino-terreux, ajouté au mélange en étape (iii), peut être de même nature ou non que le sel de métal alcalin ou alcalino-terreux formé par neutralisation du catalyseur en étape (ii).

Selon un mode de réalisation particulier, il est de même nature que le sel de métal alcalin ou alcalino-terreux formé par neutralisation du catalyseur en étape (ii). A titre d'exemple, dans le cas de la mise en oeuvre du HTFSI à titre de catalyseur super acide de Brønsted, transformé en étape (ii) en sel de lithium LiTFSI par neutralisation avec l'hydrure de lithium (LiH), le sel métallique ajouté en étape (iii) du procédé de l'invention peut être plus particulièrement le sel de lithium LiTFSI.

L'étape (iii) permet ainsi d'accroître la quantité en sel(s) de métal alcalin ou alcalino-terreux obtenue à l'issue de la neutralisation du catalyseur en étape (ii).

L'étape (iii) d'ajout d'un sel de métal alcalin ou alcalino-terreux est notamment mise en oeuvre lorsque le catalyseur super acide de Brønsted, par exemple HTFSI et/ou TfOH, est introduit en étape (i) en quantité catalytique comme décrit précédemment.

Comme indiqué précédemment, la quantité en sel(s) de lithium ajoutée en étape (iii) est de préférence ajustée pour atteindre un ratio molaire entre les groupes carbonyles du polycarbonate par rapport au lithium, noté $[CO]/[Li^+]$ compris entre 0,5 et 30, en particulier entre 5 et 15 et plus particulièrement entre 10 et 15, notamment d'environ 15.

De préférence, le mélange est agité, simultanément ou ultérieurement à l'ajout du ou desdits sels métalliques, et préalablement à la mise en oeuvre dudit milieu en étape (iv), pour obtenir une bonne dispersion du ou desdits sels de métal alcalin ou alcalino-terreux au niveau des polycarbonates.

**ETAPE (iv) : FORMATION D'UN ELECTROLYTE SOLIDE OU D'UNE ELECTRODE COMPOSITE**

Comme évoqué précédemment, le mélange obtenu à l'issue de l'étape (ii) ou (iii), comprenant, dans le milieu solvant de synthèse des polycarbonates, par exemple dans le dichlorométhane ou la NMP, le ou lesdits polycarbonates,

dont les fonctions hydroxyles en bout de chaîne sont protégées sous la forme d'alcoolate de métal alcalin ou alcalino-terreux (-$O^-M^+$), en particulier d'alcoolate de lithium (-$O^-Li^+$), et le ou lesdits sels de métal alcalin, résultant au moins en partie de la neutralisation du ou des catalyseurs de type super acide de Brønsted mis en oeuvre pour la synthèse des polycarbonates, est directement mis en oeuvre pour former un électrolyte solide.

Le procédé de l'invention peut être mis en oeuvre pour former un électrolyte solide, en particulier sous la forme d'un film ou membrane d'électrolyte solide, en particulier de type électrolyte polymérique solide (SPE) ou électrolyte solide hybride (HSE), ou encore pour former un électrolyte solide au sein d'une électrode composite.

Le mélange obtenu à l'issue de l'étape (ii) ou (iii) peut être ainsi supplémenté par un ou plusieurs composés annexes choisi(s) au regard de la nature et de la destination de l'électrolyte solide souhaité. En particulier, le ou lesdits composés annexes peuvent être choisis parmi les additifs usuellement mis en oeuvre pour la formulation d'électrolytes solides ou parmi les composés annexes entrant dans la composition d'une électrode composite.

Par exemple, dans le cadre de la préparation d'un électrolyte solide hybride (HSE), le mélange peut être supplémenté par au moins une charge inorganique conductrice du ou des cations alcalin ou alcalino-terreux. Dans le cadre de la préparation d'une électrode composite incorporant l'électrolyte solide, le mélange peut être supplémenté par au moins un matériau actif d'électrode et, éventuellement, un ou plusieurs additifs conducteurs et/ou un ou plusieurs liants.

L'homme du métier est à même de choisir la nature du ou desdits composés annexes au regard de la formulation de l'électrolyte solide souhaité.

Electrolyte solide

Selon une première variante de réalisation, le procédé de l'invention est mis en oeuvre pour former un électrolyte solide, notamment sous la forme d'un film ou d'une membrane d'électrolyte solide, en particulier destiné à une mise en oeuvre comme électrolyte séparateur dans un système électrochimique, en particulier une batterie rechargeable, par exemple une batterie au lithium.

Les électrolytes solides préparés selon l'invention peuvent être de type électrolyte polymérique solide (SPE) ou électrolyte solide hybride (HSE).

Dans le cadre de la formulation d'un électrolyte solide de type HSE, le procédé de l'invention peut comprendre en outre, préalablement à l'évaporation du milieu solvant, l'ajout, au mélange obtenu à l'issue de l'étape (ii) ou (iii), d'au moins une charge inorganique conductrice du ou des cations alcalin ou alcalino-terreux, en particulier une charge inorganique conductrice des ions lithium.

Les charges conductrices d'ions lithium peuvent être par exemple choisies parmi les oxydes lithiés, tels que $Li_7La_3Zr_2O_{12}$ (LLZO) et $Li_{0.33}La_{0.56}TiO_3$ (LLTO), $Li_{1.3}Al_{0.3}Ti_{1.7}(PO_4)_3$ (LATP), etc.

Il peut encore s'agir de charges choisies parmi :

- les grenats, par exemple choisis parmi le $Li_7La_3Zr_2O_{12}$, le $Li_6La_2BaTa_2O_{12}$, etc. ;
- les phosphates lithiés, par exemple choisi parmi le $Li_3PO_4$, le $LiPO_3$, etc. ;
- les borates lithiés, par exemple le $Li_3BO_3$, etc. ;
- les oxynitrures, par exemple choisis parmi $Li_3PO_{4-x}N_{2x/3}$, $Li_4SiO_{4-x}N_{2x/3}$, $Li_4GeO_{4-x}N_{2x/3}$ avec $0<x<4$ ou $Li_3BO_{3-x}Na_{2x/3}$ avec $0<x<3$ ;
- les composés lithiés à base d'oxynitrure de lithium et de phosphore (appelés LiPON) ;
- les silicates, par exemple $Li_2Si_2O_5$.

Selon un mode de réalisation particulier, la charge conductrice d'ions lithium est le LATP. La ou lesdites charges inorganiques conductrices d'ions peuvent être notamment mises en oeuvre dans un rapport volumique charge(s) conductrice(s)/polycarbonate(s) compris entre 20/80 et 80/20, en particulier entre 20/80 et 60/40.

Dans le cadre de la mise en oeuvre du procédé pour former un film d'électrolyte solide, l'étape (iv) peut comprendre plus particulièrement le dépôt dudit mélange obtenu à l'issue de l'étape (ii) ou (iii), éventuellement supplémenté par au moins une charge inorganique conductrice du ou des cations alcalin ou alcalino-terreux, en surface d'un substrat, par exemple par enduction, suivie de l'évaporation du milieu solvant, pour obtenir ledit film d'électrolyte solide, en particulier un film sec d'électrolyte solide.

De préférence, le mélange est dégazé préalablement à son dépôt en surface du substrat, de manière à éliminer l'air et les traces d'hydrogène résultant de la neutralisation du catalyseur par l'hydrure métallique en étape (ii).

L'évaporation peut être opérée sous vide.

L'évaporation peut être par exemple opérée par séchage, par exemple à l'étuve, à une température comprise entre 30 °C et 40 °C, en particulier d'environ 35 °C, notamment pendant une durée comprise entre 8 heures et 24 heures, suivi par un séchage sous vide à une température comprise entre 60 °C et 120 °C, en particulier d'environ 80 °C, notamment pendant une durée comprise entre 24 heures et 72 heures pour éliminer complètement le ou lesdits solvants.

Par film « sec », on entend signifier que le film d'électrolyte solide comprend moins de 0,1 % massique de solvant, en particulier moins de 0,05 % massique et plus particulièrement moins de 0,02 % massique de solvant.

Le substrat à la surface duquel est formé le film d'électrolyte solide est avantageusement un substrat inerte, autrement dit n'interagissant pas avec le mélange mis en oeuvre selon l'invention.

Le substrat peut être de diverses natures. Il peut être en verre, en alumine, en silicone, en polyimide, en polytétrafluoroéthylène (PTFE), en polytéréphtalate d'éthylène (PET), en silicone ou encore en polypropylène.

Le film d'électrolyte solide peut être éventuellement désolidarisé du substrat pour être mis en oeuvre au niveau du système électrochimique auquel il est destiné, en particulier transféré sur au moins une électrode, par exemple sur une électrode composite comportant un électrolyte solide de même nature, à base de polycarbonates, et notamment sur une électrode composite comportant un électrolyte solide préparé selon l'invention.

Selon une variante de réalisation, le film d'électrolyte solide peut être formé directement en surface de l'une des électrodes du système électrochimique, par exemple à la surface d'une électrode composite comprenant un électrolyte solide à base de polycarbonates, en particulier à la surface d'une électrode composite selon l'invention, ou d'une électrode en lithium métallique.

Le film d'électrolyte solide peut présenter par exemple une épaisseur comprise entre 20 et 500 $\mu$m, en particulier entre 20 et 100 $\mu$m et plus particulièrement entre 40 et 60 $\mu$m.

## Electrode composite incorporant un électrolyte solide

Selon une autre variante de réalisation, le procédé de l'invention est mis en oeuvre pour former un électrolyte solide au sein d'une électrode composite, en particulier pour une mise en oeuvre dans un système électrochimique, en particulier une batterie rechargeable, par exemple une batterie au lithium.

Dans le cadre de cette variante de mise en oeuvre, le procédé de l'invention peut comprendre, selon un premier mode de réalisation :

- l'ajout, au mélange obtenu à l'issue de l'étape (ii) ou (iii), d'au moins un matériau actif d'électrode et, éventuellement, d'un ou plusieurs additifs conducteurs électroniques et/ou d'un ou plusieurs liants additionnels ; et
- le dépôt dudit mélange en surface d'un collecteur de courant, suivi de l'évaporation du milieu solvant pour obtenir ladite électrode composite.

En particulier, ce mode de réalisation est mis en oeuvre lorsque le milieu solvant de synthèse des polycarbonates est particulièrement adapté pour la formulation d'une dispersion, appelée « encre » dudit matériau actif d'électrode et, éventuellement, du ou desdits additifs conducteurs électroniques et/ou du ou desdits liants additionnels. C'est le cas notamment lorsque la N-méthyl-2-pyrrolidone (NMP) est utilisée comme solvant de synthèse des polycarbonates en étape (i).

Selon un autre mode de réalisation particulier, la préparation d'une électrode composite comprenant un électrolyte solide selon l'invention peut faire intervenir une étape d'échange de solvant, préalablement à l'ajout dudit matériau actif d'électrode et, éventuellement, du ou desdits additifs conducteurs électroniques et/ou du ou desdits liants additionnels. En particulier, ce mode de réalisation peut être mis en oeuvre lorsque le milieu solvant de synthèse des polycarbonates ne s'avère pas être optimal pour la préparation de l'encre destinée à la formation de l'électrode composite.

La préparation d'une électrode composite incorporant un électrolyte solide selon l'invention peut ainsi comprendre :

- la préparation d'une dispersion, appelée « encre », par ajout à l'électrolyte solide obtenu en étape (iv) à l'issue de l'évaporation du milieu solvant, d'au moins un matériau actif d'électrode, éventuellement d'un ou plusieurs additifs conducteurs électroniques et/ou d'un ou plusieurs liants additionnels ; éventuellement d'une quantité additionnelle de sel(s) de métal alcalin ou alcalino-terreux ; et d'un ou plusieurs solvants, distincts du ou desdits solvants mis en oeuvre pour la ROP en étape (i) ; et
- le dépôt de ladite encre en surface d'un collecteur de courant, suivi de l'évaporation du ou desdits solvants pour obtenir ladite électrode composite.

Le ou lesdits solvants pour la préparation de l'encre peuvent être choisis parmi des solvants organiques ou aqueux, en particulier parmi la N-méthyl-2-pyrrolidone (NMP), l'acétonitrile (ACN), l'eau et leurs mélanges.

Les matériaux actifs pour une électrode composite positive peuvent être par exemple choisis parmi des matériaux d'intercalation du lithium comme des phosphates du lithium, par exemple des composés de formule $Li_xFe_{i-y}M_yPO_4$ où M est choisi dans le groupe consistant en B, Mg, A1, Si, Ca, Ti, V, Cr, Mn, Co, Ni, Cu, Zn, Y, Zr, Nb et Mo, et $0,8 \leq x \leq 1,2$ ; $0 \leq y \leq 0,6$ ; des composés de formule $Li_xMn_{1-y-z}M'_yM''_zPO_4$(LMP) où M' et M" sont différents l'un de l'autre et sont choisis dans le groupe consistant en B, Mg, Al, Si, Ca, Ti, V, Cr, Fe, Co, Ni, Cu, Zn, Y, Zr, Nb et Mo, avec $0,8 \leq x \leq 1,2$ ;

$0 \leq y \leq 0{,}6$ et $0 \leq z \leq 0{,}2$ ; tels que $LiFceC_L$ (LFP), $LiMnPO_4$, $LiMn_yFe_{1-y}PO_4$ avec $0{,}8 \leq x \leq 1{,}2$ ; $0 \leq y \leq 0{,}6$ ; des composés lamellaires, comme l'oxyde de cobalt lithié $LiCoO_2$, l'oxyde de manganèse lithié $LiMn_2O_4$, ou des matériaux à base de lithium-nickel-cobalt-manganèse $LiNi_xMn_yCo_zO_2$ avec x+y+z=1 (aussi appelé NMC), tel que $LiNi_{0.33}Mn_{0.33}Co_{0.33}O_2$ ou $LiNi_{0,6}Mn_{0,2}Co_{0,2}O_2$, ou un matériau à base de $LiNi_xCo_yAl_zO_2$ avec x+y+z=1 (aussi appelé NCA), ou encore des spinelles (par exemple le spinelle $LiNi_{0,5}Mn_{1,5}O_4$). De manière avantageuse, les matériaux actifs pour une électrode positive sont choisis parmi du $LiNi_{0,6}Mn_{0,2}Co_{0,2}O_2$ (cathodes NCM) ou du $LiCoC_2$, de préférence du $LiNi_{0,6}Mn_{0,2}Co_{0,2}O_2$ (NMC622).

Les matériaux actifs pour une électrode composite négative peuvent être par exemple du carbone, du graphite, de l'oxyde de titane lithié ($Li_4Ti_5O_{12}$) ou de l'oxyde de titane et de niobium ($TiNb_2O_7$). Il peut également s'agir de matériaux à base de silicium ou à base de lithium ou de sodium, ou à base d'étain et de leurs alliages.

Les additifs conducteurs électroniques sont mis en oeuvre pour améliorer la conductivité électronique de l'électrode. Ils peuvent être choisis par exemple parmi des fibres de carbone, du noir de carbone, des nanotubes de carbone et leurs mélanges.

Un ou plusieurs liants additionnels, distincts du ou desdits polycarbonates mis en oeuvre selon l'invention, peuvent être ajoutés pour améliorer la cohésion des différents composants de l'électrode composite, sa tenue mécanique sur le collecteur de courant ou encore ses propriétés de flexibilité. Les liants additionnels peuvent être choisis parmi des liants fluorés, par exemple le polytétrafluoroéthylène (PTFE), le polyfluorure de vinylidène (PVDF), les polysaccharides ou les latex notamment de type caoutchouc styrène-butadiène (SBR ou en langue anglaise « styrene-butadiene rubber »).

De préférence, le mélange est dégazé préalablement à son dépôt en surface du collecteur de courant, de manière à éliminer l'air et les traces d'hydrogène résultant de la neutralisation du catalyseur par l'hydrure métallique en étape (ii).

Le collecteur de courant peut être notamment en aluminium, cuivre, nickel ou fer. Il permet la circulation des électrons, et donc la conduction électronique, dans le circuit extérieur. Il peut s'agir par exemple d'une feuille d'aluminium éventuellement revêtue de carbone.

Le dépôt de l'encre à la surface du collecteur de courant peut être réalisé par un procédé d'enduction classique, par exemple, avec une racle, éventuellement avec un système de transfert à épaisseur contrôlée, ou par un système d'enduction par filière en forme de fente. L'évaporation du milieu solvant peut être opérée par séchage, par exemple à l'étuve, à une température comprise entre 50 °C et 120 °C, en particulier d'environ 60 °C, notamment pendant une durée comprise entre 8 heures et 24 heures, suivi par un séchage sous vide à une température comprise entre 60 °C et 120 °C, en particulier d'environ 80 °C, notamment pendant une durée comprise entre 24 heures et 72 heures pour éliminer complètement le ou lesdits solvants.

La couche d'électrode composite incorporant l'électrolyte solide, ainsi obtenue à l'issue de l'élimination du ou des solvants, adhère au collecteur de courant.

L'électrode composite peut plus particulièrement comprendre de 5 à 30 % en poids de (co)polycarbonate(s) selon l'invention, en particulier entre 10 et 25 % en poids et plus particulièrement de 12 à 20 % en poids de (co)polycarbonate(s), par rapport au poids de l'électrode.

Le poids de l'électrode composite s'entend du poids des différents composants de l'électrode (électrolyte solide, matériau(x) actif(s) d'électrode, éventuellement additif(s) conducteur(s) électronique(s) et liant(s) additionnel(s)), hors conducteur de courant, et une fois le ou lesdits solvants du mélange évaporé(s). On parle également de poids sec.

Ainsi, le reste de l'électrode composite peut être plus particulièrement formé d'un ou plusieurs matériau(x) actif(s), de préférence d'au moins un additif conducteur électronique et éventuellement d'un ou plusieurs liants additionnels.

Le ou lesdits matériaux actifs peuvent représenter de 60 à 95 % en poids, en particulier de 70 à 90 % en poids, du poids total de l'électrode.

Le ou lesdits additifs conducteurs, lorsqu'ils sont présents, peuvent être mis en oeuvre de préférence en une teneur allant de 1 à 10 % en poids, en particulier de 2 à 8 % en poids, par rapport au poids de l'électrode composite.

Le ou lesdits liants additionnels, lorsqu'ils sont présents, peuvent être mis en oeuvre en une teneur allant de 2 à 7 % en poids, en particulier de 3 à 5 % en poids, par rapport au poids total de l'électrode composite.

L'électrode composite incorporant un électrolyte solide formé selon l'invention peut présenter une épaisseur comprise entre 10 $\mu$m et 400 $\mu$m, en particulier entre 10 $\mu$m et 250 $\mu$m.

**SYSTEME ELECTROCHIMIQUE**

Comme indiqué précédemment, l'électrolyte solide obtenu selon l'invention, notamment de type SPE ou HSE et/ou l'électrode composite incorporant un électrolyte solide obtenue selon l'invention, peu(ven)t être avantageusement mis en oeuvre dans un système électrochimique. L'invention concerne, selon un autre de ses aspects, un ensemble électrode/membrane électrolytique, dans lequel ladite électrode est une électrode composite préparée selon le procédé de l'invention et/ou ladite membrane électrolytique est un film d'électrolyte solide, notamment de type électrolyte polymérique solide ou électrolyte solide hybride, préparé selon le procédé de l'invention.

Elle concerne encore un système électrochimique comprenant au moins un film d'électrolyte solide tel qu'obtenu selon l'invention, notamment de type SPE ou HSE, et/ou au moins une électrode composite comprenant un électrolyte solide obtenue selon l'invention.

Le système électrochimique peut être un système générateur, convertisseur ou de stockage électrochimique, par exemple, une batterie primaire ou secondaire, par exemple une batterie au lithium, sodium, magnésium, potassium ou calcium ; d'une batterie à flux (« redox flow battery » en terminologie anglo-saxonne) ; d'un accumulateur lithium-air, lithium-soufre. Selon un mode de réalisation particulier, l'électrolyte solide est mis en oeuvre dans une batterie rechargeable, en particulier dans une batterie au lithium, notamment une batterie lithium-ion ou lithium-métal.

Un système électrochimique selon l'invention comporte, d'une manière générale, au moins une électrode positive et une électrode négative entre lesquelles se trouve un électrolyte, dit électrolyte séparateur, agissant comme conducteur ionique entre les électrodes positive et négative.

En particulier, l'électrolyte solide préparé selon l'invention peut former le film d'électrolyte séparateur dans le système électrochimique.

De manière avantageuse, au moins l'une des électrodes du système électrochimique est une électrode composite incorporant un électrolyte solide de même nature que l'électrolyte séparateur.

L'électrode composite incorporant un électrolyte solide à base de polycarbonates peut être obtenue selon le procédé de l'invention, comme c'est le cas des électrodes composites préparées en exemple 4.

Alternativement, elle peut être obtenue à partir de polycarbonates synthétisés *via* d'autres voies de synthèse conventionnelles. En particulier, elle peut être formée en surface d'un collecteur de courant *via* au moins les étapes suivantes :

- préparation d'une encre comprenant, dans un ou plusieurs solvants, au moins un polycarbonate, par exemple synthétisé par ROP en mettant en oeuvre l'acide méthane sulfonique (MSA) comme catalyseur ou sans catalyseur sous irradiation par micro-ondes et dont les fonctions hydroxyles en bout de chaîne sont protégées par réaction avec un agent de protection choisi parmi les chlorures d'acyle, les anhydrides d'acide et les isocyanates, au moins un sel de métal alcalin ou alcalino-terreux, en particulier un sel de lithium, par exemple LiTFSI ; au moins un matériau actif d'électrode, et éventuellement au moins un additif conducteur électronique et/ou au moins un liant additionnel, tels que décrits précédemment ; et
- formation à partir de ladite encre, en surface d'un collecteur de courant, de ladite électrode composite, en particulier par dépôt de l'encre à la surface du collecteur de courant, en particulier par enduction, notamment par enduction à la racle ; suivie de l'évaporation du ou desdits solvant(s) de l'encre pour former le film d'électrode.

L'électrode composite, en particulier obtenue selon le procédé de l'invention, peut former l'électrode positive et/ou l'électrode négative du système électrochimique. Elle peut former par exemple l'électrode positive.

Dans le cas particulier d'une batterie lithium métal, l'électrode composite est l'électrode positive, l'électrode négative étant en lithium métallique.

Dans les autres cas de batteries, l'électrode positive et l'électrode négative peuvent de préférence être toutes deux des électrodes composites selon l'invention.

L'électrode différente d'une électrode composite, éventuellement mise en oeuvre conjointement à une électrode composite dans un système électrochimique, peut être de nature conventionnelle.

Comme indiqué précédemment, un système électrochimique selon l'invention peut comprendre une électrode composite incorporant un électrolyte solide préparée selon l'invention.

Dans ce cas, l'électrolyte séparateur entre ladite électrode composite formée selon le procédé de l'invention et ladite deuxième électrode d'un système électrochimique selon l'invention peut être de diverses natures. Il s'agit de préférence d'un film d'électrolyte solide.

De préférence, l'électrolyte séparateur solide est de même nature que l'électrolyte solide incorporé au niveau de l'électrode composite selon l'invention mise en oeuvre pour le système électrochimique.

Autrement dit, l'électrolyte séparateur peut être un film d'électrolyte solide, en particulier de type SPE ou HSE, à base d'un ou plusieurs polycarbonates tels qu'incorporés au niveau de l'électrolyte solide de ladite électrode composite.

Le film d'électrolyte solide peut être avantageusement obtenu selon un procédé de l'invention tel que décrit précédemment.

Alternativement, il peut être obtenu à partir de polycarbonates synthétisés *via* d'autres voies de synthèse conventionnelles. En particulier, il peut être formé en surface d'un substrat *via* au moins les étapes suivantes :

- mélange, en présence ou non d'un milieu solvant, d'un ou plusieurs polycarbonates, avec au moins un sel de métal alcalin ou alcalino-terreux, en particulier un sel de lithium et, éventuellement, au moins une charge inorganique conductrice du ou des cations alcalin ou alcalino-terreux, en particulier une charge inorganique conductrice des

ions lithium ; et

- formation, en surface d'un substrat, d'un film d'électrolyte solide.

Le film d'électrolyte solide peut être notamment formé directement en surface de l'une des électrodes du système électrochimique, par exemple à la surface d'une électrode composite selon l'invention ou de l'électrode en lithium métallique. Par exemple, il peut être formé par enduction du mélange tel que décrit précédemment en surface de l'une des électrodes, par exemple en surface de l'électrode composite, suivie de l'évaporation du ou desdits solvants.

L'invention va maintenant être décrite au moyen des exemples suivants, donnés bien entendu à titre illustratif et non limitatif de l'invention.

## Exemple

Dans les exemples qui suivent, les produits suivants sont utilisés.

Pour la synthèse des (co)polymères :

Le triméthylène carbonate (TMC, 99,5 %, Actu-All Chemicals) est séché sous vide à 40 °C avant son utilisation. L'$\varepsilon$-caprolactone (CL, 97 %) ; le 3-phénylpropanol (PPA, 98 %) ; l'éthylène glycol (EG, 99,8%) ; l'octanoate stanneux ($Sn(Oct)_2$, 92,5-100%) ; l'acide bis(trifluorométhanesulfonyl)imide (HTFSI, > 95%), l'acide trifluorométhanesulfonique (HTFSA, >99%) ; l'hydrure de lithium (LiH, 95%), commercialisés par Sigma Aldrich, sont utilisés tels quels. Le dichlorométhane (DCM, HPLC grade, Sigma Aldrich) ; le méthanol (MeOH, HPLC grade), commercialisés par Sigma Aldrich, sont utilisés tels quels.

Pour la préparation des électrolytes :

Le bis(trifluorométhanesulonyl)imide de lithium (LiTFSI, 99,9 %, Sigma Aldrich) ; le trifluorométhanesulfonate de lithium (LiTFSA, 99,995%, Sigma Aldrich), sont séchés sous vide pendant 72 heures et stockés dans une boîte à gants remplie avec de l'argon. L'acétone anhydre ($\geq$ 99,8 %), l'acétonitrile anhydre (HPCL grade, $\geq$ 99,9 %), commercialisés par Sigma Aldrich, sont utilisés tels quels. Le céramique conducteur type NASICON $Li_{1,3}Al_{0,3}Ti_{1,7}P_3O_{12}$ (LATP), commercialisé par SCHOTT AG, est utilisé tel quel sauf indication contraire.

Pour la préparation des électrodes :

L'oxyde de lithium-nickel-cobalt-manganèse $LiNi_{0,6}Mn_{0,2}Co_{0,2}O_2$ (NMC622) fourni par Umicore est séché à 120 °C sous vide pendant 12 heures et stocké dans une boîte à gants remplie avec de l'argon. Le noir de carbone C65 (Super P), commercialisé par MTI Corporation, est utilisé tel quel. PVdF (Solef® 5130), commercialisé par Solvay, est séché à 60 °C sous vide avant l'utilisation. Le N-méthyl-2-pyrrolidone (NMP), commercialisé par Sigma Aldrich, est utilisé tel quel.

## Exemple 1

### Formulation des électrolytes à base du PTMC et copolymère sans l'ajout du sel de lithium

### 1.1. Formulation des électrolytes polymériques solides (SPEs) à base du PTMC mettant en oeuvre l'acide HTFSI comme catalyseur sans l'ajout du sel de lithium

Le protocole suivant est suivi pour la synthèse par ROP, mettant en oeuvre le catalyseur HTFSI et initiée par un mono-alcool (le 3-phénylpropanol, PPA), de PTMC, de masse moléculaire théorique de 10 000 $g.mol^{-1}$, et la formulation directe de l'électrolyte après la synthèse.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Le DCM (20 mL) est ensuite ajouté pour dissoudre le TMC. La concentration en monomère est d'environ 5 M. Une fois le TMC complément dissous, l'initiateur PPA (136,7 $\mu$L, 1,01 mmol, 1 équiv.) est introduit dans le milieu réactionnel. Ensuite, le catalyseur HTFSI (1,836 g, 6,53 mmol, 6,44 équiv.) dissous dans 5 mL du DCM est introduit dans le même milieu réactionnel. Le rapport molaire monomère/catalyseur, noté [CO]/[HTFSI], est 15. Le mélange réactionnel est mélangé pendant 24-48 heures à température ambiante.

Après, le LiH (0,0630 g, 7,92 mmol, 7,81 équiv.), 5% mol en excès par rapport au catalyseur et à l'initiateur, est ajouté sous forte agitation pour neutraliser l'acide HTFSI et les fonctions OH au bout des chaînes du PTMC. Le ratio molaire entre les groupes carbonyle du polymère par rapport au sel de lithium LiTFSI, noté [CO]/[LiTFSI], est 15. Après 12 heures, le mélange a été dégazé, enduit sur des substrats, et séché à l'étuve à 35 °C pendant 8 heures, suivi par un séchage sous vide à 80 °C pendant au moins 72 heures pour obtenir l'électrolyte solide, nommé « SI10PPA1-TFSI15 ».

Le même protocole ci-dessus est utilisé pour la synthèse d'électrolytes polymériques solides à base de polymères PTMC de masse moléculaire théorique d'environ 10 000 $g.mol^{-1}$, avec les rapports molaires [CO]/[HTFSI] de 5 ; 10 et 30, notés « SI10PPA1-TFSI5 », « SI10PPA1-TFSI10 » et « SI10PPA1-TFSI30 », respectivement.

Le même protocole ci-dessus est utilisé pour la synthèse d'un électrolyte polymérique solide à base de polymère

PTMC de masse moléculaire théorique d'environ 50 000 g.mol$^{-1}$ avec le rapport molaire [CO]/[HTFSI] de 15, noté « SI50PPA1-TFSI15 ».

La procédure de préparation des électrolytes polymériques solides (SPEs) à base du PTMC mettant en oeuvre l'acide HTFSI comme catalyseur sans l'ajout du sel de lithium est schématisée en figure 1.

## 1.2. Formulation des électrolytes polymériques solides (SPEs) à base du copolymère PTMC-PCL mettant en oeuvre l'acide HTFSI comme catalyseur sans l'ajout du sel de lithium

Le protocole suivant est suivi pour la synthèse par ROP, mettant en oeuvre le catalyseur HTFSI et initiée par un mono-alcool (le 3-phénylpropanol, PPA), de copolymère PTMC-PCL, de masse moléculaire théorique de 10 000 g.mol$^{-1}$ et la formulation directe de l'électrolyte après la synthèse.

Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon. Ensuite, du DCM (20 mL) est ajouté pour dissoudre le TMC. La concentration en monomères est d'environ 5 M. Une fois le TMC complément dissous, l'initiateur PPA (136,0 $\mu$E, 1,01 mmol, 1 équiv.) est introduit dans le milieu réactionnel. Ensuite, le catalyseur HTFSI (1,745 g, 6,21 mmol, 6,15 équiv.) dissous dans 5 mL du DCM est introduit dans le même milieu réactionnel. Le rapport molaire monomère/catalyseur, noté [CO]/[HTFSI], est 15. Le mélange réactionnel est mélangé pendant 24-48 heures à température ambiante.

Après, le LiH (0,0602 g, 7,57 mmol, 7,51 équiv.), 5% en excès par rapport au catalyseur et à l'initiateur, est ajouté sous forte agitation pour neutraliser l'acide HTFSI et les fonctions OH en bout des chaînes du copolymère. Le ratio molaire entre les groupes carbonyle du polymère par rapport au sel de lithium LiTFSI, noté [CO]/[LiTFSI], est 15. Après 12 heures, le mélange a été dégazé, enduit sur des substrats, et séché à l'étuve à 60 °C pendant 8 heures, suivi par un séchage sous vide à 80 °C pendant au moins 72 heures pour obtenir les électrolytes solides, nommé « I10PPA1-TFSI15 ».

Le même protocole ci-dessus est utilisé pour la synthèse d'électrolytes polymériques solides à base de copolymères PTMC-PCL de masse moléculaire théorique d'environ 10 000 g.mol$^{-1}$, avec les rapports molaires [CO]/[HTFSI] de 5 ; 10 et 30, notés « I10PPA1-TFSI5 », « I10PPA1-TFSI10 » et « I10PPA1-TFSI30 », respectivement.

Le même protocole ci-dessus est utilisé pour la synthèse d'un électrolyte polymérique solide à base d'un copolymère PTMC-PCL de masse moléculaire théorique d'environ 50 000 g.mol$^{-1}$ avec le rapport molaire [CO]/[HTFSI] de 15, noté « I50PPA1-TFSI15 ».

La procédure de préparation des électrolytes polymériques solides (SPEs) à base du copolymère PTMC-PCL mettant en oeuvre l'acide HTFSI comme catalyseur sans l'ajout du sel de lithium est schématisée en figure 2.

## 1.3. Formulation des électrolytes solides hybrides (HSEs) à base du PTMC mettant en oeuvre l'acide HTFSI comme catalyseur sans l'ajout du sel de lithium

Le protocole suivant est suivi pour la synthèse par ROP, mettant en oeuvre le catalyseur HTFSI et initiée par un mono-alcool (le 3-phénylpropanol, PPA), de PTMC, de masse moléculaire théorique de 10 000 g.mol$^{-1}$ et la formulation directe de l'électrolyte après la synthèse.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Le DCM (20 mL) est ensuite ajouté pour dissoudre le TMC. La concentration en monomère est d'environ 5 M. Une fois le TMC complément dissous, l'initiateur PPA (136,7 $\mu$L, 1,01 mmol, 1 équiv.) est introduit dans le milieu réactionnel. Ensuite, le catalyseur HTFSI (1,836 g, 6,53 mmol, 6,44 équiv.) dissous dans 5 mL du DCM est introduit dans le milieu réactionnel. Le rapport molaire monomère/catalyseur, noté [CO]/[HTFSI], est 15. Le mélange réactionnel est mélangé pendant 24-48 heures à température ambiante.

Après, le LiH (0,0630 g, 7,92 mmol, 7,81 équiv.), 5% en excès par rapport au catalyseur et à l'initiateur, est ajouté sous forte agitation pour neutraliser l'acide HTFSI et les fonctions OH au bout des chaînes du PTMC. Le ratio molaire entre les groupes carbonyle du polymère par rapport au sel de lithium LiTFSI, noté [CO]/[LiTFSI], est 15. Après 12 heures, le céramique LATP (7,147 g, environ 20 % volumique par rapport au volume total de l'électrolyte) est ajouté et le mélange est mélangé en utilisant un mélangeur tubulaire pendant 4 heures pour obtenir une suspension homogène. La suspension est dégazée, enduite sur les substrats, et séchée à l'étuve à 35 °C pendant 8 heures, suivi par un séchage sous vide à 80 °C pendant au moins 72 heures pour obtenir l'électrolyte solide hybride, noté « SI10PPA1-TFSI15-LATP20 ».

Le même protocole ci-dessus est utilisé pour la synthèse d'électrolytes solides hybrides sà base de polymères PTMC de masse moléculaire théorique d'environ 10 000 g.mol$^{-1}$, avec les rapports molaires [CO]/[HTFSI] de 5 ; 10 et 30, notés « SI10PPA1-TFSI5-LATP20 », « SI10PPA1-TFSI10-LATP20 » et « SI10PPA1-TFSI30-LATP20 », respectivement.

Le même protocole ci-dessus est utilisé pour la synthèse d'un électrolyte solide hybride à base d'un polymère PTMC de masse moléculaire théorique d'environ 50 000 g.mol$^{-1}$ avec le rapport molaire [CO]/[HTFSI] de 15, noté « SI50PPA1-TFSI15-LATP20 ».

La procédure de préparation des électrolytes solides hybrides (HSEs) à base du PTMC mettant en oeuvre l'acide HTFSI comme catalyseur sans l'ajout du sel de lithium est schématisée en figure 3.

1.4. Formulation des électrolytes solides hybrides (HSEs) à base du copolymère PTMC-**PCL mettant en oeuvre l'acide HTFSI comme catalyseur sans l'ajout du sel de lithium**

Le protocole suivant est suivi pour la synthèse par ROP, mettant en oeuvre le catalyseur HTFSI et initiée par un mono-alcool (le 3-phénylpropanol, PPA), de copolymère PTMC-PCL, de masse moléculaire théorique de 10 000 g.mol$^{-1}$ et la formulation directe de l'électrolyte après la synthèse.

Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon. Ensuite, du DCM (20 mL) est ajouté pour dissoudre le TMC. La concentration en monomères est d'environ 5 M. Une fois le TMC complément dissous, l'initiateur PPA (136,0 µL, 1,01 mmol, 1 équiv.) est introduit dans le milieu réactionnel. Ensuite, le catalyseur HTFSI (1,745 g, 6,21 mmol, 6,15 équiv.) dissous dans 5 mL du DCM est introduit dans le même milieu réactionnel. Le rapport molaire monomère/catalyseur, noté [CO]/[HTFSI], est 15. Le mélange réactionnel est mélangé pendant 24-48 heures à température ambiante.

Après, le LiH (0,0602 g, 7,57 mmol, 7,51 équiv.), 5% en excès par rapport au catalyseur et à l'initiateur, est ajouté sous forte agitation pour neutraliser l'acide HTFSI et les fonctions OH au bout des chaînes du copolymère. Le ratio molaire entre les groupes carbonyle du polymère par rapport au sel de lithium LiTFSI, noté [CO]/[LiTFSI], est 15. Après 12 heures, le céramique LATP (7,101 g, environ 20% volumique par rapport au volume total de l'électrolyte) est ajouté et le mélange est mélangé en utilisant un mélangeur tubulaire pendant 4 heures pour obtenir une suspension homogène. La suspension est dégazée, enduit sur les substrats, et séchée à l'étuve à 60 °C pendant 8 heures, suivi par un séchage sous vide à 80 °C pendant au moins 72 heures pour obtenir l'électrolyte solide hybride, noté « I10PPA1-TFSI15-LATP20 ».

Le même protocole ci-dessus est utilisé pour la synthèse d'électrolyte solide hybride à base de copolymères PTMC-PCL de masse moléculaire théorique d'environ 10 000 g.mol$^{-1}$, avec les rapports molaires [CO]/[HTFSI] de 5 ; 10 et 30, noté « I10PPA1-TFSI5-LATP20 », « I10PPA1-TFSI10-LATP20 » et « I10PPA1-TFSI30-LATP20 », respectivement.

Le même protocole ci-dessus est utilisé pour la synthèse d'un électrolyte solide hybride à base d'un polymère PTMC de masse moléculaire théorique d'environ 50 000 g.mol$^{-1}$ avec le rapport molaire [CO]/[HTFSI] de 15, noté « I50PPA1-TFSI15-LATP20 ».

La procédure de préparation des électrolytes solides hybrides (HSEs) à base de copolymères PTMC-PCL mettant en oeuvre l'acide HTFSI comme catalyseur sans l'ajout du sel de lithium est schématisée en figure 4.

**Exemple 2**

**Formulation des électrolytes à base du PTMC et copolymère PTMC-PCL avec l'ajout d'un sel de lithium**

**2.1. Formulation des électrolytes polymériques solides (SPEs) à base du PTMC mettant en oeuvre l'acide HTFSI comme catalyseur avec l'ajout d'un sel de lithium**

Le protocole suivant est suivi pour la synthèse par ROP, mettant en oeuvre le catalyseur HTFSI et initiée par un mono-alcool (le 3-phénylpropanol, PPA), de PTMC, de masse moléculaire théorique de 10 000 g.mol$^{-1}$ et la formulation directe de l'électrolyte après la synthèse.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Le DCM (20 mL) est ensuite ajouté pour dissoudre le TMC. La concentration en monomère est d'environ 5 M. Une fois le TMC complément dissous, l'initiateur PPA (136,7 µL, 1,01 mmol, 1 équiv.) est introduit dans le milieu réactionnel. Ensuite, le catalyseur HTFSI (0,285 g, 1,01 mmol, 1 équiv.) dissous dans 1 mL du DCM est introduit dans le milieu réactionnel. Le rapport molaire amorceur/catalyseur, noté [PPA]/[HTFSI], est 1. Le mélange réactionnel est mélangé pendant 24-48 heures à température ambiante.

Après, le LiH (0,0169 g, 2,13 mmol, 2,1 équiv.), 5% en excès par rapport au catalyseur et l'amorceur, est ajouté sous forte agitation pour neutraliser l'acide HTFSI et les fonctions OH au bout des chaînes du PTMC. Après 12 heures, le sel LiTFSI (1,584 g, 5,52 mmol) est ajouté. Le ratio molaire entre les groupes carbonyle du polymère par rapport au sel de lithium LiTFSI, noté [CO]/[LiTFSI], est 15. Le mélange a été dégazé, enduit sur des substrats, et séché à l'étuve

à 60 °C pendant 8 heures, suivi par un séchage sous vide à 80 °C pendant au moins 72 heures pour obtenir l'électrolyte solide, nommé « SI10PPA2-TFSI15 ».

Le même protocole ci-dessus est utilisé pour la synthèse d'électrolytes polymériques solides à base de polymères PTMC de masse moléculaire théorique d'environ 10 000 $g.mol^{-1}$, avec les rapports molaires [CO]/[LiTFSI] de 5 ; 10 et 30, notés « SI10PPA2-TFSI5 », « SI10PPA2-TFSI10 » et « SI10PPA2-TFSI30 », respectivement.

Le même protocole ci-dessus est utilisé pour la synthèse d'un électrolyte polymérique solide à base d'un polymère PTMC de masse moléculaire théorique d'environ 50 000 $g.mol^{-1}$ avec le rapport molaire [CO]/[LiTFSI] de 15, noté « SI50PPA2-TFSI15 ».

La procédure de préparation des électrolytes polymériques solides (SPEs) à base du PTMC mettant en oeuvre l'acide HTFSI comme catalyseur avec l'ajout du sel de lithium est schématisée en figure 5.

## 2.2. Formulation des électrolytes polymériques solides (SPEs) à base du copolymère PTMC-PCL mettant en oeuvre l'acide HTFSI comme catalyseur avec l'ajout du sel de lithium

Le protocole suivant est suivi pour la synthèse par ROP, mettant en oeuvre le catalyseur HTFSI et initiée par un mono-alcool (le 3-phénylpropanol, PPA), de copolymère PTMC-PCL, de masse moléculaire théorique de 10 000 $g.mol^{-1}$ et la formulation directe de l'électrolyte après la synthèse.

Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon. Ensuite, du DCM (20 mL) est ajouté pour dissoudre le TMC. La concentration en monomères est d'environ 5 M. Une fois le TMC complément dissous, l'initiateur PPA (136,0 μL, 1,01 mmol, 1 équiv.) est introduit dans le milieu réactionnel. Ensuite, le catalyseur HTFSI (0,284 g, 1,01 mmol, 1 équiv.) dissous dans 1 mL du DCM est introduit dans le même milieu réactionnel. Le rapport molaire amorceur/catalyseur, noté [PPA]/[HTFSI], est 1. Le mélange réactionnel est mélangé pendant 24-48 heures à température ambiante.

Après, le LiH (0,0168 g, 2,12 mmol, 2,1 équiv.), 5% en excès par rapport au catalyseur et à l'initiateur est ajouté sous forte agitation pour neutraliser l'acide HTFSI et les fonctions OH au bout des chaînes du copolymère. Après 12 heures, le sel LiTFSI (1,492 g, 5,20 mmol) est ajouté. Le ratio molaire entre les groupes carbonyle du polymère par rapport au sel de lithium LiTFSI, noté [CO]/[LiTFSI], est 15. Le mélange a été dégazé, enduit sur des substrats, et séché à l'étuve à 60 °C pendant 8 heures, suivi par un séchage sous vide à 80 °C pendant au moins 72 heures pour obtenir l'électrolyte solide, nommé « I10PPA2-TFSI15 ».

Le même protocole ci-dessus est utilisé pour la synthèse d'électrolytes polymériques solides à base de copolymères PTMC-PCL de masse moléculaire théorique d'environ 10 000 $g.mol^{-1}$, avec les rapports molaires [CO]/[LiTFSI] de 5 ; 10 et 30, notés « I10PPA2-TFSI5 », « I10PPA2-TFSI10 » et « I10PPA2-TFSI30 », respectivement.

Le même protocole ci-dessus est utilisé pour la synthèse d'un électrolyte polymérique solide à base de polymère PTMC-PCL de masse moléculaire théorique d'environ 50 000 $g.mol^{-1}$ avec le rapport molaire [CO]/[LiTFSI] de 15, noté « I50PPA2-TFSI15 ».

La procédure de préparation des électrolytes polymériques solides (SPEs) à base du copolymère PTMC-PCL mettant en oeuvre l'acide HTFSI comme catalyseur avec l'ajout du sel de lithium est schématisée en figure 6.

## 2.3. Formulation des électrolytes solides hybrides (HSEs) à base du PTMC mettant en oeuvre l'acide HTFSI comme catalyseur avec l'ajout du sel de lithium

Le protocole suivant est suivi pour la synthèse par ROP, mettant en oeuvre le catalyseur HTFSI et initiée par un mono-alcool (le 3-phénylpropanol, PPA), de PTMC, de masse moléculaire théorique de 10 000 $g.mol^{-1}$ et la formulation directe de l'électrolyte après la synthèse.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Le DCM (20 mL) est ensuite ajouté pour dissoudre le TMC. La concentration en monomère est d'environ 5 M. Une fois le TMC complément dissous, l'initiateur PPA (136,7 μL, 1,01 mmol, 1 équiv.) est introduit dans le milieu réactionnel. Ensuite, le catalyseur HTFSI (0,285 g, 1,01 mmol, 1 équiv.) dissous dans 1 mL du DCM est introduit dans le milieu réactionnel. Le rapport molaire amorceur/catalyseur, noté [PPA]/[HTFSI], est 1. Le mélange réactionnel est mélangé pendant 24-48 heures à température ambiante.

Après, le LiH (0,0169 g, 2,13 mmol, 2,1 équiv.), 5% en excès par rapport au catalyseur et à l'initiateur, est ajouté sous forte agitation pour neutraliser l'acide HTFSI et les fonctions OH au bout des chaînes du PTMC. Après 12 heures, le sel LiTFSI (1,584 g, 5,52 mmol) est ajouté. Le ratio molaire entre les groupes carbonyle du polymère par rapport au sel de lithium LiTFSI, noté [CO]/[LiTFSI], est 15. Ensuite, le céramique LATP (7,147 g, environ 20% volumique par rapport au volume total de l'électrolyte) est ajouté et le mélange est mélangé en utilisant un mélangeur tubulaire pendant 4 heures pour obtenir une suspension homogène. La suspension est dégazée, enduit sur les substrats, et

séchée à l'étuve à 60 °C pendant 8 heures, suivi par un séchage sous vide à 80 °C pendant au moins 72 heures pour obtenir l'électrolyte solide hybride, noté « S110PPA2-TFSI15-LATP20 ».

Le même protocole ci-dessus est utilisé pour la synthèse d'électrolytes solides hybrides à base de polymères PTMC de masse moléculaire théorique d'environ 10 000 $g.mol^{-1}$, avec les rapports molaires [CO]/[LiTFSI] de 5 ; 10 et 30, notés « SI10PPA2-TFSI5-LATP20 », « SI10PPA2-TFSI10-LATP20 » et « SI10PPA2-TFSI30-LATP20 », respectivement.

Le même protocole ci-dessus est utilisé pour la synthèse d'un électrolyte solide hybride à base d'un polymère PTMC de masse moléculaire théorique d'environ 50 000 $g.mol^{-1}$ avec le rapport molaire [CO]/[LiTFSI] de 15, noté « SI50PPA2-TFSI15-LATP20 ».

La procédure de préparation des électrolytes solides hybrides (HSEs) à base du PTMC mettant en oeuvre l'acide HTFSI comme catalyseur avec l'ajout du sel de lithium est schématisée en figure 7.

### 2.4. Formulation des électrolytes solides hybrides (HSEs) à base du copolymère PTMC-PCL mettant en oeuvre l'acide HTFSI comme catalyseur avec l'ajout du sel de lithium

Le protocole suivant est suivi pour la synthèse par ROP, mettant en oeuvre le catalyseur HTFSI et initiée par un mono-alcool (le 3-phénylpropanol, PPA), de copolymère PTMC-PCL, de masse moléculaire théorique de 10 000 $g.mol^{-1}$ et la formulation directe de l'électrolyte après la synthèse.

Les monomères TMC (5,702 g ; 55,85 mmol, 55,36 équivalents) et CL (4,250 g, 37,23 mmol, 36,91 équiv.) sont introduits dans un ballon à fond rond à deux cols de 100 mL équipé d'un agitateur magnétique, d'un condenseur et d'une entrée/sortie d'argon. Ensuite, du DCM (20 mL) est ajouté pour dissoudre le TMC. La concentration en monomères est d'environ 5 M. Une fois le TMC complément dissous, l'initiateur PPA (136,0 µL, 1,01 mmol, 1 équiv.) est introduit dans le milieu réactionnel. Ensuite, le catalyseur HTFSI (0,284 g, 1,01 mmol, 1 équiv.) dissous dans 1 mL du DCM est introduit dans le même milieu réactionnel. Le rapport molaire amorceur/catalyseur, noté [PPA]/[HTFSI], est 1. Le mélange réactionnel est mélangé pendant 24-48 heures à température ambiante.

Après, le LiH (0,0168 g, 2,12 mmol, 2,1 équiv.), 5% en excès par rapport au catalyseur et à l'initiateur, est ajouté sous forte agitation pour neutraliser l'acide HTFSI et les fonctions OH au bout des chaînes du copolymère. Après 12 heures, le sel LiTFSI (1,492 g, 5,20 mmol) est ajouté. Le ratio molaire entre les groupes carbonyle du polymère par rapport au sel de lithium LiTFSI, noté [CO]/[LiTFSI], est 15. Ensuite, le céramique LATP (7,101 g, environ 20% volumique par rapport au volume total de l'électrolyte) est ajouté et le mélange est mélangé en utilisant un mélangeur tubulaire pendant 4 heures pour obtenir une suspension homogène.

La suspension est dégazée, enduit sur les substrats, et séchée à l'étuve à 60 °C pendant 8 heures, suivi par un séchage sous vide à 80 °C pendant au moins 72 heures pour obtenir l'électrolyte solide hybride, noté « I10PPA2-TFSI15-LATP20 ».

Le même protocole ci-dessus est utilisé pour la synthèse d'électrolytes solides hybrides à base de copolymères PTMC-PCL de masse moléculaire théorique d'environ 10 000 $g.mol^{-1}$, avec les rapports molaires [CO]/[LiTFSI] de 5 ; 10 et 30, notés « I10PPA2-TFSI5-LATP20 », « I10PPA2-TFSI10-LATP20 » et « I10PPA2-TFSI30-LATP20 », respectivement.

Le même protocole ci-dessus est utilisé pour la synthèse d'un électrolyte solide hybride à base de copolymère PTMC-PCL de masse moléculaire théorique d'environ 50 000 $g.mol^{-1}$ avec le rapport molaire [CO]/[LiTFSI] de 15, noté « I50PPA2-TFSI15-LATP20 ».

La procédure de préparation des électrolytes solides hybrides (HSEs) à base de copolymère PTMC-PCL mettant en oeuvre l'acide HTFSI comme catalyseur avec l'ajout du sel de lithium est schématisée en figure 8.

## Exemple 3 (comparatif)

### Préparation d'un électrolyte polymérique solide à base de PTMC synthétisé par ROP mettant en oeuvre $Sn(Oct)_2$ comme catalyseur

A titre de comparaison, le protocole suivant est suivi pour la synthèse par ROP, mettant en oeuvre le catalyseur $Sn(Oct)_2$ et initiée par un mono-alcool (le PPA), de PTMC, de masse moléculaire théorique de 10 000 $g.mol^{-1}$ et la préparation d'un électrolyte polymérique solide à base de PTMC obtenu avec un rapport molaire [CO]/[LiTFSI] de 15, noté « Sn10PPA-TFSI15 ».

### 3.1. Synthèse du PTMC mettant en oeuvre $Sn(Oct)_2$ comme catalyseur

Le monomère TMC (10,000 g, 97,95 mmol, 96,62 équivalents), l'initiateur PPA (136,7 µL, 1,01 mmol, 1 équiv.) et 1 M de solution de catalyseur $Sn(Oct)_2$ dissous dans du toluène anhydre (20,0 µL, $2,0 \times 10^{-2}$ mmol ; 0,02 équiv.)

sont introduits dans un ballon à fond rond à col unique de 100 mL, en opérant dans une boîte à gants remplie avec de l'argon. Le ratio molaire monomère/catalyseur est [TMC]/[Sn(Oct)$_2$] est d'environ 5000/1. Le ballon est fermé, sorti à l'extérieur et chauffé à 130°C à l'aide d'un bain d'huile sous forte agitation. La température du bain est maintenue à 130°C pendant 24 heures.

Puis le mélange réactionnel est refroidi à température ambiante et une quantité minimale de DCM est ajoutée pour dissoudre le polymère PTMC. La solution de polymère est ensuite versée dans 300 mL de méthanol froid sous forte agitation pour précipiter le polymère.

La masse de polymère, se présentant sous la forme d'une gomme blanche, est lavée plusieurs fois avec du méthanol, puis séchée dans un four à 60°C suivi d'un séchage sous vide à 80°C pendant 48 heures pour obtenir le produit final, noté « Sn10PPA ».

Le schéma réactionnel pour la synthèse du PTMC par ROP, mettant en oeuvre le catalyseur Sn(Oct)$_2$ et initiée par PPA, est représenté en figure 9.

### 3.2. Préparation d'un électrolyte polymérique solide à base de PTMC synthétisé par ROP mettant en oeuvre Sn(Oct)$_2$ comme catalyseur

Dans une boîte à gants remplie d'argon, 2,000 g de PTMC, le Sn10PPA synthétisé comme décrit en exemple 3.1, sont introduits dans un récipient en verre équipé avec un barreau magnétique et 0,370 g de LiTFSI est ajouté. Ensuite, 10 mL d'acétone anhydre sont ajoutés, et le mélange est agité pendant au moins 4 heures pour obtenir une solution homogène. La solution est séchée à 80 °C pendant 72 heures sous vide pour obtenir l'électrolyte polymérique, noté Sn10PPA-TFSI15. Le ratio molaire entre les groupes carbonyle du polymère par rapport au sel de lithium, noté [CO]/[$Li^+$] est de 15.

## Exemple 4

### Préparation d'une électrode composite à base de (co)polycarbonate et l'assemblage d'une batterie complète

La préparation d'une électrode composite à base des polymères PTMC et copolymères PTMC-PCL et l'assemblage d'une batterie complète sont décrits ci-dessous.

### 4.1. Formulation d'une électrode composite à base du PTMC mettant en oeuvre l'acide HTFSI comme catalyseur sans l'ajout du sel de lithium

Le protocole suivant est suivi pour la synthèse par ROP, mettant en oeuvre le catalyseur HTFSI et initiée par un mono-alcool (le 3-phénylpropanol, PPA), de PTMC, de masse moléculaire théorique de 10 000 g.mol$^{-1}$ et la formulation directe d'une électrode composite après la synthèse.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Le DCM (20 mL) est ensuite ajouté pour dissoudre le TMC. La concentration en monomère est d'environ 5 M. Une fois le TMC complément dissous, l'initiateur PPA (136,7 µL, 1,01 mmol, 1 équiv.) est introduit dans le milieu réactionnel. Ensuite, le catalyseur HTFSI (2,754 g, 9,80 mmol, 9,66 équiv.) dissous dans 5 mL du DCM est introduit dans le milieu réactionnel. Le rapport molaire monomère/catalyseur, noté [CO]/[HTFSI], est 10. Le mélange réactionnel est mélangé pendant 24-48 heures à température ambiante.

Puis, le LiH (0,0902 g, 11,35 mmol, 11,2 équiv.), 5% en excès par rapport au catalyseur et à l'initiateur, est ajouté sous forte agitation pour neutraliser l'acide HTFSI et les fonctions OH au bout des chaînes du PTMC. Après 12 heures, le milieu réactionnel est séché sous vide à température ambiante pendant 8 heures pour enlever le solvant DCM. Ensuite, le $Li[Ni_{0,6}Mn_{0,2}Co_{0,2}]O_2$ (NMC622, 64.167 g), le PVdF (3.333 g) et le noir de carbone Super P (3.333 g) sont ajoutés. Dans le mélange final, le ratio molaire entre les groupes carbonyle du polymère par rapport au sel de lithium LiTFSI, noté [CO]/[LiTFSI], est de 10. Les pourcentages massiques des différents composés sont : PTMC (12%), LiTFSI (3%), NMC622 (77%), PVdF (4%), et Super P (4%). Ensuite, le NMP (100 g) est ajouté et le mélange est mis sous forte agitation à température ambiante pendant 24 heures pour obtenir une suspension homogène.

La suspension est dégazée, enduite sur le substrat d'aluminium revêtu de carbone, et séchée à l'étuve à 60 °C pendant 8 heures, suivi par un séchage sous vide à 80 °C pendant au moins 72 heures pour obtenir la cathode composite, noté « NMC1 ».

La procédure de préparation de la cathode composite à base du PTMC mettant en oeuvre l'acide HTFSI comme catalyseur sans l'ajout de sel de lithium est schématisée en figure 10.

### 4.2. Formulation d'une électrode composite à base du PTMC mettant en oeuvre l'acide HTFSI comme catalyseur avec l'ajout du sel de lithium

Le protocole suivant est suivi pour la synthèse par ROP, mettant en oeuvre le catalyseur HTFSI et initiée par un mono-alcool (le 3-phénylpropanol, PPA), de PTMC, de masse moléculaire théorique de 10 000 $g.mol^{-1}$ et la formulation directe d'une électrode composite après la synthèse.

Le monomère TMC (10,000 g ; 97,95 mmol, 96,62 équivalents) est introduit dans un ballon à fond rond à deux cols de 100 mL équipé d'un agitateur magnétique, d'un condenseur et d'une entrée/sortie d'argon. Le DCM (20 mL) est ensuite ajouté pour dissoudre le TMC. La concentration en monomère est d'environ 5 M. Une fois le TMC complément dissous, l'initiateur PPA (136,7 μL, 1,01 mmol, 1 équiv.) est introduit dans le milieu réactionnel. Ensuite, le catalyseur HTFSI (0,285 g, 1,01 mmol, 1 équiv.) dissous dans 1 mL du DCM est introduit dans le milieu réactionnel. Le rapport molaire amorceur/catalyseur, noté [PPA]/[HTFSI], est 1. Le mélange réactionnel est mélangé pendant 24-48 heures à température ambiante.

Après, le LiH (0,0169 g, 2,13 mmol, 2,1 équiv.), 5% en excès par rapport au catalyseur et à l'initiateur, est ajouté sous forte agitation pour neutraliser l'acide HTFSI et les fonctions OH au bout des chaînes du PTMC. Après 12 heures, le milieu réactionnel est séché sous vide à température ambiante pendant 8 heures pour enlever le solvant DCM. Ensuite, le sel LiTFSI (2,521 g, 8,78 mmol), le $Li[Ni_{0,6}Mn_{0,2}Co_{0,2}]O_2$ (NMC622, 64.167 g), le PVdF (3.333 g) et le noir de carbone Super P (3.333 g) sont ajoutés. Dans le mélange final, le ratio molaire entre les groupes carbonyle du polymère par rapport au sel de lithium LiTFSI, noté [CO]/[LiTFSI], est 10. Les pourcentages massiques des différents composés sont : PTMC (12%), LiTFSI (3%), NMC622 (77%), PVdF (4%), et Super P (4%). Ensuite, le NMP (100 g) est ajouté et le mélange est mis sous forte agitation à température ambient pendant 24 heures pour obtenir une suspension homogène.

La suspension est dégazée, enduite sur le substrat d'aluminium revêtu de carbone, et séchée à l'étuve à 60 °C pendant 8 heures, suivi par un séchage sous vide à 80 °C pendant au moins 72 heures pour obtenir la cathode composite, noté « NMC2 ».

La procédure de préparation de la cathode composite à base du PTMC mettant en oeuvre l'acide HTFSI comme catalyseur avec l'ajout du sel de lithium est schématisée en figure 11.

### 4.3. Préparation d'une batterie complète contenant un électrolyte et une cathode composite à base de PTMC et copolymère PTMC-PCL

Un séparateur en polypropylène de 16 mm de diamètre et d'épaisseur de 60 μm contenant un trou de 8 mm de diamètre a été placé sur l'électrode NMC (pré-placée sur une cale inox de 16 mm de diamètre) et une pastille d'électrolyte environ 8 mm de diamètre, préparée comme décrit en exemple 1 et 2, a été fixée dans le trou de séparateur. Ensuite, une feuille de lithium de 14 mm de diamètre (collée sur une cale inox de 16 mm de diamètre) a été placée au-dessus de l'électrolyte. La combinaison a été pressée à 1 tonne pendant 1 seconde et empilée dans une pile bouton.

La procédure de préparation des batteries complètes est schématisée en figure 12.

### 4.4. Préparation d'une batterie complète contenant un électrolyte et une cathode composite à base de PTMC et copolymère PTMC-PCL par l'enduction directe

Les solutions ou suspensions homogènes des électrolytes, obtenues comme décrit en exemple 1 et 2, sont enduites directement sur les cathodes composites, préparées comme décrit en exemple 4.1 et 4.2. La combinaison électrolyte/cathode est pré-séchée pendant 4 heures à température ambiante, suivi par un séchage sous vide à 80 °C pendant au moins 72 heures pour obtenir l'assemblage électrolyte/cathode. Ensuite, une feuille de lithium de 14 mm de diamètre (collée sur une cale inox de 16 mm de diamètre) a été placée au-dessus de l'assemblage électrolyte/cathode. La combinaison a été pressée à 1 tonne pendant 1 seconde et empilée dans une pile bouton.

## Exemple 5

## Evaluation des propriétés physicochimiques des PTMC synthétisés, des propriétés électrochimiques des électrolytes et essai sur des batteries complètes

### 5.1. Evaluation des propriétés physicochimiques du PTMC synthétisé

Méthodes de caractérisations des polymères

Spectroscopie RMN : La structure chimique des monomères et polymères est confirmée par spectroscopie

RMN sur un spectromètre RMN Bruker Ascend™ 400.

Mesure du poids moléculaire (Mw) : Les analyses par SEC-MALS (combinaison des techniques de chromatographie d'exclusion stérique et de diffusion de lumière statique) sont conduites sur un appareillage Viscotek GPCmax (VE 2001 Module) et les données sont traitées par le logiciel OmniSEC, commercialisé par Malvem Panalytical. Les mesures sont opérées à température ambiante et le tétrahydrofurane (THF) est utilisé comme solvant avec une vitesse de flux de 1 $mL.min^{-1}$. Les solutions de polymères (à environ 1 $mg.mL^{-1}$) sont filtrées à travers un filtre à base de PTFE Millipore de 0,20 $\mu$m. La calibration est effectuée en utilisant des étalons de polystyrène.

Propriétés thermiques : Les mesures DSC (« Differential Scanning Calorimetry ») sont réalisées sur des films secs de ionomères en utilisant un système Chip-DSC 100 (Linseis) sous flux d'argon de 50 mL/min avec une vitesse de chauffe de 10°$C.min^{-1}$ de -100 à 100°C. La température de transition vitreuse (Tg) est déterminée comme la valeur du point médian au deuxième balayage.

Résultats

Pour obtenir le PTMC synthétisé par ROP mettant en oeuvre le catalyseur HTFSI pour les caractérisations physicochimiques, des polymérisations similaires à celles décrites en exemple 1.1 (nommé SI10PPA1) et 2.1 (nommé SI10PPA2) sont conduites. Cependant, les réactions sont arrêtées avant l'étape de neutralisation par LiH et le PTMC est purifié par la précipitation et le lavage avec méthanol, comme décrit dans exemple 3.1.

Les résultats des analyses des polymères PTMC obtenus sont présentés dans le tableau 1 suivant.

[Tableau 1]

| Echantillon | [Cat]/[Am][a] | Rendement (%)[b] | $M_{n\text{-}SEC}$ (Da)[c] | $M_{w\text{-}SEC}$ (Da)[c] | PDI[d] |
|---|---|---|---|---|---|
| Sn10PPA (*hors invention*) | 0,02 | 95±3 | 8700±500 | 21500±3000 | 2,45±0,05 |
| SI10PPA1 | 6,44 | 93±2 | 9100±500 | 14800±1000 | 1,63±0,02 |
| SI10PPA2 | 1,00 | 95±2 | 13600±1000 | 21700±1000 | 1,60±0,03 |

[a]Le rapport molaire [Catalyseur]/[Amorceur] ;
[b]Le rendement de conversion est calculé à partir de la masse de polymère PTMC obtenu ($m_{PTMC}$) et des masses en monomère TMC et en initiateur PPA de départ, selon la formule yield (%)=$m_{PTMC} \times 100/(m_{TMC} + m_{PPA})$ ;
[c]La masse moléculaire moyenne est mesurée par SEC ;
[d]Indice de polydispersité PDI=$M_w/M_n$.

Les analyses RMN $^1$H des polymères PTMC synthétisés par ROP, mettant oeuvre le catalyseur HTFSI avec deux rapports molaires catalyseur/initiateur différents, initiée par PPA en comparaison avec le PTMC synthétisé par le catalyseur $Sn(Oct)_2$ (Sn10PPA) sont représentés en figure 13.

L'ensemble des spectres RMN $^1$H des polymères synthétisés présentent deux pics principaux à 4,20 et 2,03 ppm correspondant au proton des groupes $-CH_2-O-$ et $-CH_2-$, respectivement, de l'unité TMC. En général, la structure chimique des PTMC synthétisés par ROP mettant en oeuvre le catalyseur HTFSI est très similaire à celle du PTMC synthétisé en utilisant le catalyseur $Sn(Oct)_2$. Cependant, l'indice de polydispersité (PDI) du PTMC synthétisé dans l'invention est plus faible par rapport à celui du PTMC synthétisé en utilisant le catalyseur $Sn(Oct)_2$.

## 5.2. Evaluation des propriétés électrochimiques des électrolytes solides

Méthodes de caractérisations des électrolytes

Conductivité ionique

La conductivité ionique est déterminée par spectroscopie d'impédance électrochimique (EIS pour « Electrochemical Impédance Spectroscopy » en terminologie anglo-saxonne), en mettant en oeuvre un analyseur d'impédance VMP3 (BioLogic) pour une plage de températures allant de -10°C à 80°C par paliers de 10°C. Les électrolytes sont montés dans des piles bouton sous une boite à gants remplie d'argon, entre deux électrodes de blocage en acier inoxydable. Un séparateur en PTFE (16 mm de diamètre et 60 $\mu$m d'épaisseur) comprenant un trou de 6 mm de diamètre est utilisé pour fixer la taille et la forme de l'électrolyte. Les cellules, préconditionnées à 55 °C dans un four pendant 16 heures, sont stabilisées à une température donnée pendant 2 heures avant chaque mesure, et la température est contrôlée à l'aide d'une chambre climatique (Vötsch VC4018). Les mesures en chauffage et en refroidissement sont

effectuées. Les spectres d'impédance sont enregistrés dans une plage de fréquences allant de 1 Hz à 1 MHz. Les deux modes PEIS (« Potentio Electrochemical Impédance Spectroscopy », à tension appliquée contrôlée) et GEIS (« Galvano Electrochemical Impédance Spectroscopy », à courant appliqué contrôlé) sont utilisés avec une amplitude en tension ou en courant appliqué de 0,02 V ou 30 nA respectivement.

La résistance de la membrane d'électrolyte ($R_{bulk}$) est déterminée *via* l'analyse et l'interprétation du tracé de Nyquist à partir des données obtenues avec le logiciel EC-Lab. La conductivité est calculée en utilisant l'équation suivante :

[Math 1]

$$\sigma = \frac{L}{R \times S}$$

avec L représentant l'épaisseur de la membrane d'électrolyte (cm), S est la superficie de l'électrode ($cm^2$) et R est la résistance de volume (« bulk résistance ») de la membrane (ohm).

Energie d'activation : L'énergie d'activation ($E_a$) est déterminée par analyse des courbes de conductivité avec l'équation VTF (Volger-Tammann-Fulcher) [9] en utilisation un outil Solver.

[Math 2]

$$\sigma = Ae^{\frac{-E_a}{R(T-T_0)}}$$

avec $\sigma$ représentant la conductivité ionique ($S.cm^{-1}$), A= $\sigma_0 T^{-0,5}$ est le facteur pré-exponentiel dépendant de la température ($S.cm^{-1}$), $E_a$ est l'énergie d'activation ($J.mol^{-1}$), R=8,314 J $mol^{-1}.K^{-1}$ est la constante universelle des gaz parfaits ; $T_0=T_g-50$ et T est la température en Kelvin (K).

L'extrapolation des courbes suivant l'équation VTF a été réalisé seulement sur les courbes de refroidissement, et les températures de transition vitreuse (Tg) du PTMC et du copolymère fixées à -27°C ([11], [12]) et à -35°C ([2]) respectivement.

Nombre de transport des ions $Li^+$

Le nombre de transport des ions $Li^+$ (t+) est mesuré à 60°C par EIS via un analyseur d'impédance VMP3 (BioLogic) sur des cellules boutons Li/électrolyte/Li symétriques en utilisant la méthode connue de Bruce et Vincent [15]. En particulier, t+ est calculé en utilisation l'équation 3 suivante.

[Math 3]

$$t_+ = \frac{I_{ss}(\Delta V - I_0 R_0)}{I_0(\Delta V - I_{ss} R_{ss})}$$

avec $\Delta V$ représentant le potentiel appliqué à travers la cellule, $I_0$ et Iss sont les courants initial et de repos tandis que $R_0$ et Rss sont les résistances initiale et de repos des couches de stabilisation.

Stabilité électrochimique

La stabilité électrochimique des membranes d'électrolyte est évaluée par voltampérométrie cyclique (CV) dans une pile bouton comprenant l'électrolyte intercalé entre une feuille de lithium métallique comme contre-électrode et une feuille de cuivre (Cu) ou d'aluminium revêtue de carbone (Al@C) comme électrode de travail. Un séparateur PP comme décrit précédemment est utilisé pour fixer la taille et la forme de l'électrolyte.

Pour déterminer la stabilité anodique, des cellules Li/SPE/Al@C ont été utilisées. Les cellules ont été montées dans une boite à gants remplie d'argon, et soumises à des mesures en voltampérométrie cyclique en utilisant un VMP3

(BioLogic) avec une vitesse de balayage de 0,1 mV.s-1 de 2,8 à 4,5 V et répéter jusqu'à 10 cycles. Pour déterminer la stabilité cathodique, des cellules Li/SPE/Cu ont été soumises à des mesures CV en appliquant une vitesse de balayage de 0,1 $mV.s^{-1}$ de 2,0 jusqu'à -0,5 V et répéter jusqu'à 10 cycles.

Résultats

La conductivité ionique ($\sigma$), le nombre de transport des ions $Li^+$ ($t_+$), la conductivité de l'ion $Li^+$ et l'énergie d'activation ($E_a$), des différents électrolytes polymériques à base de PTMC synthétisés en utilisant le catalyseur HTFSI et $Sn(Oct)_2$ sont rassemblées dans le tableau 2 suivant.

[Tableau 3]

| Echantillon | $\sigma^{a,b}$ (S $cm^{-1}$) | $t_+^{b}$ | $Li^+$ $\sigma^c$ (S $cm^{-1}$) | $E_a$ (kJ $mol^{-1}$ ) |
|---|---|---|---|---|
| Sn10PPA-TFSI15 *(hors invention)* | $1,81 \times 10^{-5}$ | 0,70 ± 0,02 | $1,27 \times 10^{-5}$ | 11,25 |
| SI10PPA1-TFSI15 | $4,60 \times 10^{-6}$ | 0,73 ± 0,02 | $3,36 \times 10^{-6}$ | 11,56 |
| SI10PPA2-TFSI15 | $3,77 \times 10^{-6}$ | 0,78 ± 0,03 | $2,94 \times 10^{-6}$ | 13,05 |
| [a]valeurs ajustées. [b]mesuré à 60 °C. [c]conductivité des ions $Li^+$ obtenue en normalisant la conductivité ionique totale avec le nombre de transport, $t_+$, des ions $Li^+$ | | | | |

La figure 14 représente l'évolution de la conductivité ionique des électrolytes SI10PPA1-TFSI15 et SI10PPA2-TFSI15 en fonction de la température, en comparaison avec l'électrolyte préparé par la méthode conventionnelle (Sn10PPA-TFSI15). Avec la même concentration en sel LiTFSI, la conductivité des PTMC synthétisés par ROP mettant en oeuvre le catalyseur HTFSI (SI10PPA1-TFSI15 et SI10PPA2-TFSI15) est plus faible en comparaison avec celle du PTMC synthétisé en utilisant le catalyseur $Sn(Oct)_2$ (Sn10PPA-TFSI15). Ce comportement dériverait du PDI plus élevé du polymère Sn10PPA. La valeur PDI plus élevée signifie la plus faible homogénéité du Mn, ce qui signifie qu'il y a plus de molécules de polymère avec un Mn beaucoup plus petit (également appelé oligomère) dans le polymère Sn10PPA. Ces molécules de polymère de faible poids moléculaire jouent le rôle de plastifiant, ce qui augmente la mobilité segmentaire des chaînes PTMC.

En revanche, le nombre de transport de $Li^+$ du SI10PPA1-TFSI15 et SI10PPA2-TFSI15 est plus élevé en comparaison avec celui du Sn10PPA-TFSI15. Ce comportement dériverait de l'interaction plus forte entre $Li^+$ au bout de chaîne du polymère protégé avec l'anion $TFSI^-$qui diminue sa mobilité.

Concernant l'impact de la méthode de préparation, la conductivité de l'électrolyte préparé sans l'ajout du sel de lithium (SI10PPA1-TFSI15) est plus élevée que celle de l'électrolyte préparé avec l'ajout du sel de lithium (SI10PPA2-TFSI15), notamment à basse température. Ce comportement dériverait de la masse molaire un peu plus élevée du SI10PPA2-TFSI15.

La figure 15 présente les courbes de voltampérométrie cyclique des électrolytes solides de l'invention (SI10PPA1-TFSI15 et SI10PPA2-TFSI15) en comparaison avec celle de l'électrolyte à base du PTMC synthétisé par la méthode conventionnelle (Sn10PPA-TFSI15). Les résultats obtenus révèlent que la stabilité électrochimique des électrolytes dépend fortement de la méthode de préparation et ainsi la protection des fonctions OH au bout de chaîne du PTMC. En particulier, la stabilité vis-à-vis de la réduction et de l'oxydation des électrolytes préparés selon l'invention est beaucoup plus élevée en comparaison avec celle de l'électrolyte préparé par la méthode conventionnelle.

Le premier balayage cathodique réalisés sur des cellules Li/SPE/Cu montrent une stabilité beaucoup plus élevée au contact de l'anode au lithium métal de SI10PPA1-TFSI15 et SI10PPA2-TFSI15 comme le révèle l'apparition du pic de stripping du lithium à environ 0,25 V vs. $Li/Li^+$.

La stabilité électrochimique des électrolytes vis-à-vis de la réduction a été étudiée en profondeur en répétant le voltampérométrie cyclique pour six balayages cathodiques exécutifs. La figure 16 présente des courbes de voltampérométrie cyclique cathodique des électrolytes solides SI10PPA1-TFSI15, SI10PPA2-TFSI15, en comparaison avec celles de l'électrolyte Sn10PPA-TFSI15. Pour SI10PPA1-TFSI15 et SI10PPA2-TFSI15, les balayages sont prèsque superposés à partir du troisème balayage. Dans le cas de Sn10PPA-TFSI, il manque du pic de stripping du lithium à environ 0,25 V vs. $Li/Li^+$ car le lithium déposé sur l'électrode de travail a réagi avec l'électrolyte pendant le cyclage. En fait, l'efficacité coulombique de cyclage du SI10PPA1-TFSI15 et SI10PPA2-TFSI15 est environ 60 %, plus de deux fois supérieure à l'efficacité du Sn10PPA-TFSI15 (environ 25%).

### 5.3. L'essai sur des batteries complètes

Méthodes de caractérisations des batteries complètes

Le cyclage galvanostatique des cellules Li/NMC622 a été réalisé en utilisant un testeur de batterie Arbin utilisant des cellules boutons. Un taux de décharge/charge de 1C correspond à un courant spécifique de 180 mA $g^{-1}$. Les limites de potentiel ont été fixés entre 2,8 et 4,2 V vs. $Li/Li^+$ et les cellules ont été maintenues à une température constante de 80 °C.

Résultats

La figure 17 présente les courbes de cyclage galvanostatique d'une batterie complète, préparée comme décrit en exemple 4.3, contenant l'anode de lithium métal (l'épaisseur 135 $\mu$m), l'électrolyte SI10PPA1-TFSI15, préparé sans l'ajout du sel de lithium, comme décrit en exemple 1.1, et la cathode composite à base du SI10PPA2 (nommée NMC2), préparée avec l'ajout du sel de lithium comme décrit en exemple 4.2.

La figure 18 présente les courbes de cyclage galvanostatique d'une batterie complète, préparée comme décrit en exemple 4.3, contenant l'anode de lithium métal (l'épaisseur 135 $\mu$m), l'électrolyte SI10PPA2-TFSI15, préparé avec l'ajout du sel de lithium, comme décrit en exemple 2.1, et la cathode composite à base du SI10PPA2 (nommée NMC2), préparée avec l'ajout du sel de lithium comme décrit en exemple 4.2.

### Liste des documents cités

[1] Tominaga et al., Polymer, 2010, 51 (19), 4295-4298 ;
[2] Wang et al., Coor. Chem. Rev. 2018, 372, 85-100 ;
[3] Kimura et al., Ionics, 2015, 21 (3), 895-900 ;
[4] Brandell et al., Solid State Ionics 2014, 262, 738-742 ;
[5] Mindermark et al., Polymer 63 (2015) 91-98 ;
[6] Meabe et al., Electrochim. Acta 2017, 237, 259-266 ;
[7] Zhao et al., Chem. Rev. 2018, 118 (20), 10349-10392 ;
[8] Rajendra P. Singh, Qichao Hu. Advances in chemistry of hydrogen bis(fluorosulfonyl)imide and its derivatives. Journal of Fluorine Chemistry 226 (2019) 109333 ;
[9] Gazeau-Bureau et al., Macromolecules 2008, 41 (11), 3782-3784 ;
[10] Kakuchi et al., Macromolecules 2010, 43 (17), 7090-7094 ;
[11] Makiguchi et al., J. Polym. Sci. Part A Polym. Chem. 2013, 51 (11), 2455-2463;
[12] Tominaga et al., Electrochim. Acta 2019, 302, 286-290 ;
[13] Kütt et al., J. Org. Chem. Vol. 76, No. 2, 2011 ;
[14] Singh et al., Journal of Fluorine Chemistry 226 (2019) 109333;
[15] Tundo et al., Green Chem. 10, 1182-1189 (2008).


## Revendications

**1.** Procédé de préparation d'un électrolyte solide ou d'une électrode composite incorporant un électrolyte solide, destiné(e) à un système électrochimique, en particulier à une batterie rechargeable, comprenant au moins les étapes suivantes :

(i) synthèse, dans un milieu solvant, d'au moins un (co)polymère par (co)polymérisation par ouverture de cycle (ROP) d'au moins un carbonate cyclique de cinq à huit chaînons et, éventuellement, d'au moins une lactone de cinq à huit chaînons,
ladite réaction de (co)polymérisation étant catalysée par au moins un super acide de Brønsted apte à former, après neutralisation en étape (ii) du procédé de l'invention, un sel conducteur ionique de métal alcalin ou alcalino-terreux ;
(ii) ajout au milieu réactionnel obtenu à l'issue de l'étape (i) d'une quantité suffisante d'un hydrure de métal alcalin ou alcalino-terreux, en particulier de l'hydrure de lithium (LiH), pour neutraliser la totalité dudit catalyseur et obtenir un sel de métal alcalin ou alcalino-terreux, et pour protéger la ou lesdits fonctions hydroxyles terminales du ou desdits (co)polymères synthétisés ;

(iii) ajout ou non au mélange obtenu à l'issue de l'étape (ii) d'au moins un sel dudit métal alcalin ou alcalino-terreux, en particulier un sel de lithium ; et

(iv) formation d'un électrolyte solide par évaporation du milieu solvant ou d'une électrode composite incorporant ledit électrolyte solide.

**2.** Procédé selon la revendication précédente, dans lequel le catalyseur super acide de Brønsted en étape (i) est choisi parmi l'acide bis(trifluorométhanesulfonyl)imide (HTFSI), l'acide trifluorométhanesulfonique (TfOH), l'acide bis(fluorosulfonyl)imide (HFSI), l'acide fluorosulfurique ($FSO_3H$), l'acide tétrafluoroborique ($HBF_4$), l'acide hexafluorophosphorique ($HPF_6$), l'acide hexafluoroarsénique ($HAsF_6$), l'acide perchlorique ($HClO_4$), l'acide bis(pentafluoroéthanesulfonyl)imide ($HN(SO_2C_2F_5)_2$), l'acide bis(heptafluoropropanesulfonyl)imide ($HN(SO_2C_3F_7)_2$), l'acide bis(nonafluorobutanesulfonyl)imide ($HN(SO_2C_4F_9)_2$), l'acide pentafluoroéthanesulfonique ($C_2F_5SO_3H$), l'acide 4,5-dicyano-2-trifluorométhyl-imidazolide (HTDI), l'acide bis(oxalato)borique ($HB(C_2O_4)_2$), l'acide difluoro(éthanedioato)borique ($HBF_2(C_2O_4)$), l'acide tris[(trifluorométhyl)sulfonyl]méthane ($Tf_3CH$), l'acide dicyanamide ($NH-(CN)_2$), l'acide tricyanométhamide ($CH-(CN)_3$) et leurs mélanges, en particulier parmi le HTFSI, le TfOH, le HFSI et le $FSO_3H$ et leurs mélanges et plus particulièrement parmi le HTFSI, le TfOH et leurs mélanges.

**3.** Procédé selon l'une quelconque des revendications précédentes, dans lequel ladite réaction de (co)polymérisation en étape (i) est initiée par au moins un composé comportant une ou plusieurs fonction(s) hydroxyle(s), en particulier choisi parmi l'eau et/ou les alcools, en particulier les alcools présentant une à quatre fonction(s) hydroxyle(s) et plus particulièrement une ou deux fonctions hydroxyles, par exemple le 3-phényl-1-propanol ou l'éthylène glycol, en particulier le 3- phényl-1-propanol.

**4.** Procédé selon l'une quelconque des revendications précédentes, dans lequel la réaction de ROP en étape (i) est opérée à une température inférieure ou égale à 40 °C, en particulier comprise entre 20 et 40 °C et plus particulièrement à température ambiante ; et/ou pendant une durée inférieure à 3 jours, en particulier inférieure ou égale à 72 heures, notamment inférieure ou égale à 48 heures et plus particulièrement comprise entre 24 et 48 heures.

**5.** Procédé selon l'une quelconque des revendications précédentes, dans lequel le milieu solvant est formé d'un ou plusieurs solvant(s) organique(s), en particulier apolaire(s) et aprotique(s), notamment choisis parmi la N-méthyl-2-pyrrolidone (NMP), le chloroforme, le dichlorométhane, le tétrahydrofurane et leurs mélanges, et plus particulièrement le dichlorométhane ou la NMP.

**6.** Procédé selon l'une quelconque des revendications précédentes, dans lequel le catalyseur super acide de Brønsted est mis en oeuvre en étape (i) en une teneur telle que le rapport molaire monomère(s)/catalyseur est compris entre 0,5 et 30, en particulier entre 5 et 15 et plus particulièrement entre 10 et 15, notamment d'environ 15.

**7.** Procédé selon l'une quelconque des revendications 1 à 5, dans lequel le catalyseur super acide de Brønsted est mis en oeuvre en étape (i) en quantité catalytique, en particulier dans un rapport molaire monomère(s)/catalyseur compris entre 40/1 et 1000/1, en particulier entre 50/1 et 500/1 ;
ledit procédé mettant en oeuvre ladite étape (iii) d'ajout, au mélange obtenu après neutralisation du catalyseur, d'une quantité additionnelle en sel de métal alcalin ou alcalino-terreux, en particulier en sel de lithium, de préférence pour obtenir à l'issue de l'étape (iii) un ratio molaire entre les groupes carbonyles du ou desdits polycarbonates par rapport au lithium, noté $[CO]/[Li^+]$, compris entre 0,5 et 30, en particulier entre 5 et 15 et plus particulièrement entre 10 et 15, notamment d'environ 15.

**8.** Procédé selon l'une quelconque des revendications précédentes, dans lequel ledit (co)polymère synthétisé en étape (i) présente une masse molaire moyenne en nombre, Mn, inférieure ou égale à 200 000 $g.mol^{-1}$, en particulier comprise entre 5 000 et 100 000 $g.mol^{-1}$, et plus particulièrement entre 5 000 et 50 000 $g.mol^{-1}$ ; et/ou une polydispersité inférieure ou égale à 2,5, notamment inférieure ou égale à 2,0.

**9.** Procédé selon l'une quelconque des revendications précédentes, dans lequel ledit (co)polymère synthétisé en étape (i) est choisi parmi les polytriméthylène carbonate (PTMC), les copolymères poly(triméthylène carbonate)-poly($\varepsilon$-caprolactone) (PTMC-PCL), en particulier présentant un rapport molaire entre les unités monomériques dérivées du triméthylène carbonate et les unités monomériques dérivés de la caprolactone compris entre 90/10 et 10/90, notamment entre 80/20 et 20/80, en particulier entre 70/30 et 30/70 et plus particulièrement d'environ 60/40, et leurs mélanges.

**10.** Procédé selon l'une quelconque des revendications précédentes, pour la préparation d'un électrolyte solide, notamment sous la forme d'un film, en particulier de type électrolyte polymérique solide (SPE) ou électrolyte solide hybride (HSE), ledit procédé comprenant, dans le cas de la formation d'un HSE, préalablement à l'évaporation du milieu solvant, l'ajout au mélange obtenu à l'issue de l'étape (ii) ou (iii), d'au moins une charge inorganique conductrice du ou des cations alcalin ou alcalino-terreux, en particulier une charge inorganique conductrice des ions lithium.

**11.** Procédé selon la revendication précédente, dans lequel l'étape (iv) comprend le dépôt dudit mélange obtenu à l'issue de l'étape (ii) ou (iii), éventuellement supplémenté par au moins ladite charge inorganique conductrice du ou des cations alcalin ou alcalino-terreux, en surface d'un substrat, par exemple par enduction, suivi de l'évaporation du milieu solvant, pour obtenir ledit film d'électrolyte solide.

**12.** Procédé selon l'une quelconque des revendications 1 à 9, pour la préparation d'une électrode composite incorporant ledit électrolyte solide, ledit procédé comprenant :

- l'ajout, au mélange obtenu à l'issue de l'étape (ii) ou (iii), d'au moins un matériau actif d'électrode et, éventuellement, d'un ou plusieurs additifs conducteurs électroniques et/ou d'un ou plusieurs liants additionnels ; et
- le dépôt dudit mélange en surface d'un collecteur de courant, suivi de l'évaporation du milieu solvant pour obtenir ladite électrode composite.

**13.** Procédé selon l'une quelconque des revendications 1 à 9, pour la préparation d'une électrode composite incorporant ledit électrolyte solide, ledit procédé comprenant :

- la préparation d'une dispersion, appelée « encre », par ajout à l'électrolyte solide obtenu en étape (iv) à l'issue de l'évaporation du milieu solvant, d'au moins un matériau actif d'électrode, éventuellement d'un ou plusieurs additifs conducteurs électroniques et/ou d'un ou plusieurs liants additionnels ; éventuellement d'une quantité additionnelle de sel(s) de métal alcalin ou alcalino-terreux ; et d'un ou plusieurs solvants, distincts du ou desdits solvants mis en oeuvre pour la ROP en étape (i) ; et
- le dépôt de ladite encre en surface d'un collecteur de courant, suivi de l'évaporation du ou desdits solvants pour obtenir ladite électrode composite.

**14.** Electrolyte solide, en particulier sous la forme d'un film d'électrolyte solide, notamment de type électrolyte polymérique solide (SPE) ou électrolyte solide hybride (HSE), obtenu par le procédé défini en revendication 10 ou 11.

**15.** Electrode composite comprenant un électrolyte solide, ladite électrode étant obtenue par le procédé défini en revendication 12 ou 13.

**16.** Ensemble électrode/membrane électrolytique, dans lequel ladite électrode est une électrode composite telle que définie selon la revendication 15 et/ou ladite membrane électrolytique est un film d'électrolyte solide, notamment de type SPE ou HSE, tel que défini en revendication 14.

**17.** Système électrochimique comportant au moins un film d'électrolyte solide tel que défini en revendication 14 et/ou au moins une électrode composite telle que définie selon la revendication 15, ledit système électrochimique étant plus particulièrement une batterie rechargeable, en particulier une batterie au lithium, notamment d'une batterie lithium-métal ou lithium-ion.

## Patentansprüche

**1.** Verfahren zur Herstellung eines Festelektrolyten oder einer einen Festelektrolyten beinhaltenden Verbundelektrode, der(die) für ein elektrochemisches System bestimmt ist, insbesondere für eine wiederaufladbare Batterie, umfassend mindestens die folgenden Schritte:

(i) Synthese, in einem Lösungsmittelmedium, mindestens eines (Co)polymers durch ringöffnende (Co)polymerisation (ROP) mindestens eines zyklischen Carbonats mit fünf bis acht Gliedern und, gegebenenfalls, mindestens eines Lactons mit fünf bis acht Gliedern,
wobei die (Co)polymerisationsreaktion durch mindestens eine Brønsted-Supersäure katalysiert wird, die geeignet ist, nach Neutralisation im Schritt (ii) des Verfahrens der Erfindung, ein Ionen leitendes Alkali- oder Erdalkalimetallsalz zu bilden;
(ii) Zugeben, zu dem am Ende des Schritts (i) erhaltenen Reaktionsmediums, einer ausreichenden Menge eines

Alkali- oder Erdalkalimetallhydrids, insbesondere von Lithiumhydrid (LiH), um den gesamten Katalysator zu neutralisieren und ein Alkali- oder Erdalkalimetallsalz zu erhalten und um die terminalen Hydroxylfunktionen des oder der synthetisierten (Co)polymere zu schützen;
(iii) Zugeben oder nicht, zu der am Ende des Schritts (ii) erhaltenen Mischung, mindestens eines Salzes des Alkali- oder Erdalkalimetalls, insbesondere eines Lithiumsalzes; und
(iv) Bilden eines Festelektrolyten durch Verdampfen des Lösungsmittelmediums oder einer diesen Festelektrolyten beinhaltenden Verbundelektrode.

**2.** Verfahren nach dem vorhergehenden Anspruch, bei dem der Brønsted-Supersäure-Katalysator im Schritt (i) unter der Bis(trifluormethansulfonyl)imid-Säure (HTFSI), der Trifluormethansulfonsäure (TfOH), der Bis(fluorsulfonyl)imid-Säure (HFSI), der Fluorschwefelsäure ($FSO_3H$), der Tetrafluorborsäure ($HBF_4$), der Hexafluorphosphorsäure ($HPF_6$), der Hexafluorarsensäure ($HAsF_6$), der Perchlorsäure ($HClO_4$), der Bis(pentafluorethansulfonyl)imid-Säure ($HN(SO_2C_2F_5)_2$), der Bis (heptafluorpropansulfonyl) imid-Säure ($HN(SO_2C_3F_7)_2$), der Bis(nonafluorbutansulfonyl)imid-Säure ($HN(SO_2C_4F_9)_2$), der Pentafluorethansulfonsäure ($C_2F_5SO_3H$), der 4,5-Dicyan-2-trifluormethyl-imidazolid-Säure (HTDI), der Bis (oxalat) borsäure ($HB(C_2O_4)_2$), der Difluor(ethandioat)borsäure ($HBF_2(C_2O_4)$), der Tris[(trifluormethyl)sulfonyl]methan-Säure ($Tf_3CH$), der Dicyanamidsäure ($NH-(CN)_2$), der Tricyanmethamidsäure ($CH-(CN)_3$) und ihren Mischungen, insbesondere unter HTFSI, TfOH, HFSI und $FSO_3H$ und ihren Mischungen und ganz besonders unter HTFSI, TfOH und ihren Mischungen gewählt ist.

**3.** Verfahren nach einem der vorhergehenden Ansprüche, bei dem die (Co)polymerisationsreaktion im Schritt (i) durch mindestens eine Verbindung eingeleitet wird, die eine oder mehrere Hydroxylfunktion(en) umfasst und insbesondere unter Wasser und/oder den Alkoholen gewählt ist, insbesondere den Alkoholen, die eine bis vier Hydroxylfunktion(en) und ganz besonders eine oder zweite Hydroxylfunktionen aufweisen, zum Beispiel dem 3-Phenyl-1-propanol oder dem Ethylenglycol, insbesondere dem 3-Phenyl-1-propanol.

**4.** Verfahren nach einem der vorhergehenden Ansprüche, bei dem die ROP-Reaktion im Schritt (i) bei einer Temperatur kleiner oder gleich 40 °C, insbesondere zwischen 20 und 40 °C und ganz besonders bei Umgebungstemperatur und/oder während einer Dauer von weniger als 3 Tagen, insbesondere kleiner als oder gleich 72 Stunden, vor allem kleiner als oder gleich 48 Stunden und ganz besonders zwischen 24 und 48 Stunden durchgeführt wird.

**5.** Verfahren nach einem der vorhergehenden Ansprüche, bei dem das Lösungsmittelmedium aus einem oder mehreren organischen, insbesondere apolaren und aprotischen, Lösungsmittel(n) gebildet wird, die vor allem unter N-methyl-2-pyrrolidon (NMP), Chloroform, Dichlormethan, Tetrahydrofuran und ihren Mischungen und ganz besonders dem Dichlormethan oder NMP gewählt sind.

**6.** Verfahren nach einem der vorhergehenden Ansprüche, bei dem der Brønsted-Supersäure-Katalysator im Schritt (i) mit einem solchen Gehalt eingesetzt wird, dass das Molverhältnis Monomer(e)/Katalysator zwischen 0,5 und 30, insbesondere zwischen 5 und 15 und ganz besonders zwischen 10 und 15, vor allem etwa 15 beträgt.

**7.** Verfahren nach einem der Ansprüche 1 bis 5, bei dem der Brønsted-Supersäure-Katalysator im Schritt (i) in katalytischer Menge eingesetzt wird, insbesondere mit einem Molverhältnis Monomer(e)/Katalysator zwischen 40:1 und 1000:1, insbesondere zwischen 50:1 und 500:1;
wobei das Verfahren den Schritt (iii) des Zugebens (iii), zu der nach Neutralisation des Katalysators erhaltenen Mischung, einer zusätzlichen Menge eines Alkali- oder Erdalkalimetallsalzes, insbesondere eines Lithiumsalzes einsetzt, bevorzugt, um am Ende des Schritts (iii) ein Molverhältnis zwischen den Carbonylgruppen des oder der Polycarbonate bezogen auf das Lithium, notiert als $[CO]/[Li^+]$, zwischen 0,5 und 30, insbesondere zwischen 5 und 15 und ganz besonders zwischen 10 und 15, vor allem von etwa 15 zu erhalten.

**8.** Verfahren nach einem der vorhergehenden Ansprüche, bei dem das im Schritt (i) synthetisierte (Co)polymer eine zahlenmittlere Molmasse, Mn, kleiner oder gleich 200 000 $g.mol^{-1}$, insbesondere zwischen 5 000 und 100 000 $g.mol^{-1}$ und ganz besonders zwischen 5 000 und 50 000 $g.mol^{-1}$ und/oder eine Polydispersität kleiner oder gleich 2,5, vor allem kleiner oder gleich 2,0 aufweist.

**9.** Verfahren nach einem der vorhergehenden Ansprüche, bei dem das im Schritt (i) synthetisierte (Co)polymer unter den Polytrimethylencarbonaten (PTMC), den Poly(trimethylnecarbonate)-poly(s-caprolacton)-Copolymeren (PTMC-PCL), die insbesondere ein Molverhältnis zwischen den aus dem Trimethylencarbonat abgeleiteten Monomereinheiten und den aus dem Caprolacton abgeleiteten Monomereinheiten zwischen 90:10 und 10:90, vor allem zwischen 80:20 und 20:80, insbesondere zwischen 70:30 und 30:70 und ganz besonders von etwa 60:40 aufweisen,

und ihren Mischungen gewählt ist.

**10.** Verfahren nach einem der vorhergehenden Ansprüche zur Herstellung eines Festelektrolyten, insbesondere in Form eines Films, insbesondere vom Typ fester Polymer-Elektrolyt (SPE) oder fester Hybrid-Elektrolyt (HSE), wobei das Verfahren im Fall der Bildung eines HSE vor dem Verdampfen des Lösungsmittelmediums das Zugeben, zu der am Ende des Schritts (ii) oder (iii) erhaltenen Mischung, mindestens einer Alkali- oder Erdalkali-Kationen leitenden anorganischen Charge, insbesondere einer Lithiumionen leitenden anorganischen Charge umfasst.

**11.** Verfahren nach dem vorhergehenden Anspruch, bei dem der Schritt (iv) das Aufbringen der am Ende des Schritts (ii) oder (iii) erhaltenen Mischung, der gegebenenfalls mindestens die Alkali- oder Erdalkali-Kationen leitende anorganische Charge zugesetzt wurde, an der Oberfläche eines Substrats, insbesondere durch Bestreichen, gefolgt von dem Verdampfen des Lösungsmittelmediums umfasst, um den Festelektrolytfilm zu erhalten.

**12.** Verfahren nach einem der Ansprüche 1 bis 9 zur Herstellung einer den Festelektrolyten beinhaltenden Verbundelektrode, wobei das Verfahren umfasst:

- das Zugeben, zu der am Ende des Schritts (ii) oder (iii) erhaltenen Mischung, von mindestens einem aktiven Elektrodenmaterial und, gegebenenfalls, von einem oder mehreren Elektronen leitenden Zusatzstoffen und/oder von einem oder mehreren zusätzlichen Bindemitteln; und
- das Aufbringen der Mischung an der Oberfläche eines Stromkollektors, gefolgt von dem Verdampfen des Lösungsmittelmediums, um die Verbundelektrode zu erhalten.

**13.** Verfahren nach einem der Ansprüche 1 bis 9 zur Herstellung einer den Festelektrolyten beinhaltenden Verbundelektrode, wobei das Verfahren umfasst:

- das Herstellen einer Dispersion, "Tinte" genannt, durch Zugeben, zu dem im Schritt (iv) nach dem Verdampfen des Lösungsmittelmediums erhaltenen Festelektrolyten, von mindestens einem aktiven Elektrodenmaterial, gegebenenfalls von einem oder mehreren Elektronen leitenden Zusatzstoffen und/oder von einem oder mehreren zusätzlichen Bindemitteln; gegebenenfalls von einer zusätzlichen Menge von Alkali- oder Erdalkalimetallsalz(en); und von einem oder mehreren Lösungsmitteln, die verschieden von dem oder den bei der ROP im Schritt (i) eingesetzten Lösungsmitteln sind; und
- das Aufbringen der Tinte an der Oberfläche eines Stromkollektors, gefolgt von dem Verdampfen des oder der Lösungsmittel, um die Verbundelektrode zu erhalten.

**14.** Festelektrolyt, insbesondere in Form eines Festelektrolytfilms, insbesondere vom Typ fester Polymer-Elektrolyt (SPE) oder fester Hybrid-Elektrolyt (HSE), der mit dem in Anspruch 10 oder 11 definierten Verfahren erhalten wird.

**15.** Verbundelektrode, die einen Festelektrolyten umfasst, wobei die Elektrode mit dem in Anspruch 12 oder 13 definierten Verfahren erhalten wird.

**16.** Elektrode/Elektrolytmembran-Anordnung, bei der die Elektrode eine Verbundelektrode wie in Anspruch 15 definiert ist und/oder die Elektrolytmembran ein Festelektrolytfilm, insbesondere vom Typ SPE oder HSE, wie in Anspruch 14 definiert ist.

**17.** Elektrochemisches System, beinhaltend mindestens einen Festelektrolytfilm wie in Anspruch 14 definiert und/oder mindestens eine Verbundelektrode wie in Anspruch 15 definiert, wobei das elektrochemische System insbesondere eine wiederaufladbare Batterie ist, insbesondere eine Lithiumbatterie, vor allem eine Lithium-Metall- oder Lithium-Ionen-Batterie.

## Claims

**1.** Process for preparing a solid electrolyte or a composite electrode incorporating a solid electrolyte, intended for an electrochemical system, in particular with a rechargeable battery, comprising at least the following steps:

(i) synthesis, in a solvent medium, of at least one (co)polymer by ring-opening (co)polymerization (ROP) of at least one five- to eight-membered cyclic carbonate and, optionally, of at least one five- to eight-membered lactone,

said (co)polymerization reaction being catalysed by at least one Brønsted superacid capable of forming, after neutralization in step (ii) of the process of the invention, an ion-conducting alkali metal or alkaline earth metal salt;
(ii) addition to the reaction medium obtained in step (i) of a sufficient amount of an alkali metal or alkaline earth metal hydride, in particular lithium hydride (LiH), in order to neutralize all of said catalyst and obtain an alkali metal or alkaline earth metal salt, and in order to protect said terminal hydroxyl group(s) of said synthesized (co)polymer(s);
(iii) addition or not to the mixture obtained in step (ii) of at least one salt of said alkali metal or alkaline earth metal, in particular a lithium salt; and
(iv) formation of a solid electrolyte by evaporation of the solvent medium or a composite electrode incorporating said solid electrolyte.

**2.** Process according to the preceding claim, wherein the Brønsted superacid catalyst in step (i) is selected among bis(trifluoromethanesulfonyl)imide acid (HTFSI), trifluoromethanesulfonic acid (TfOH), bis(fluorosulfonyl)imide acid (HFSI), fluorosulfuric acid ($FSO_3H$), tetrafluoroboric acid ($HBF_4$), hexafluorophosphoric acid ($HPF_6$), hexafluoroarsenic acid ($HAsF_6$), perchloric acid ($HClO_4$), bis (pentafluoroethanesulfonyl) imide acid (HN $(SO_2C_2F_5)_2$), bis(heptafluoropropanesulfonyl)imide acid ($HN(SO_2C_3F_7)_2$), bis (nonafluorobutanesulfonyl) imide acid (HN $(SO_2C_4F_9)_2$), pentafluoroethanesulfonic acid ($C_2F_5SO_3H$), 4,5-dicyano-2-trifluoromethyl-imidazolide acid (HTDI), bis (oxalato) boric acid (HB $(C_2O_4)_2$), difluoro (ethanedioato) boric acid ($HBF_2$ $(C_2O_4)$), tris[(trifluoromethyl)sulfonyl]methane acid ($Tf_3CH$), dicyanamide acid ($NH-(CN)_2$), tricyanomethamide acid ($CH-(CN)_3$) and mixtures thereof, in particular among HTFSI, TfOH, HFSI and $FSO_3H$ and mixtures thereof and more particularly among HTFSI, TfOH and mixtures thereof.

**3.** Process according to any of the preceding claims, wherein said (co)polymerization reaction in step (i) is initiated by at least one compound comprising one or more hydroxyl groups, in particular selected from water and/or alcohols, in particular alcohols having one to four hydroxyl groups and more particularly one or two hydroxyl groups, for example 3-phenyl-1-propanol or ethylene glycol, in particular 3-phenyl-1-propanol.

**4.** Process according to any of the preceding claims, wherein the ROP reaction in step (i) is carried out at a temperature of less than or equal to 40°C, in particular between 20 and 40°C and more particularly at ambient temperature; and/or for a period of less than 3 days, in particular less than or equal to 72 hours, particularly less than or equal to 48 hours and more particularly between 24 and 48 hours.

**5.** Process according to any of the preceding claims, wherein the solvent medium is composed of one or more organic solvent (s), in particular non-polar and aprotic, particularly selected from N-methyl-2-pyrrolidone (NMP), chloroform, dichloromethane, tetrahydrofuran and mixtures thereof, and more particularly dichloromethane or NMP.

**6.** Process according to any of the preceding claims, wherein the Brønsted superacid catalyst is used in step (i) in an amount such that the monomer(s)/catalyst molar ratio is between 0.5 and 30, in particular between 5 and 15 and more particularly between 10 and 15, particularly approximately 15.

**7.** Process according to any of Claims 1 to 5, wherein the Brønsted superacid catalyst is used in step (i) in a catalytic amount, in particular in a monomer/catalyst molar ratio of between 40/1 and 1000/1, in particular between 50/1 and 500/1;
said process using said step (iii) of addition, to the mixture obtained after neutralization of the catalyst, of an additional amount of alkali metal or alkaline earth metal salt, in particular lithium salt, preferably in order to obtain in step (iii) a molar ratio of the carbonyl groups of said polycarbonate(s) relative to lithium, abbreviated [CO]/[$Li^+$], of between 0.5 and 30, in particular between 5 and 15 and more particularly between 10 and 15, particularly approximately 15.

**8.** Process according to any of the preceding claims, wherein said (co)polymer synthesized in step (i) has a number-average molar mass, Mn, of less than or equal to 200,000 $g.mol^{-1}$, in particular between 5,000 and 100,000 $g.mol^{-1}$, and more particularly between 5,000 and 50,000 $g.mol^{-1}$; and/or a polydispersity of less than or equal to 2.5, particularly less than or equal to 2.0.

**9.** Process according to any of the preceding claims, wherein said (co)polymer synthesized in step (i) is selected from among polytrimethylene carbonates (PTMC), poly(trimethylene carbonate)-poly(ε-caprolactone) (PTMC-PCL) copolymers, in particular having a molar ratio between monomer units derived from trimethylene carbonate and monomer units derived from caprolactone of between 90/10 and 10/90, particularly between 80/20 and 20/80, in particular between 70/30 and 30/70 and more particularly approximately 60/40, and mixtures thereof.

**10.** Process according to any of the preceding claims, for the preparation of a solid electrolyte, particularly in the form of a film, in particular of the solid polymer electrolyte (SPE) or hybrid solid electrolyte (HSE) type, said process comprising, in the case of formation of an HSE, prior to the evaporation of the solvent medium, addition to the mixture obtained in step (ii) or (iii), of at least one inorganic filler conductive of (an) alkali or alkaline earth metal cation(s), in particular an inorganic filler conductive of lithium ions.

**11.** Process according to the preceding claim, wherein step (iv) comprises deposition of said mixture obtained in step (ii) or (iii), optionally supplemented by at least said inorganic filler conductive of (an) alkali or alkaline earth metal cation(s), on the surface of a substrate, for example by coating, followed by evaporation of the solvent medium, in order to obtain said solid electrolyte film.

**12.** Process according to any of Claims 1 to 9, for the preparation of a composite electrode incorporating said solid electrolyte, said process comprising:

- addition, to the mixture obtained in step (ii) or (iii), of at least one active electrode material and, optionally, one or more electron conductive additives and/or one or more additional binders; and
- deposition of said mixture on the surface of a current collector, followed by evaporation of the solvent medium in order to obtain said composite electrode.

**13.** Process according to any of Claims 1 to 9, for the preparation of a composite electrode incorporating said solid electrolyte, said process comprising:

- preparation of a dispersion, referred to as "ink," by adding to the solid electrolyte obtained in step (iv) after evaporation of the solvent medium, at least one active electrode material, optionally one or more electron conductive additives and/or one or more additional binders; optionally an additional amount of alkali metal or alkaline earth metal salt(s); and one or more solvents different from said solvent(s) used for the ROP in step (i); and
- deposition of said ink on the surface of a current collector, followed by evaporation of said solvent(s) in order to obtain said composite electrode.

**14.** Solid electrolyte, in particular in the form of a solid electrolyte film, particularly of the solid polymer electrolyte (SPE) or hybrid solid electrolyte (HSE) type, obtained by the process defined in Claim 10 or 11.

**15.** Composite electrode comprising a solid electrolyte, said electrode being obtained by the process defined in Claim 12 or 13.

**16.** Electrode/electrolyte membrane assembly, wherein said electrode is a composite electrode as defined according to Claim 15 and/or said electrolyte membrane is a solid electrolyte film, particularly of the SPE or HSE type, as defined in Claim 14.

**17.** Electrochemical system comprising at least one solid electrolyte film as defined in Claim 14 and/or at least one composite electrode as defined according to Claim 15, said electrochemical system more particularly being a rechargeable battery, in particular a lithium battery, particularly a lithium metal or lithium ion battery.

[Fig 1]

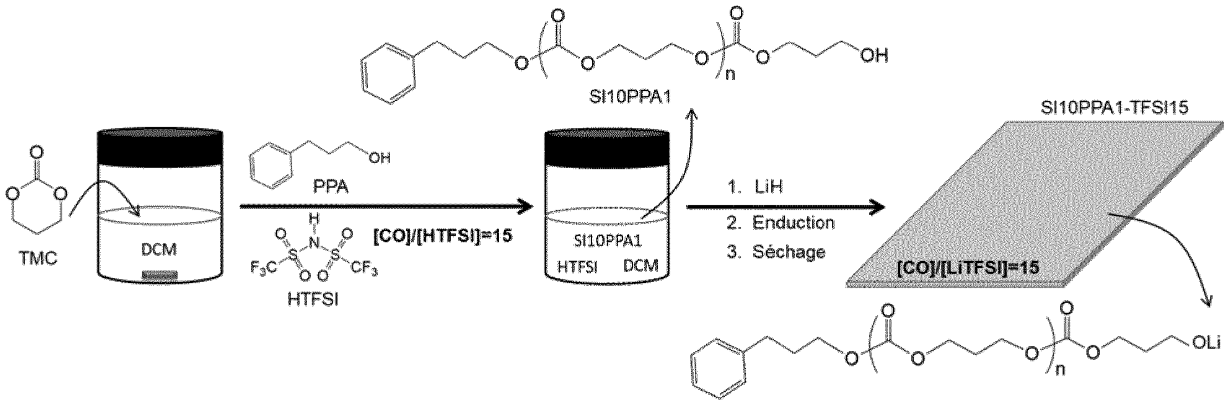


[Fig 2]

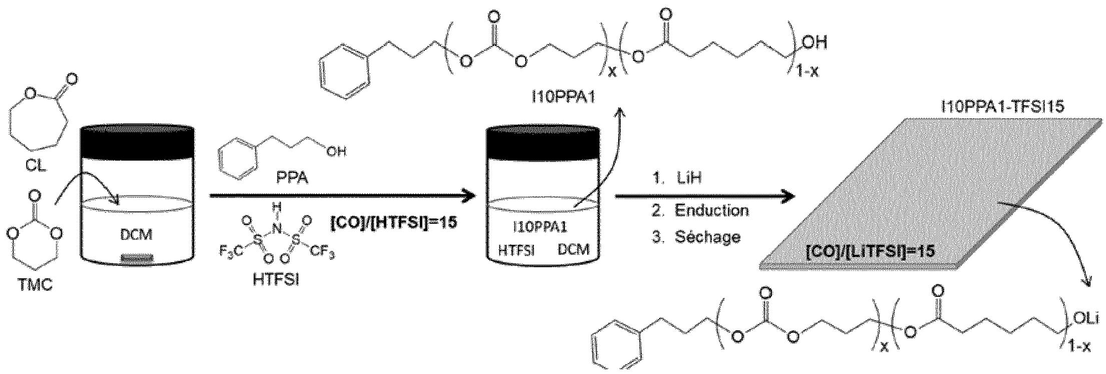


[Fig 3]

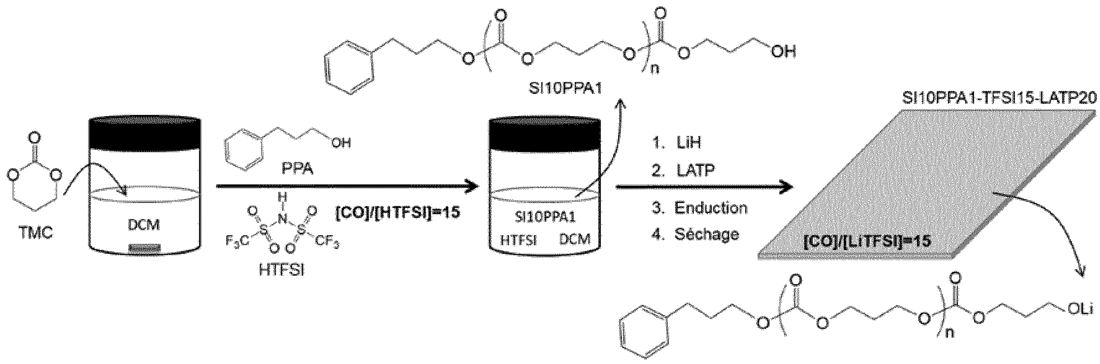

[Fig 4]

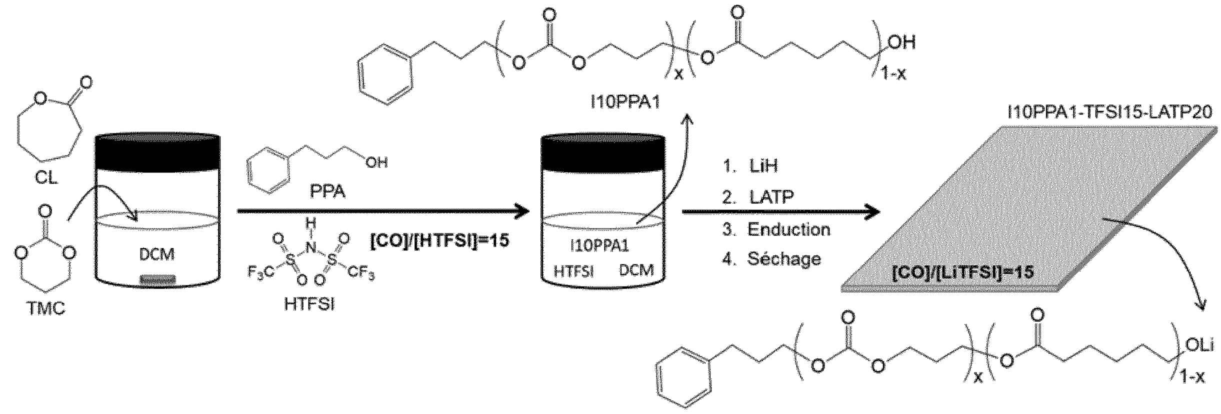


[Fig 5]

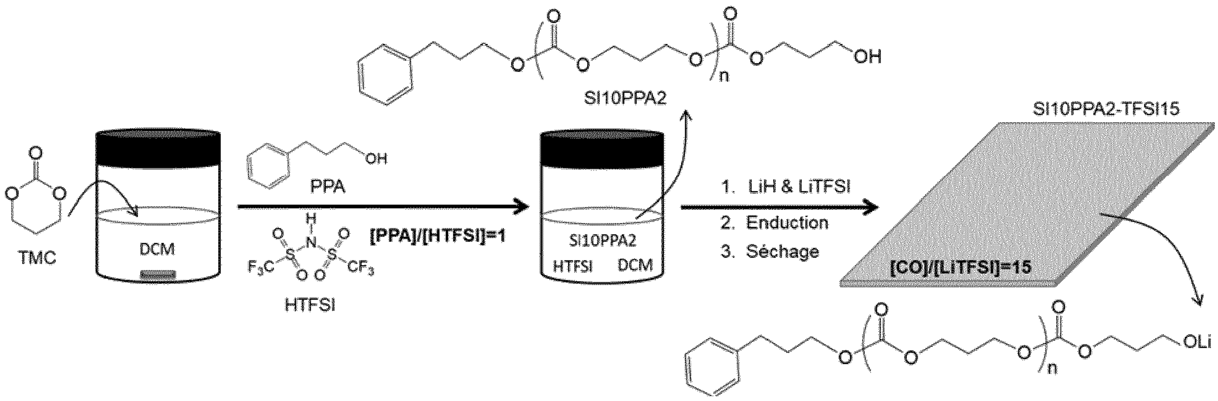


[Fig 6]

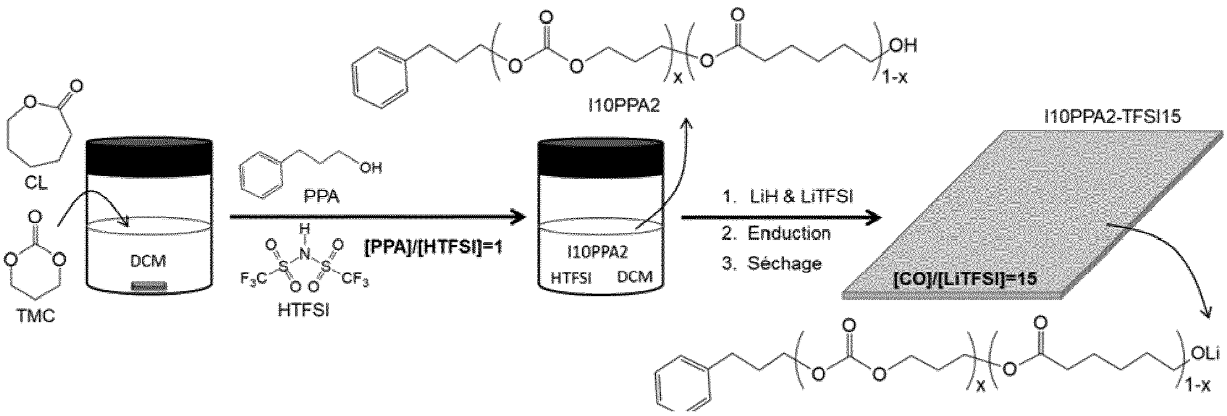

[Fig 7]

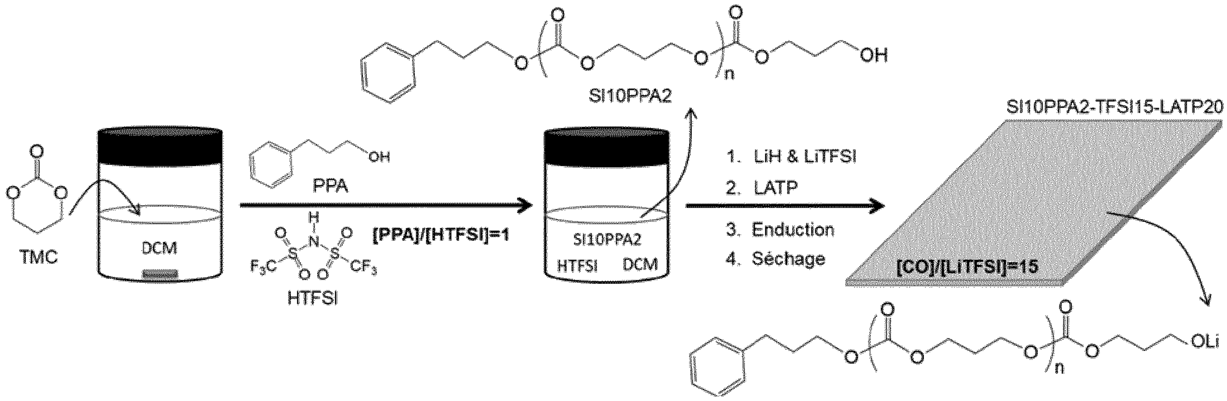


[Fig 8]

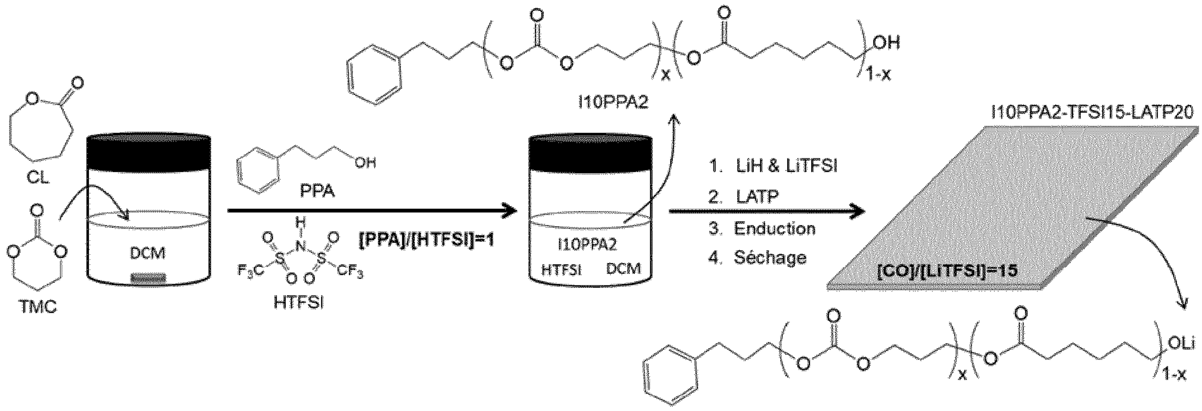


[Fig 9]

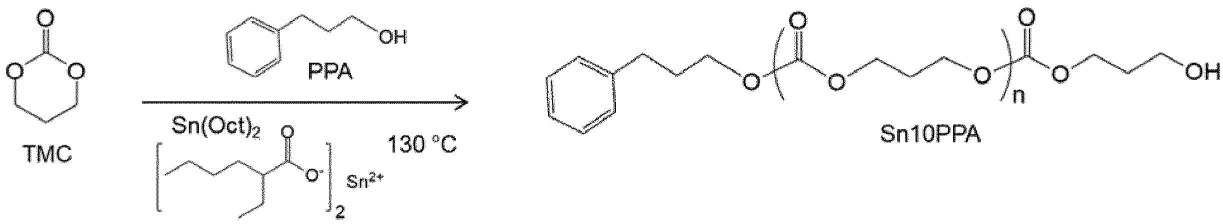

[Fig 10]

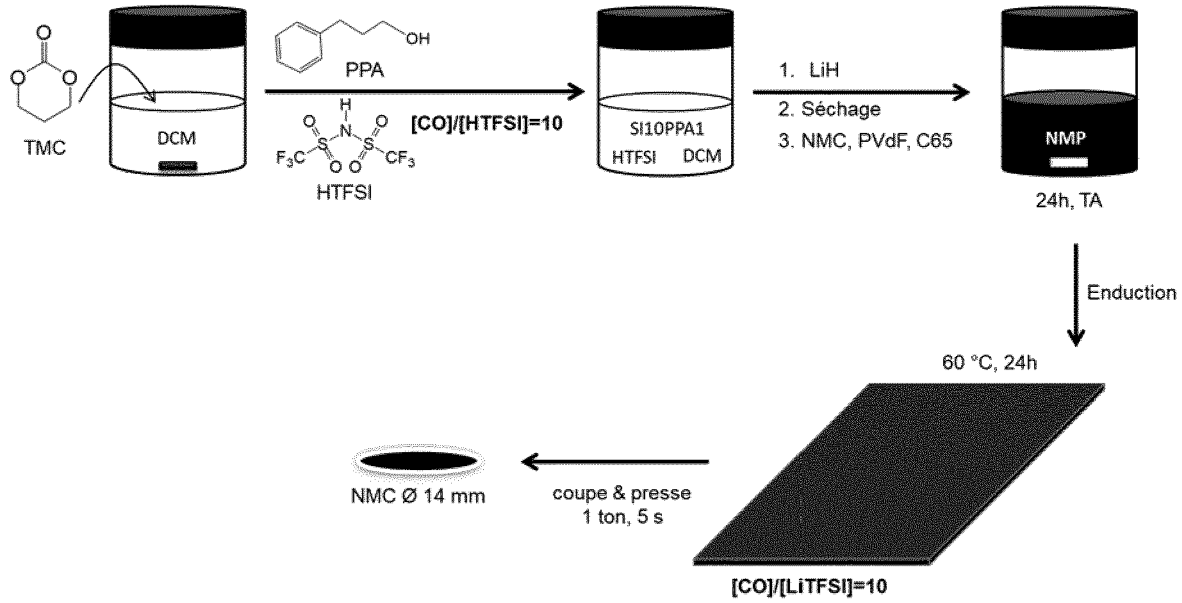
TMC
DCM
PPA
HTFSI
[CO]/[HTFSI]=10
SI10PPA1
HTFSI DCM
1. LiH
2. Séchage
3. NMC, PVdF, C65
NMP
24h, TA
Enduction
60 °C, 24h
NMC Ø 14 mm
coupe & presse
1 ton, 5 s
[CO]/[LiTFSI]=10

[Fig 11]

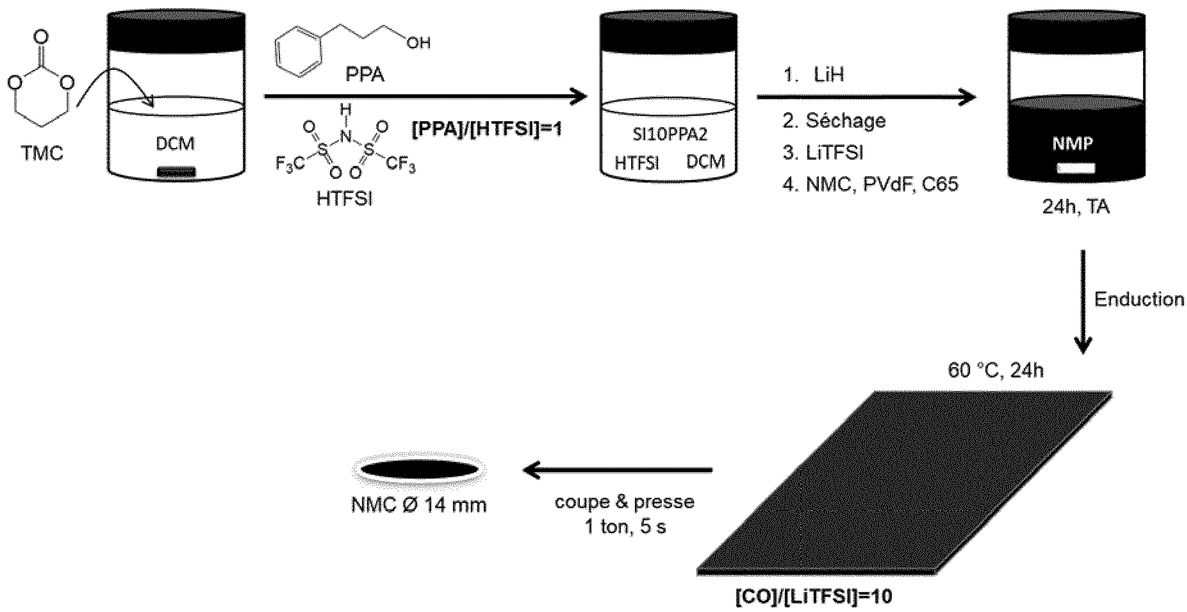
TMC
DCM
PPA
HTFSI
[PPA]/[HTFSI]=1
SI10PPA2
HTFSI DCM
1. LiH
2. Séchage
3. LiTFSI
4. NMC, PVdF, C65
NMP
24h, TA
Enduction
60 °C, 24h
NMC Ø 14 mm
coupe & presse
1 ton, 5 s
[CO]/[LiTFSI]=10

[Fig 12]

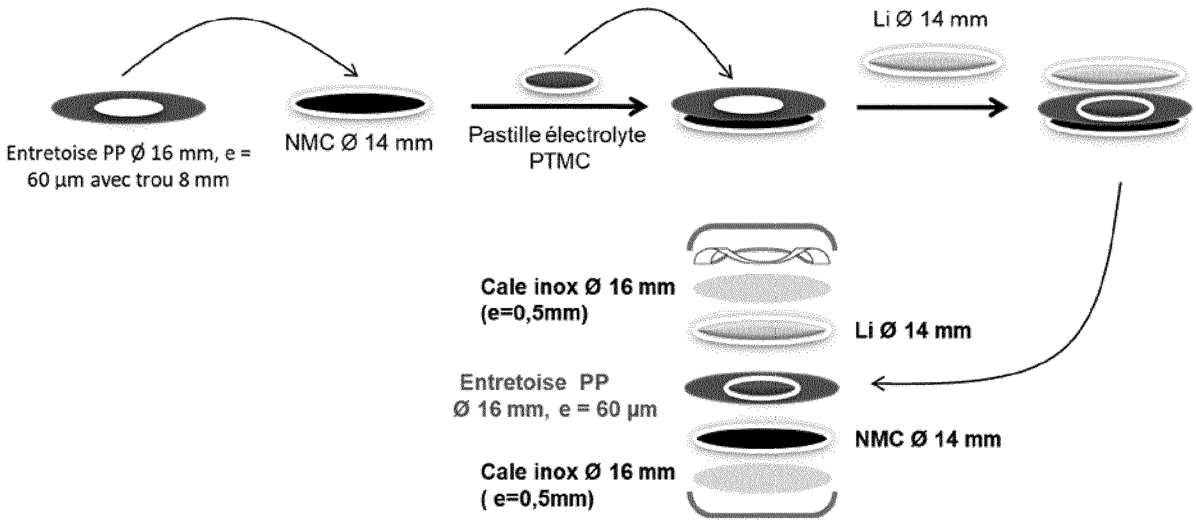
Entretoise PP Ø 16 mm, e = 60 µm avec trou 8 mm
NMC Ø 14 mm
Pastille électrolyte PTMC
Li Ø 14 mm
Cale inox Ø 16 mm (e=0,5mm)
Li Ø 14 mm
Entretoise PP Ø 16 mm, e = 60 µm
NMC Ø 14 mm
Cale inox Ø 16 mm ( e=0,5mm)

[Fig 13]

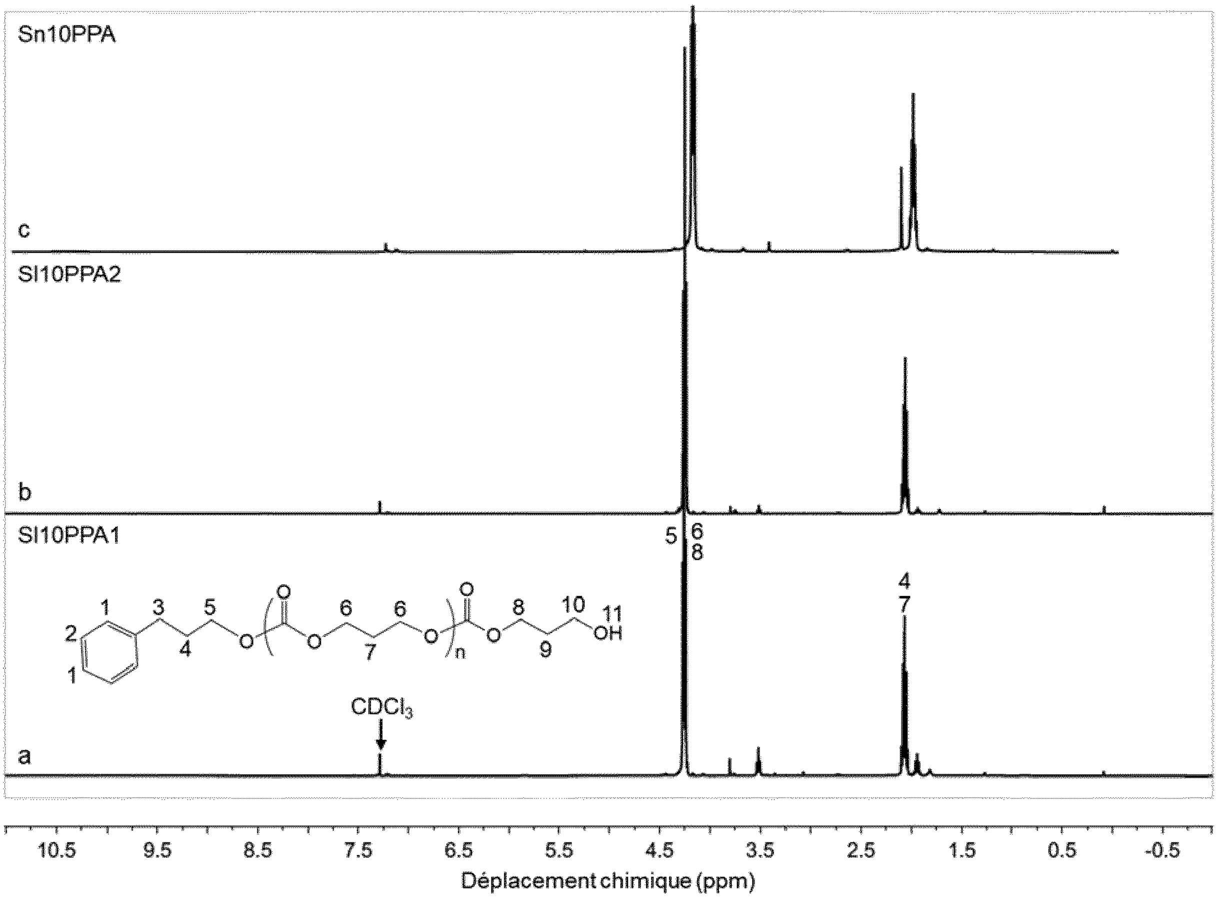
Sn10PPA
c
SI10PPA2
b
SI10PPA1
a
CDCl3
5
6
8
4
7
10.5
9.5
8.5
7.5
6.5
5.5
4.5
3.5
2.5
1.5
0.5
-0.5
Déplacement chimique (ppm)

[Fig 14]

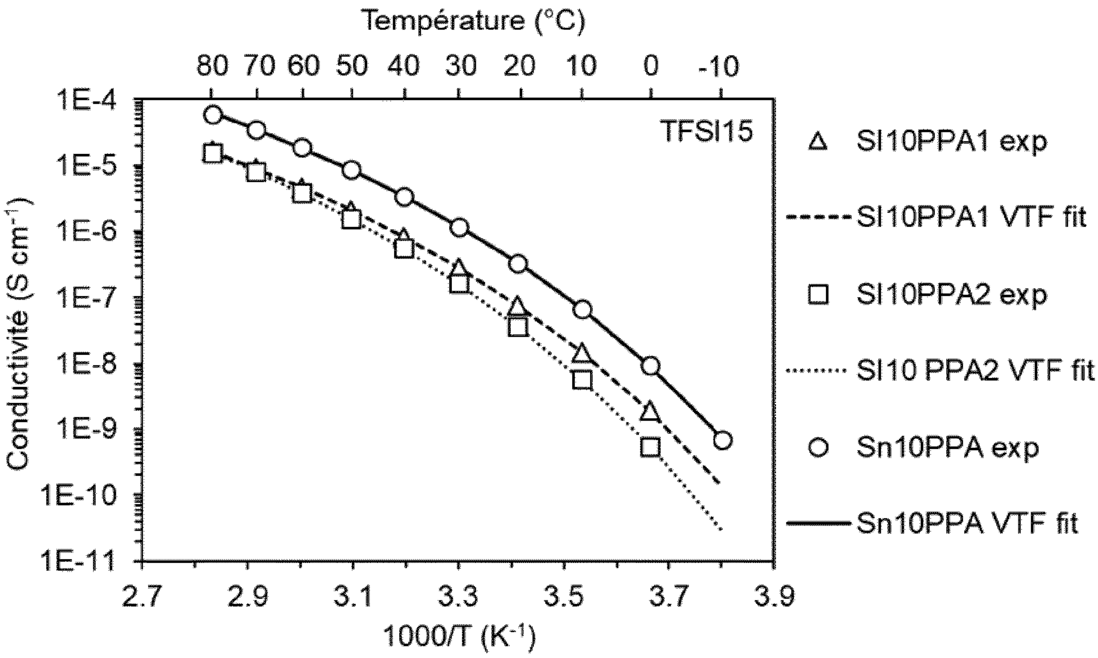

Température (°C)
80 70 60 50 40 30 20 10 0 -10
1E-4
1E-5
1E-6
1E-7
1E-8
1E-9
1E-10
1E-11
Conductivité (S cm$^{-1}$)
TFSI15
2.7 2.9 3.1 3.3 3.5 3.7 3.9
1000/T (K$^{-1}$)
SI10PPA1 exp
SI10PPA1 VTF fit
SI10PPA2 exp
SI10 PPA2 VTF fit
Sn10PPA exp
Sn10PPA VTF fit


[Fig 15]

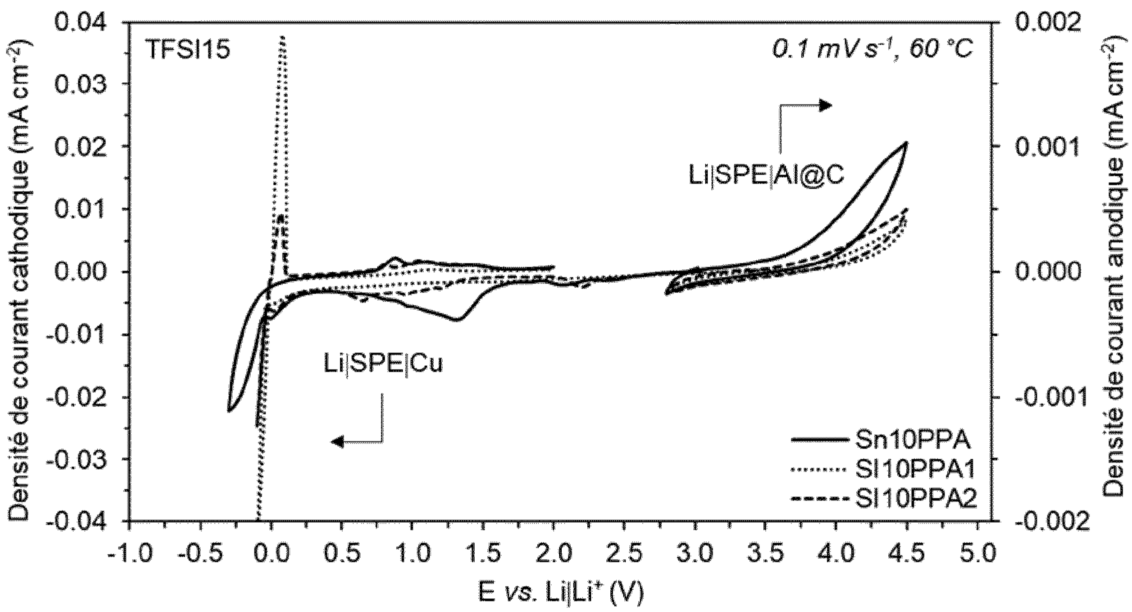

TFSI15
0.1 mV s$^{-1}$, 60 °C
Li|SPE|Al@C
Li|SPE|Cu
Densité de courant cathodique (mA cm$^{-2}$)
Densité de courant anodique (mA cm$^{-2}$)
0.04
0.03
0.02
0.01
0.00
-0.01
-0.02
-0.03
-0.04
0.002
0.001
0.000
-0.001
-0.002
-1.0 -0.5 0.0 0.5 1.0 1.5 2.0 2.5 3.0 3.5 4.0 4.5 5.0
E *vs.* Li|Li$^{+}$ (V)
Sn10PPA
SI10PPA1
SI10PPA2

[Fig 16]

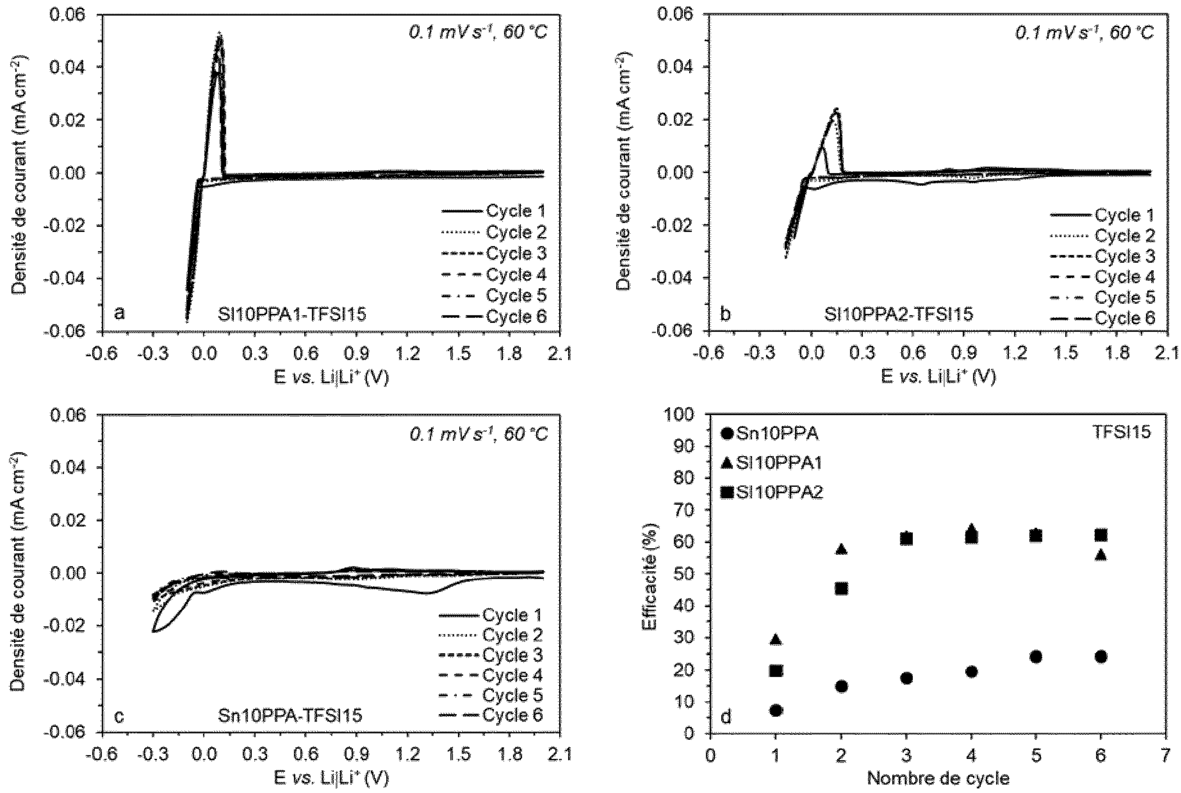
0.1 mV s-1, 60 °C
Densité de courant (mA cm-2)
E vs. Li|Li+ (V)
Cycle 1
Cycle 2
Cycle 3
Cycle 4
Cycle 5
Cycle 6
a
SI10PPA1-TFSI15
b
SI10PPA2-TFSI15
c
Sn10PPA-TFSI15
Sn10PPA
SI10PPA1
SI10PPA2
TFSI15
Efficacité (%)
Nombre de cycle
d

[Fig 17]

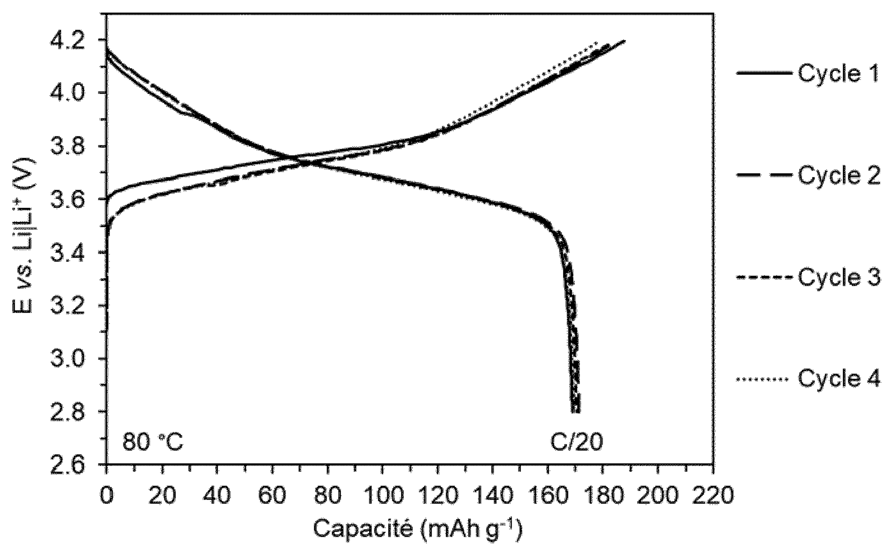
E vs. Li|Li+ (V)
Capacité (mAh g-1)
80 °C
C/20
Cycle 1
Cycle 2
Cycle 3
Cycle 4

[Fig 18]

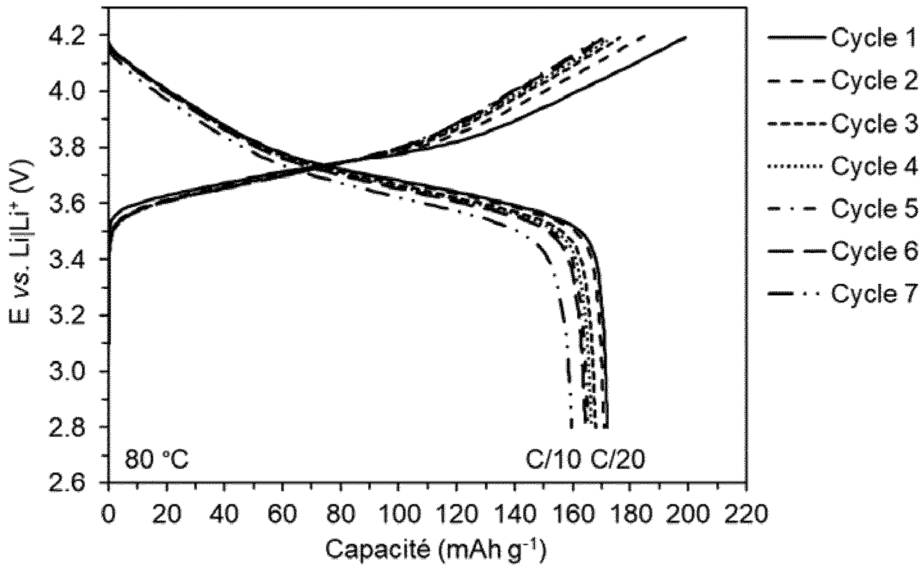
4.2
4.0
3.8
3.6
3.4
3.2
3.0
2.8
2.6
E vs. Li|Li⁺ (V)
0 20 40 60 80 100 120 140 160 180 200 220
Capacité (mAh g⁻¹)
80 °C
C/10 C/20
Cycle 1
Cycle 2
Cycle 3
Cycle 4
Cycle 5
Cycle 6
Cycle 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **TOMINAGA et al.** *Polymer,* 2010, vol. 51 (19), 4295-4298
- **WANG et al.** *Coor. Chem. Rev.,* 2018, vol. 372, 85-100
- **KIMURA et al.** *Ionics,* 2015, vol. 21 (3), 895-900
- **BRANDELL et al.** *Solid State Ionics,* 2014, vol. 262, 738-742
- **MINDERMARK et al.** *Polymer,* 2015, vol. 63, 91-98
- **MEABE et al.** *Electrochim. Acta,* 2017, vol. 237, 259-266
- **ZHAO et al.** *Chem. Rev.,* 2018, vol. 118 (20), 10349-10392
- **RAJENDRA P. SINGH ; QICHAO HU.** Advances in chemistry of hydrogen bis(fluorosulfonyl)imide and its derivatives. *Journal of Fluorine Chemistry,* 2019, vol. 226, 109333
- **GAZEAU-BUREAU et al.** *Macromolecules,* 2008, vol. 41 (11), 3782-3784
- **KAKUCHI et al.** *Macromolecules,* 2010, vol. 43 (17), 7090-7094
- **MAKIGUCHI et al.** *J. Polym. Sci. Part A Polym. Chem.,* 2013, vol. 51 (11), 2455-2463
- **TOMINAGA et al.** *Electrochim. Acta,* 2019, vol. 302, 286-290
- **KÜTT et al.** *J. Org. Chem.,* 2011, vol. 76 (2
- **SINGH et al.** *Journal of Fluorine Chemistry,* 2019, vol. 226, 109333
- **TUNDO et al.** *Green Chem.,* 2008, vol. 10, 1182-1189